# EUROPÄISCHE PATENTSCHRIFT

(11) **EP 1 516 175 B1**
(45) Veröffentlichungstag und Bekanntmachung des Hinweises auf die Patenterteilung: **02.11.2006**
(21) Anmeldenummer: 03740108.0
(22) Anmeldetag: 24.06.2003
(51) Int. Cl.: G01N 27/403, G01N 27/12, G01N 27/416

(54) **BIOSENSOR-ARRAY UND VERFAHREN ZUM BETREIBEN EINES BIOSENSOR-ARRAYS**
BIOSENSOR ARRAY AND METHOD FOR OPERATING A BIOSENSOR ARRAY
RESEAU DE BIOCAPTEURS ET PROCEDE D'UTILISATION D'UN RESEAU DE BIOCAPTEURS

(30) Priorität: 24.06.2002 DE 10228125; 24.06.2002 DE 10228124
(43) Veröffentlichungstag der Anmeldung: 23.03.2005
(73) Patentinhaber: SIEMENS AKTIENGESELLSCHAFT, 80333 München (DE)
(72) Erfinder: FREY, Alexander, 82024 Taufkirchen (DE); HOFMANN, Franz, 80995 München (DE); HOLZAPFL, Birgit, 81545 München (DE); PAULUS, Christian, 82362 Weilheim (DE); SCHIENLE, Meinrad, 85579 Neubiberg (DE); THEWES, Roland, 82194 Gröbenzell (DE)
(74) Vertreter: Dokter, Eric-Michael
(86) Internationale Anmeldenummer: PCT/DE2003/002094
(87) Internationale Veröffentlichungsnummer: WO 2004/001405

(56) Entgegenhaltungen:
- WO-A-01/43870
- DE-A- 19 916 921
- US-A- 5 828 133
- US-A1- 2001 026 778
- ROSPERT M ET AL: "Multianalyte sensor for the simultaneous determination of glucose, L-lactate and uric acid based on a microelectrode array" SENSORS AND ACTUATORS B, ELSEVIER SEQUOIA S.A., LAUSANNE, CH, Bd. 43, Nr. 1-3, 1. September 1997 (1997-09-01), Seiten 87-93, XP004103412 ISSN: 0925-4005
- HINTSCHE R ET AL: "Multiplexing of microelectrode arrays in voltammetric measurements" ELECTROANALYSIS, VHC PUBLISHERS, INC, US, Bd. 12, Nr. 9, Mai 2000 (2000-05), Seiten 660-665, XP002193729 ISSN: 1040-0397
- HINTSCHE R ET AL: "MICROBIOSENSORS USING ELECTRODES MADE IN SI-TECHNOLOGY" FRONTIERS IN BIOSENSORICS. FUNDAMENTAL ASPECTS, XX, XX, 1997, Seiten 267-283, XP001079996 in der Anmeldung erwähnt

## Beschreibung

Die Erfindung betrifft ein Biosensor-Array und ein Verfahren zum Betreiben eines Biosensor-Arrays.

Für unterschiedliche Gebiete der Sensorik sind Zweipolimpedanzsensoren vorgeschlagen worden. Für den Bereich der Biosensorik sind solche Zweipolimpedanzsensoren in [1] bis [4] beschrieben, für die Sensorik anderer chemischer Stoffe, beispielsweise Gassensoren, ist in [5] eine Zweipolimpedanzmessung vorgeschlagen.

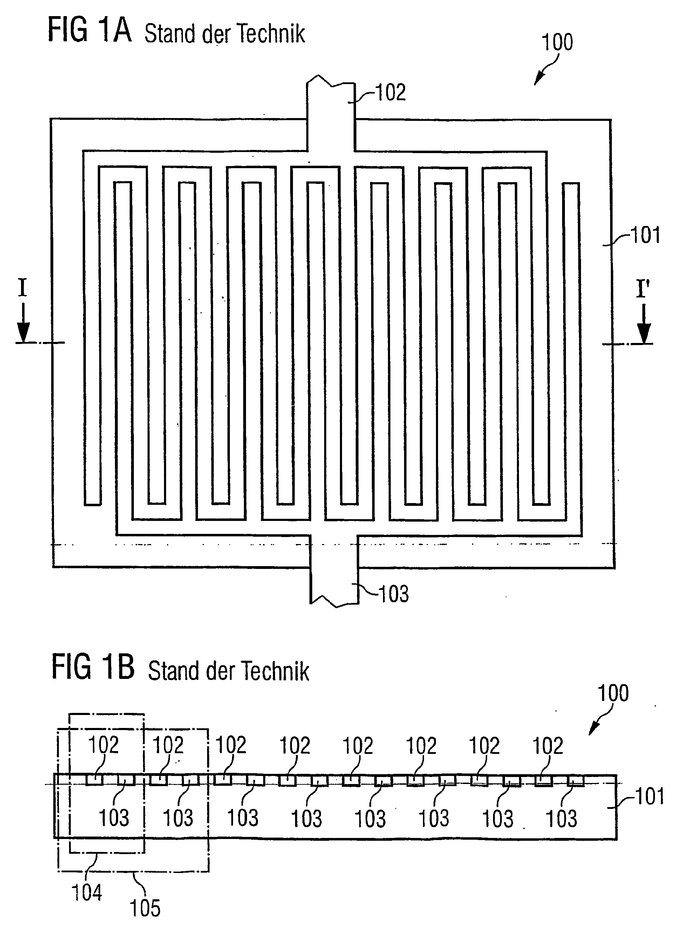

Im Weiteren wird bezugnehmend auf Fig.1A bis Fig.5B eine Sensor-Anordnung gemäß dem Stand der Technik beschrieben, die einen DNA-Sensor auf Basis der Zweipolimpedanzmethode darstellt.

In **Fig.1A, Fig.1B** ist eine Interdigitalelektroden-Anordnung 100 gezeigt, bei der in einem Substrat 101 eine erste Elektrodenstruktur 102 und eine zweite Elektrodenstruktur 103 aufgebracht sind, die anschaulich fingerförmig ineinander greifen. In Fig.1A ist eine Draufsicht der Interdigitalelektroden-Anordnung 100 gezeigt, in Fig.1B ist eine Querschnittsansicht entlang der in Fig.1A gezeigten Schnittlinie I-I' gezeigt. Die Interdigitalelektroden-Anordnung 100 enthält periodische, nebeneinander angeordnete Elektrodenkomponenten der Elektrodenstrukturen 102, 103.

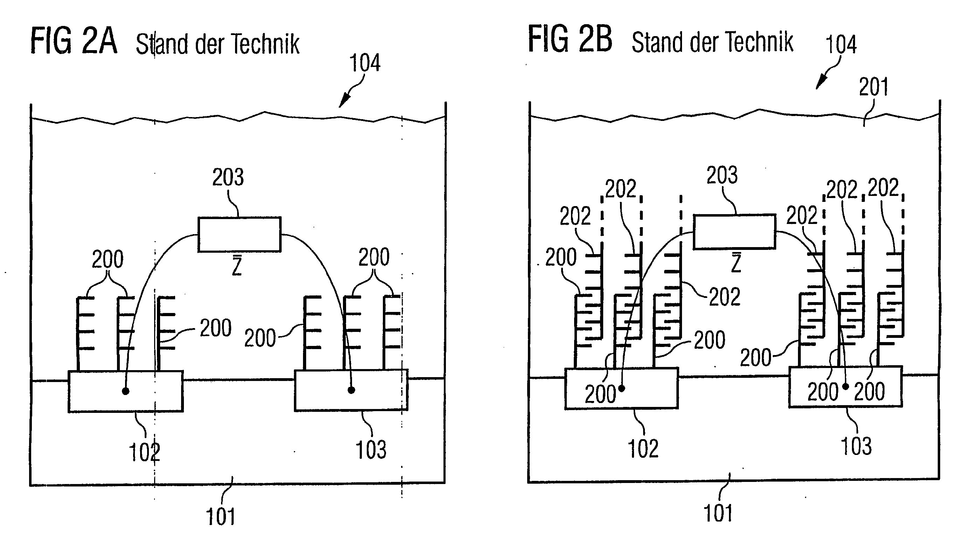

Zur Erklärung des Prinzips der Funktionsweise der Interdigitalelektroden-Anordnung 100 wird bezugnehmend auf **Fig.2A, Fig.2B** ein erster Teilbereich 104 der Interdigitalelektroden-Anordnung 100 beschrieben.

Der erste Teilbereich 104 ist in Fig.2A als Querschnittsansicht in einem ersten Betriebszustand gezeigt, in Fig.2B als Querschnittsansicht in einem zweiten Betriebszustand.

Auf den Elektrodenstrukturen 102, 103 sind jeweils Fängermoleküle 200 (DNA-Halbstränge) immobilisiert. Für die Elektrodenstrukturen 102, 103 wird vorzugsweise Goldmaterial verwendet, so dass das Immobilisieren der Fängermoleküle 200 unter Verwendung der aus der Biochemie bekannten, besonders vorteilhaften Gold-Schwefel-Kopplung realisiert wird, indem beispielsweise eine Thiol-Gruppe (SH-Gruppe) der Fängermoleküle 200 mit den Goldelektroden 102, 103 chemisch gekoppelt wird.

Oberhalb der Sensor-Elektroden 102, 103 befindet sich während des aktiven Sensorbetriebs ein zu untersuchender elektrolytischer Analyt 201, der auf das Vorhandensein zu erfassender Partikel 202 (beispielsweise bestimmter DNA-Moleküle) untersucht werden soll. Eine Hybridisierung, das heißt eine Anbindung von DNA-Strängen 202 an die Fängermoleküle 200, erfolgt nur dann, wenn die Fängermoleküle 200 und die DNA-Stränge 202 gemäß dem Schlüssel-Schloss-Prinzip zueinander passen (vgl. Fig.2B). Ist dies nicht der Fall, so erfolgt keine Hybridisierung (nicht gezeigt). Die Spezifität des Sensors leitet sich also aus der Spezifität der Fängermoleküle 200 ab.

Der elektrische Parameter, der bei dieser Messung ausgewertet wird, ist die Impedanz Z̅ 203 zwischen den Elektroden 102, 103, die in Fig.2A, Fig.2B schematisch dargestellt ist. Infolge einer erfolgten Hybridisierung verändert sich der Wert der Impedanz, da die zu erfassenden DNA-Partikel 202 und die Fängermoleküle 200 aus einem Material bestehen, das von dem Material des Elektrolyten abweichende elektrische Eigenschaften aufweist, und nach der Hybridisierung der Elektrolyt anschaulich aus dem die Elektroden 102, 103 umgebenden Volumenbereich verdrängt wird.

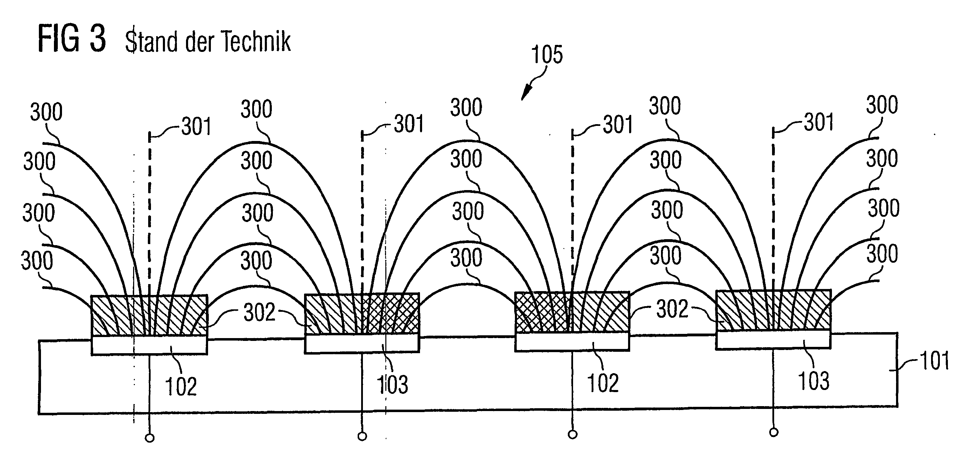

In **Fig.3** ist ein zweiter Teilbereich 105 (vgl. Fig.1B) der Interdigitalelektroden-Anordnung 100 in einer Querschnittsansicht gezeigt.

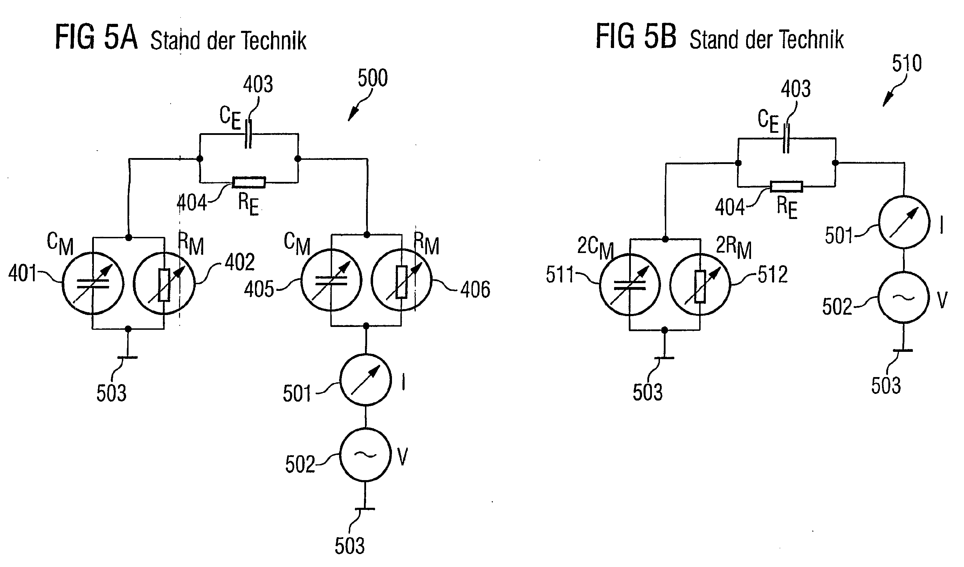

Der zweite Teilbereich 105 repräsentiert einen größeren Teilbereich der Interdigitalelektroden-Anordnung 100 als der in Fig.2A, Fig.2B dargestellte erste Teilbereich 104. In Fig.5 ist schematisch der Verlauf der elektrischen Feldlinien 300 zwischen jeweils benachbarten Elektrodenstrukturen 102, 103 gezeigt. Wie in Fig.3 ferner gezeigt, sind die Feldverläufe innerhalb eines jeweiligen durch zwei Symmetrielinien 501 gedachten Bereichs periodisch, so dass die in Fig.2A, Fig.2B gezeigte Betrachtung zweier unmittelbar benachbarter Elektrodenstrukturen 102, 103 ausreichend ist. Ferner ist in Fig.3 für jede dieser Elektrodenstrukturen 102, 103 schematisch ein Bedeckungsbereich 302 gezeigt, der die auf den Elektrodenstrukturen 102, 103 immobilisierten Fängermoleküle 200 und möglicherweise mit diesen hybridisierte zu erfassende Partikel 202 darstellt. Anschaulich ist aus der in Fig.3 gezeigten Darstellung verständlich, dass der Verlauf der Feldlinien 300 aufgrund eines Hybridisierungsereignisses signifikant beeinflusst wird, da die physikalisch-chemischen Eigenschaften insbesondere des Bedeckungsbereichs 302 verändert werden.

Es ist ferner anzumerken, dass ergänzend oder alternativ in Bereichen zwischen Elektroden 102, 103 Fängermoleküle vorgesehen sein können (nicht gezeigt). Bei Hybridisierungsereignissen zwischen in Bereichen zwischen den Elektroden angebrachten Fängermolekülen und zu erfassenden Partikeln verändern sich wiederum die elektrischen Eigenschaften des Elektrolyten.

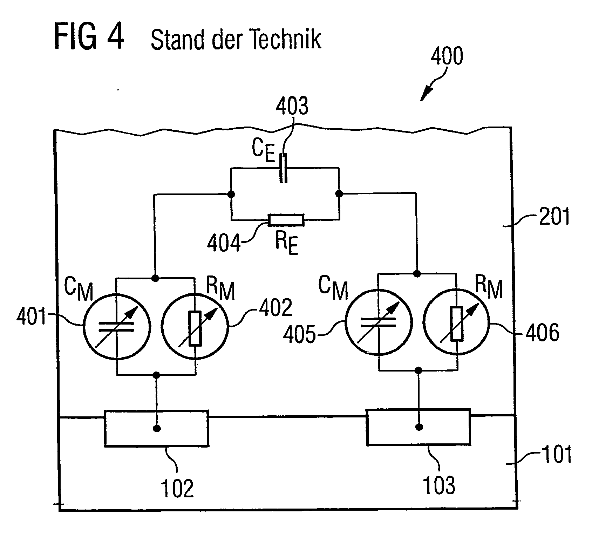

In **Fig.4** ist schematisch ein vereinfachtes Ersatzschaltbild 400 des in Fig.2A gezeigten ersten Teilbereichs 104 der Interdigitalelektroden-Anordnung 100 gezeigt. Das Ersatzschaltbild 400 zeigt eine variable erste Kapazität 401 C_{M}, deren Wert von dem Maß einer an der Elektrodenstruktur 102 erfolgten Hybridisierung abhängig ist. Zu dieser ist ein variabler erster ohmscher Widerstand 402 R_{M} parallel geschaltet. Anschaulich repräsentieren die Komponenten 401, 402 die elektrischen Eigenschaften des Umgebungsbereichs der ersten Elektrodenstruktur 102. Ferner ist eine variable zweite Kapazität 403 C_{E} und ein dazu parallel geschalteter variabler zweiter ohmscher Widerstand 404 R_{E} gezeigt, welche die elektrischen Eigenschaften des Analyten 401 repräsentieren. Darüber hinaus ist eine die elektrischen Eigenschaften des Umgebungsbereichs der zweiten Elektrodenstruktur 103 repräsentierende, variable dritte Kapazität 405 C_{M} und ein zu dieser parallel geschalteter variabler dritter ohmscher Widerstand 406 R_{M} gezeigt. Wie ferner in Fig.4 gezeigt, ist die Parallelschaltung aus Komponenten 401, 402, die Parallelschaltung aus Komponenten 403, 404 und die Parallelschaltung aus Komponenten 405, 406 seriell geschaltet. Die Komponenten 401 bis 406 sind variabel dargestellt, um zu verdeutlichen, dass infolge eines Sensorereignisses sich deren Werte verändern können.

Wie in dem in **Fig.5A** gezeigten Ersatzschaltbild 500 des ersten Teilbereichs 104 gezeigt, wird an eine der Elektroden 102, 103 eine Wechselspannung V angelegt, um den Wert der Impedanz zu ermitteln. Die Wechselspannung V wird unter Verwendung einer Wechselspannungsquelle 502 bereitgestellt. Der durch die Anordnung fließende Wechselstrom I wird unter Verwendung des Amperemeters 501 erfasst. Die Komponenten 501, 502 sind zueinander seriell geschaltet und sind zwischen der Parallelschaltung aus Komponenten 405, 406 und dem elektrischen Massepotential 503 geschaltet. Das an den Elektroden 102, 103 resultierende Wechselstrom-Signal I wird gemeinsam mit der angelegten Wechselspannung V ausgewertet, um die Impedanz zu ermitteln. Alternativ kann auch an beide Elektroden 102, 103 jeweils ein Signal, das heißt eine elektrische Spannung, angelegt werden, die Signale sind dann gegenphasig.

Die in **Fig.5B** gezeigte Version eines vereinfachten Ersatzschaltbilds 510 unterscheidet sich von dem in Fig.5A gezeigten Ersatzschaltbild 500 darin, dass die Elemente C_{M} 401, 405 bzw. R_{M} 402, 406 zu einer ersten effektiven Kapazität 2C_{M} 511 bzw. zu einem ersten effektiven ohmschen Widerstand 512 2R_{M} zusammengefasst sind.

Der Abstand der Elektroden 102, 103 zueinander liegt typischerweise im Sub-µm-Bereich. Gemäß der Interdigitalelektroden-Anordnung 100 sind eine Vielzahl von Elektrodenkomponenten (anschaulich Finger) der Elektrodenstrukturen 102 bzw. 103 parallel angeordnet. Aus Gründen der Fluidik können, wie in [6] für ein anderes auf der Verwendung von Interdigitalelektroden basierenden Detektionsverfahren beschrieben, kreisförmige Arrangements verwendet werden. Die äußeren Abmessungen bzw. der Durchmesser solcher Einzelsensoren liegt im Bereich von etwa 100µm oder sogar darunter bis in den einstelligen mm-Bereich.

Bezüglich der anregenden Wechselspannung V ist zu beachten, dass deren effektiver Mittelwert bzw. deren Scheitelwert einen bestimmten Maximalwert nicht überschreiten soll. Bei Überschreitung eines solchen Maximalwerts werden die bio- bzw. elektrochemischen Rahmenbedingungen verletzt, die den Betrieb solcher Sensoren ermöglichen. Überschreitet das Elektrodenpotential (das auf das elektrische Potential des Elektrolyten bezogen ist) einen oberen Schwellwert, so können bestimmte Stoffe in einem Umgebungsbereich einer Elektrode oxidiert werden. Unterschreitet das elektrische Potential (das auf das elektrische Potential des Elektrolyten bezogen ist) einen unteren Schwellwert, werden dort Stoffe reduziert.

Eine unerwünschte Oxidation oder Reduktion kann unter anderem dazu führen, dass die chemischen Bindungen, die bei der Immobilisierung und Hybridisierung eingegangen werden, aufgebrochen werden. Ferner kann Elektrolyse an den Sensor-Elektroden einsetzen, so dass die Elektrolyseprodukte das für den Betrieb der Sensoren erforderliche chemische Milieu aus dem erforderlichen Gleichgewicht bringen und zu Gasbildung führen. Die Absolutwerte der kritischen Potentiale hängen von der Zusammensetzung und dem Konzentrationsverhältnis der chemischen Umgebung der Elektroden ab (beispielsweise Immobilisierungsschicht, Analyt, etc.).

Typische Werte für die anregende Spannung liegen im Bereich einiger 10mV bis maximal in dem Bereich um 100mV. Dies ist eine wichtige Rahmenbedingung für den Betrieb solcher Sensoren, da das resultierende Messsignal (Stromstärke I) hinsichtlich seiner Größe näherungsweise direkt proportional der angelegten Spannung ist.

Häufig ist man daran interessiert, nicht nur einen Test auf einer Sensor-Anordnung durchzuführen, sondern viele Tests an einer geeigneten Probe, dem Analyten, zeitlich parallel. Auf entsprechenden Chips realisierbare miniaturisierte Bio-/Chemosensor-Arrays dienen dem parallelen Nachweis unterschiedlicher Moleküle bzw. unterschiedlicher Substanzen in einem zu untersuchenden Analyten. Die entsprechenden elektrischen Sensoren sind in großer Zahl auf einem Glas-, Plastik-, Silizium- oder anderem Substrat realisiert. Aufgrund der Eigenschaft der Parallelisierung ergeben sich für derartige Sensor-Array-Chips einschließlich entsprechendem Auswertesystem vielfältige Anwendungen in der medizinischen Diagnosetechnik, in der Pharmaindustrie (beispielsweise im Bereich des Pharma-Screening, "high throughput screening", HTS), in der chemischen Industrie, in der Lebensmittelanalytik, in der Umwelt- und Lebensmitteltechnik und -analytik, etc.

Impedanzsensoren (wie der bezugnehmend auf Fig.1A bis Fig.5B beschriebene) wurden bislang jedoch nur als Einzelsensoren oder in kleinen Arrays, im Prinzip bestehend aus einer Aneinanderreihung von Einzelsensoren, vorgestellt.

Um eine große Anzahl von Tests an einem Analyten zeitlich parallel durchführen zu können, wird die Anordnung einer größeren Anzahl solcher auf unterschiedliche Substanzen spezifizierter Sensoren in einem Array auf einem Chip angestrebt. Bei der Realisierung von Arrays mit Zweipolimpedanz-Sensoren ergibt sich die Herausforderung, dass die Signale aller Sensoren einem Auslesegerät zugeführt werden müssen. Sofern z.B. ein passiver Chip mit 8x12=96, 32x48=1536 oder allgemein m x n-Positionen vorliegt, liegen 2x96=192, 2x1536=3072 bzw. 2 x m x n einzelne Pads vor. Es muss jeder Sensor separat lesbar sein, wobei die Anzahl der verwendeten Pads des Chips aufgrund des Herstellungsaufwands für Chip und Lesegerät und vor allen Dingen aus Gründen der Sicherheit bei der Kontaktierung (Signalintegrität) nicht zu hoch sein soll. Der einfache Ansatz, z.B. alle Pads mit dem Lesegerät zu verbinden, liefert 2 x m x n (im Beispiel also 192 bzw. 3052) Pads. Dies ist für praktische Anwendungen erheblich zu groß. Ähnliches gilt für den Ansatz, eine Elektrode gemeinsam zu betreiben und alle verbleibenden Elektrodenanschlüsse sowie die gemeinsame Elektrode mit dem Lesegerät zu verbinden. In diesem Fall ist die Zahl der Pads zwar geringer (n x m + 1, in den Beispielen also 97 bzw. 1537), jedoch immer noch sehr groß.

Eine Möglichkeit ist die Verwendung sogenannter aktiver Chips, die abgesehen von den Materialien für die Transducer (insbesondere die Sensor-Elektroden, z.B. Gold für die Interdigitalelektroden) zusätzliche aktive Schaltungen für die Signal-Vorverarbeitung und das Multiplexing von Signalen On-Chip sowie entsprechende Verdrahtungsebenen bereitstellen. Eine derartige Lösung ist für ein anderes Verfahren, das ebenfalls auf der Verwendung von Interdigitalelektroden basiert, in [6] beschrieben.

Aus dem Stand der Technik sind Biosensoren bekannt, die gemäß dem Prinzip des Redox-Recyclings arbeiten (vgl. [7] bis [10]).

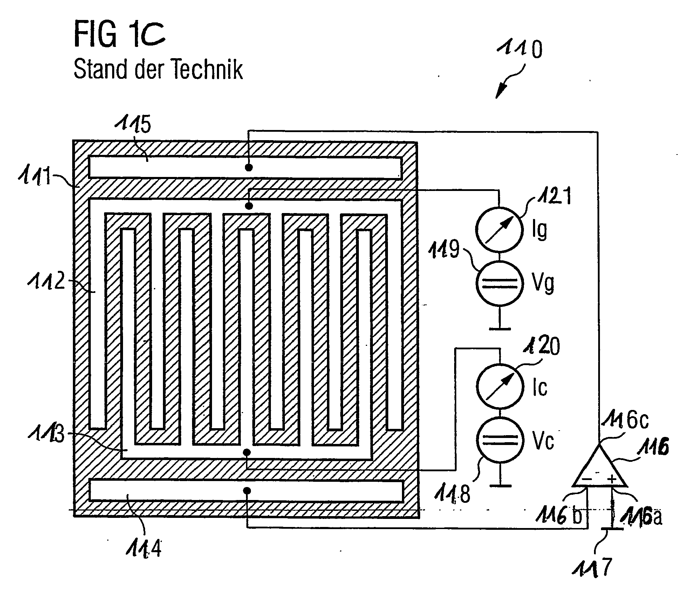

In **Fig.1C,** in der wie in Fig.1A, Fig.1B eine Interdigitalelektroden-Anordnung dargestellt ist, ist ein Redox-Recycling Biosensor 110 gemäß dem Stand der Technik gezeigt.

Für einen solchen Redox-Recycling Sensor 110 wird ein Vier-Elektrodensystem benötigt, das auf einem Substrat 111 ausgebildet ist. Der Redox-Recycling Biosensor 110 weist eine erste Interdigitalelektrode 112 und eine mit dieser anschaulich fingerförmig verzahnte zweite Interdigitalelektrode 113 auf. Typische Werte für die Breite und den Abstand der Interdigitalelektroden 112, 113 liegen im Bereich zwischen ungefähr 0.5µm und ungefähr 2µm.

Auf den Interdigitalelektroden 112, 113 sind Fängermoleküle (nicht gezeigt) immobilisiert, die mit zu erfassenden Partikeln in einer zu untersuchenden Lösung hybridisieren können. Gemäß dem Redox-Recycling-Prinzip werden beim Betrieb des Redox-Recycling Biosensors 110 im Falle eines Sensorereignisses an den Interdigitalelektroden 112, 113 Oxidations- und Reduktionsprozesse elektrochemisch aktivierter Partikel bewirkt. Mittels eines Labelmoleküls, das chemisch an von mit Fängermolekülen hybridisierten zu erfassenden Partikel eines Analyten gebunden ist, werden elektrochemisch aktivierte Partikel erzeugt, wenn der Lösung eine spezielle Komponente zugegeben wird.

Die in Fig.1 gezeigten weiteren Elektroden, nämlich eine Referenzelektrode 114 und eine Gegenelektrode 115, bilden gemeinsam mit einem Differenzverstärker 116 einen Potentiostaten. Ein nicht-invertierender Eingang 116a des Differenzverstärkers 116 ist mit dem elektrischem Massepotential 117 gekoppelt, wohingegen ein invertierender Eingang 116b des Differenzverstärkers 116 mit der Referenzelektrode 114 gekoppelt ist. Ein Ausgang 116c des Differenzverstärkers 116 ist mit der Gegenelektrode 115 gekoppelt. Mittels der Referenzelektrode 114 wird das elektrochemische Potential eines in den Redox-Recycling-Biosensor 110 eingebrachten Elektrolyten gemessen. Mittels der Gegenelektrode 115 wird der Differenzverstärker 116 als Regelverstärker auf ein vorgegebenes elektrisches Potential geregelt. Es ist anzumerken, dass anschaulich das vorgegebene Potential das elektrische Potential an dem nichtinvertierenden Eingang 116a des Differenzverstärkers 116 ist, gemäß dem gezeigten Beispiel das elektrische Massepotential 117.

Für den Betrieb des Redox-Recycling-Biosensors 110 werden an die Interdigitalelektroden 112, 113, die als Generator- bzw. Kollektor-Elektroden betrieben werden, mittels einer ersten Gleichspannungsquelle 118 und mittels einer zweiten Gleichspannungsquelle 119 elektrische Spannungen unterschiedlichen Vorzeichens bezogen auf das Referenzpotential (Massepotential 117) angelegt. Diese Spannungen sollen bezüglich ihres Betrags so hoch gewählt werden, dass die Vorgänge von Oxidation und Reduktion des Redox-Recycling-Stoffs sicher und effizient funktionieren, sie sollen andererseits aber nicht zu hoch gewählt werden, um nicht beabsichtigte elektrochemische Vorgänge (z.B. Elektrolyse) an den Elektroden 112, 113 zu vermeiden.

Es ist anzumerken, dass keine sehr scharfen Schwellwerte für das Einsetzen von Oxidation und Reduktion bestimmter Stoffe existieren. In der Praxis werden Werte gewählt, deren Betrag jeweils ausreichend sicher (typischerweise einige 10mV) oberhalb dieser Schwellenbereiche liegt. In der Praxis liegen die angelegten Spannungen im Bereich weniger 100mV (beispielsweise +300mV und -100mV) für die in [6] verwendeten Stoffe.

Wie ferner in Fig.1C gezeigt, ist ein mit der ersten Gleichspannungsquelle 118 gekoppeltes erstes Amperemeter 120 und ein mit der zweiten Gleichspannungsquelle 119 gekoppeltes zweites Amperemeter 121 vorgesehen. Mittels des ersten Amperemeters 120 kann ein aus den angelegten Spannungen und den Reduktions-/Oxidationsvorgängen resultierender elektrischer Strom an der zweiten Interdigitalelektrode 113 erfasst werden. Mittels des zweiten Amperemeters 121 kann ein aus den angelegten Spannungen und den Reduktions-/Oxidationsvorgängen resultierender elektrischer Strom an der ersten Interdigitalelektrode 112 erfasst werden. Die Werte dieser Ströme sind ein charakteristisches Maß für die an den Elektroden 112, 113 erfolgten Sensorereignisse und somit für die Konzentration zu erfassender Partikel in einer zu untersuchenden Lösung.

Aus dem Stand der Technik bekannte elektrochemische Sensoren, wie der Redox-Recycling Biosensor 110, sind bisher nur als Einzelsensoren in kleinen "passiven" Arrays, anschaulich als Aneinanderreihung von wenigen Einzelsensoren, oder in "aktiven" Arrays vorgestellt, welche abgesehen von den eigentlichen Biosensoren weitere aktive Bauelemente enthalten, auf denen entweder Schaltmatratzen, vgl. [10], oder aufwändige Schaltungstechnik, vgl. [6], enthalten ist.

Für viele Anwendungen ist es wünschenswert, nicht nur einen Test mit einem Biosensor durchzuführen, sondern viele Tests in einer gegebenen Probe, dem Analyten, zeitlich parallel. Auf entsprechenden Chips realisierbare, miniaturisierte Bio-/Chemosensor-Arrays dienen dem zeitlich parallelen Nachweis unterschiedlicher zu erfassender Partikel in einem zu untersuchenden Analyten. Die entsprechenden Sensoren sind in großer Anzahl auf einem Substrat realisierbar, beispielsweise auf einem Glas-, Plastik-, Silizium- oder anderen Substrat.

Aufgrund des hohen Grades an Parallelisierung ergeben sich für derartige Sensor-Anordnungen einschließlich entsprechendem Auswertesystem vielfältige Anwendungen in der medizinischen Diagnosetechnik, in der Pharmaindustrie (z.B. für das Pharma-Screening, "high throughput screening", HTS), in der chemischen Industrie, in der Lebensmittel-Analytik, in der Umwelt- und Lebensmitteltechnik und -analytik.

Bei der Realisierung von passiven Arrays mit Sensoren gemäß dem Prinzip des Redox-Recyclings (Redox-Zyklieren) stellt sich die Herausforderung, dass die Signale aller Sensoren einem Auslesegerät zuzuführen sind. Sofern zum Beispiel ein passives Substrat mit 8x12=96, 32x48=1536 oder allgemein bei einer matrixförmigen Anordnung mit m Zeilen und n Spalten mxn Positionen vorliegt, sind 2x96=192, 2x1536=3072 bzw. allgemein 2mxn separate Elektroden-Anschlüsse der Sensoren sowie zwei weitere Anschlüsse für die Referenz- und Gegenelektroden der Potentiostat-Anordnung erforderlich. Jedes Biosensor-Feld sollte separat auslesbar sein, wobei die Anzahl der verwendeten Anschlüsse ("pads") des Chips aus Gründen des Aufwands (für Chip- und Auslesegerät) und vor allen Dingen aus Gründen der Sicherheit bei der Kontaktierung (Signalintegrität) nicht zu hoch sein sollen.

Ein einfacher Ansatz, beispielsweise alle Elektroden-Anschlüsse mit dem Auslesegerät zu koppeln, liefert 2mxn+2, im Beispiel also 194 oder 3074 Anschlüsse, und ist daher nicht oder nicht befriedigend realisierbar. Ähnliches gilt für den Ansatz, eine Elektrode aller Sensor-Felder gemeinsam zu betreiben und alle verbleibenden Elektroden-Anschlüsse sowie die gemeinsame Elektrode mit dem Auslesegerät zu koppeln. In diesem Falle ist die Anzahl der Anschlüsse zwar geringer, nämlich nxm+1+2 (in dem Beispiel 99 bzw. 1539), jedoch immer noch viel zu groß.

Der Nachteil der in [10], [6] beschriebenen Ansätze, bei welchen aktive Arrays mit einer aufwändigen CMOS-Technik für die einzelnen Sensor-Felder verwendet sind, besteht in den hohen Fertigungskosten gegenüber rein passiven Arrays, bei denen CMOS-Schaltkreise für die Sensorfelder eingespart sind.
[11] offenbart ein selbstadressierbares, selbstzusammensetzendes mikroelektronisches System zum Durchführen von molekularer Diagnose, Analyse, Mehrfach-Schritt und Multiplex-Reaktionen in mikroskopischen Formaten.
[12] offenbart ein Verfahren und eine Vorrichtung, die eine Platform für eine Spalten- und Zeilen-addressierbare Hochdicht-Biosensor-Anordnung aufweisen.
[13] offenbart ein Verfahren zum Erfassen von makromolekularen Biopolymeren mittels einer Elektrodenanordnung.
[14] offenbart einen optimierten kapazitiven Sensor für eine chemische Analyse und Messung.

Der Erfindung liegt das Problem zugrunde, ein Biosensor-Array bereitzustellen, bei dem es mit vertretbarem Herstellungsaufwand möglich ist, Sensorsignale aus einer Anordnung von ausreichend vielen Biosensor-Feldern auszulesen.

Das Problem wird gemäß einem Aspekt der Erfindung gelöst durch ein Biosensor-Array und durch ein Verfahren zum Betreiben eines Biosensor-Arrays mit den Merkmalen gemäß den unabhängigen Patentansprüchen.

Das erfindungsgemäße Biosensor-Array gemäß dem einen Aspekt der Erfindung enthält ein Substrat und eine Mehrzahl von auf dem Substrat angeordnete Biosensor-Felder, von denen jedes einen ersten und einen zweiten Anschluss aufweist. Ferner weist die Sensor-Anordnung mindestens eine Ansteuerleitung und mindestens eine Detektionsleitung auf, wobei die mindestens eine Ansteuerleitung von der mindestens einen Detektionsleitung elektrisch isoliert ist. Mit anderen Worten ist jede Ansteuerleitung von jeder Detektionsleitung in einem Kreuzungsbereich elektrisch entkoppelt. Der jeweils erste Anschluss eines jeden Biosensor-Felds ist mit genau einer der mindestens einen Ansteuerleitung gekoppelt, und der jeweils zweite Anschluss eines jeden Biosensor-Feldes ist mit genau einer der mindestens einen Detektionsleitung gekoppelt. Zumindest eine der mindestens einen Ansteuerleitung und zumindest eine der mindestens einen Detektionsleitung ist mit zumindest zwei der Biosensor-Felder gekoppelt. Ferner enthält das Biosensor-Array eine Ansteuereinheit zum Bereitstellen eines elektrischen Ansteuersignals, eine Detektionseinheit zum Erfassen eines aus dem elektrischen Ansteuersignal resultierenden elektrischen Detektionssignals und eine Auswahleinheit, die derart eingerichtet ist, dass sie die Ansteuereinheit mit der Ansteuerleitung eines auszuwählenden Biosensor-Felds und die Detektionseinheit mit der Detektionsleitung des auszuwählenden Biosensor-Felds koppelt, womit das Biosensor-Feld ausgewählt wird.

Ferner ist gemäß dem einen Aspekt der Erfindung ein Verfahren zum Betreiben eines Biosensor-Arrays mit den oben genannten Merkmalen bereitgestellt. Gemäß dem Verfahren wird die Ansteuereinheit mit der Ansteuerleitung eines auszuwählenden Biosensor-Felds und die Detektionseinheit mit der Detektionsleitung des auszuwählenden Biosensor-Felds gekoppelt, womit das Biosensor-Feld ausgewählt wird. Ferner wird der Ansteuerleitung des mindestens einen ausgewählten Biosensor-Felds ein elektrisches Ansteuersignal bereitgestellt. Darüber hinaus wird an der Detektionsleitung des mindestens einen ausgewählten Biosensor-Felds ein aus dem elektrischen Ansteuersignal resultierendes elektrisches Detektionssignal des ausgewählten Biosensor-Felds erfasst.

Eine Grundidee der Erfindung besteht darin, für jeweils eine Mehrzahl von Biosensor-Feldern eines Biosensor-Arrays gemeinsam vorgesehene Ansteuerleitungen bzw. Detektionsleitungen bereitzustellen, wodurch die Anzahl der zum Betreiben des Biosensor-Arrays erforderlichen Signalleitungen erheblich reduziert ist. Dadurch ist es ermöglicht, ein Biosensor-Array (insbesondere auf einem passiven Chip) bei einer relativ geringen Anzahl von Signalleitungen bzw. einer geringen Anzahl von mit den Signalleitungen gekoppelten Pads zu betreiben. Dadurch ist Platz auf dem Biosensor-Array eingespart, was eine höhere Integrationsdichte ermöglicht, und die Herstellungskosten sind verringert. Die erfindungsgemäße Array-Architektur ist auch für aktive Chips interessant, da sie es erlaubt, den schaltungstechnischen Aufwand pro Biosensor-Feld gering zu halten, was wiederum die Herstellung hochdichter Arrays ermöglicht. Bei aktiven Biosensor-Arrays sind auf dem Substrat zusätzliche Schaltkreiseinrichtungen (beispielsweise Vorverstärker, AD-Wandler etc.) bereitgestellt.

Für eine beispielsweise matrixförmige Anordnung der Biosensor-Felder entlang von als Zeilenleitungen vorgesehenen Detektionsleitungen und entlang von als Spaltenleitungen vorgesehenen Ansteuerleitungen können z.B. m Spalten wahlweise mit einer anregenden Spannungsquelle der Ansteuereinheit oder mit elektrischem Massepotential gekoppelt werden. Die n Zeilen können wahlweise mit einer Stromerfasseinrichtung der Detektionseinheit oder mit dem elektrischen Massepotential gekoppelt werden. Das Auswählen der Kopplung der Anschlüsse der Biosensor-Felder mit der Spannungsquelle oder dem Massepotential bzw. mit der Stromerfasseinrichtung oder dem elektrischen Massepotential erfolgt mittels der Auswahleinheit.

Beispielsweise kann an genau eine Spaltenleitung eine elektrische Spannung als elektrisches Ansteuersignal angelegt werden, und die Stromerfasseinheit zum Erfassen des aus dem elektrischen Ansteuersignal resultierendem elektrischen Detektionssignals kann mit genau einer Zeilenleitung gekoppelt werden. Von der Spannungsquelle fließt dann ein elektrischer Strom in jedes Biosensor-Feld der ausgewählten Spalte. In der Stromerfasseinheit wird jedoch nur der elektrische Strom gemessen, der in das Biosensor-Feld der ausgewählten Zeile fließt. Mit den m Ansteuerleitungen und n Detektionsleitungen sind für das erfindungsgemäße Biosensor-Array im Wesentlichen nur n + m Signalleitungen und somit Pads erforderlich. Für ein Biosensor-Array mit 8x12=96 Positionen sind daher nur zwanzig Signalleitungen und Pads erforderlich, für einen Chip mit 32x48=1532 Positionen sind achtzig Signalleitungen und Pads erforderlich. Das optimale Verhältnis aus Anzahl der Pads bezogen auf die Anzahl der Biosensor-Felder ergibt sich für eine matrixförmige Anordnung mit n=m, das heißt für ein Biosensor-Array mit einer quadratischen Architektur (Anzahl der Zeilen = Anzahl der Spalten).

Anschaulich ist es erfindungsgemäß ermöglicht, den herstellungstechnischen Aufwand für ein Biosensor-Array dadurch wesentlich zu reduzieren, dass zumindest eine der mindestens einen Ansteuerleitung und mindestens eine der mindestens einen Detektionsleitungen mit zumindest zwei der Biosensor-Felder gekoppelt ist. Mit anderen Worten sind für eine jeweilige Mehrzahl von Biosensor-Feldern gemeinsame Signalleitungen zum Ansteuern und Detektieren bereitgestellt.

Bevorzugte Weiterbildungen der Erfindung ergeben sich aus den abhängigen Ansprüchen.

Vorzugsweise enthalten die Biosensor-Felder zwei Elektroden (z.B. zwei Interdigital-Elektroden), von denen jede mit einem der Anschlüsse des Biosensor-Felds gekoppelt ist.

Das erfindungsgemäße Biosensor-Array kann eine Auswerteeinheit aufweisen, die derart eingerichtet ist, dass sie für das mindestens eine ausgewählte Biosensor-Feld basierend auf dem Wert des Ansteuersignals und des Detektionssignals ermittelt, ob an dem mindestens einen ausgewählten Biosensor-Feld Sensorereignisse erfolgt sind und/oder in welcher Quantität an dem mindestens einen Biosensor-Feld Sensorereignisse erfolgt sind. Sind beispielsweise die Biosensor-Felder unter Verwendung des oben bezugnehmend auf Fig.1A bis Fig.5B beschriebenen Impedanzyerfahrens unter Verwendung einer Interdigitalelektroden-Anordnung betreibbar, so kann das Ansteuersignal eine elektrische Wechselspannung und das Detektionssignal ein durch ein ausgewähltes Biosensor-Feld fließender aus der Wechselspannung resultierender Wechselstrom sein. Aus dem Ansteuersignal und dem Detektionssignal ist dann der Wert der Impedanz des Biosensor-Felds ermittelbar. Da der Wert der Impedanz vor und nach einem erfolgten Hybridisierungsereignis unterschiedlich ist, kann bei einer Veränderung des Werts der Impedanz darauf geschlossen werden, ob an dem ausgewählten Biosensor-Feld ein Sensorereignis erfolgt ist bzw. in welcher Menge dort Sensorereignisse erfolgt sind. Dadurch kann ermittelt werden, ob in einem zu untersuchenden Analyten zu erfassende Partikel enthalten sind, und gegebenenfalls in welcher Konzentration die zu erfassenden Partikel in dem Analyten enthalten sind. Die Auswerteeinheit kann auf dem Substrat integriert oder extern von dem Substrat vorgesehen sein.

Das mindestens eine Biosensor-Feld kann ein elektrochemisches Biosensor-Feld oder ein Impedanz-Biosensor-Feld sein. Falls das Biosensor-Feld ein elektrochemisches Biosensor-Feld ist, kann es insbesondere als Redox-Recycling-Biosensor-Feld eingerichtet sein. Bei einem Redox-Recycling-Biosensor-Feld werden zu erfassende Partikel mit einem Enzym-Label versehen, das nach einem erfolgten Hybridisierungsereignis mit auf dem Sensorfeld immobilisierten Fängermolekülen dazu verwendet wird, eine in die Anordnung einzubringende elektrochemisch inaktive Substanz in zwei Teilmoleküle zu spalten, von denen mindestens eines elektrochemisch aktiv ist. Dies führt zu einer Veränderung der elektrischen Eigenschaften der jeweiligen Sensor-Position des Biosensor-Arrays.

Das zumindest eine Biosensor-Feld ist vorzugsweise als Interdigitalelektroden-Biosensor-Feld eingerichtet. Mit anderen Worten kann es wie die bezugnehmend auf Fig.1A bis Fig.5D beschriebene Interdigitalelektroden-Anordnung 100 ausgestaltet und betreibbar sein.

Die Biosensor-Felder können zu einer Mehrzahl von Biosensor-Gruppen gruppiert sein, derart, dass jede Biosensor-Gruppe wahlweise separat von den anderen Biosensor-Gruppen oder gemeinsam mit zumindest einem Teil der anderen Biosensor-Gruppen betreibbar ist. Anschaulich ist eine Kompartimentierung des Biosensor-Arrays möglich. Ist beispielsweise für eine bestimmte Anwendung ein Teilbereich der Biosensor-Felder ausreichend und werden die anderen Biosensor-Felder für diese Anwendung nicht benötigt, so können die Biosensor-Felder des Teilbereichs zu einer Gruppe gruppiert werden und diese Gruppe separat von den übrigen Biosensor-Feldern betrieben werden.

Das Substrat kann ein Keramik-Substrat, ein Halbleiter-Substrat (insbesondere ein Silizium-Substrat, das heißt ein Silizium-Wafer oder ein Silizium-Chip), ein Glas-Substrat oder ein Plastik-Substrat sein.

Das elektrische Ansteuersignal ist vorzugsweise ein zeitlich veränderliches elektrisches Signal. Insbesondere dann, wenn eine zu erfassende Impedanz durch einen kapazitiven Anteil dominiert wird, ist ein zeitlich veränderliches elektrisches Signal vorteilhaft.

Das Ansteuersignal kann eine zeitlich veränderliche elektrische Spannung sein, und das Auslesesignal kann ein zeitlich veränderlicher elektrischer Strom sein. Alternativ kann das Ansteuersignal ein zeitlich veränderlicher elektrischer Strom und das Auslesesignal eine zeitlich veränderliche elektrische Spannung sein.

Die Zeitabhängigkeit des elektrischen Ansteuersignals kann insbesondere eine mathematische Sinus-Funktion, eine Rechteck-Funktion, eine Sägezahn-Funktion, eine Dreiecks-Funktion oder eine Sprung-Funktion sein.

Vorteilhaft ist eine Ausgestaltung des erfindungsgemäßen Biosensor-Arrays als aktiver Sensor-Chip, in dem integrierte Schaltkreise mit beliebigen Funktionen enthalten sein können. In dem Substrat des Biosensor-Arrays kann ein Analog-Digital-Wandler-Schaltkreis integriert sein, der derart eingerichtet ist, dass er ein analoges elektrisches Signal in ein digitales Signal umwandelt und der Auswerteeinheit bereitstellt. Ferner kann eine elektrische Versorgungseinheit in dem Substrat integriert sein, die derart eingereichtet ist, dass sie der Ansteuereinheit und/oder der Auswahleinheit elektrische Spannungssignale und/oder elektrische Stromsignale bereitstellt. Darüber hinaus kann in dem Substrat ein Digital-Analog-Wandler Schaltkreis integriert sein, der derart eingerichtet ist, dass er ein digitales Spannungssignal und/oder Stromsignal der Versorgungseinheit in ein analoges Signal umwandelt und der Ansteuereinheit und/oder der Auswahleinheit bereitstellt. Auch kann eine Eingabe-/Ausgabe-Schnittstelle zum Anschließen einer externen Vorrichtung auf dem Biosensor-Array vorgesehen sein. Diese kann beispielsweise als digitale I/O-Schnittstelle eingerichtet sein. Ferner kann in dem Substrat eine Verstärkereinheit integriert sein, eingerichtet zum Verstärken des elektrischen Detektionssignals. Aufgrund einer Verstärkung "On-Chip" ist vermieden, dass ein störanfälliges, analoges Signal entlang eines großen Bereichs von Signalleitungen verläuft und daher Störungen ausgesetzt ist. Dadurch ist das Signal-Rausch-Verhältnis verbessert.

Vorzugsweise ist die mindestens eine Ansteuerleitung einerseits und die mindestens eine Detektionsleitung andererseits zumindest teilweise in zwei unterschiedlichen Leiterebenen (z.B. Metallisierungsebenen) in und/oder auf und/oder unter dem Substrat ausgebildet. Die Verwendung zweier unterschiedlicher Leitungsebenen ermöglicht eine elektrisch isolierte Leitungskreuzung zwischen Ansteuerleitungen und Detektionsleitungen. Die zwei Leitungsebenen (insbesondere Metallebenen) können so realisiert sein, wie es von Prozessen der Mikroelektronik bekannt ist. Dort sind alle Metallebenen oberhalb des Bulk-Materials (des Substrats) in Intermetall-Dielektrika eingebettet. Alternativ ist jedoch auch möglich, dass eine der Leitungsebenen in der gleichen Ebene (und vorzugsweise aus dem gleichen Material) realisiert ist wie die Transducer-Elemente selbst (z.B. Goldmaterial von Interdigitalelektroden). Mit anderen Worten können die Biosensor-Felder in genau einer der Leitungsebenen ausgebildet sein.

Ferner kann in einem ersten Leitungsabschnitt, in dem die mindestens eine Ansteuerleitung und die mindestens eine Detektionsleitung von einer gegenseitigen Kreuzung frei sind, die mindestens eine Ansteuerleitung und die mindestens eine Detektionsleitung in derselben Ebene verlaufend ausgebildet sein. In einem zweiten Leitungsabschnitt, in dem die mindestens eine Ansteuerleitung und die mindestens eine Detektionsleitung sich gegenseitig kreuzen, kann die mindestens eine Ansteuerleitung und die mindestens eine Detektionsleitung in unterschiedlichen Ebenen verlaufend ausgebildet sein.

Mit anderen Worten muss eine zweite Leiterebene nicht notwendigerweise vergraben bzgl. einer ersten Leiterebene vorgesehen sein. Es ist auch möglich, beide Ebenen teilweise in derselben Ebene wie die Transducer zu realisieren (und aus dem gleichen Material wie die Transducer herzustellen). Nur in Kreuzungsbereichen zwischen Ansteuerleitungen und Detektionsleitungen ist dann eine Überbrückung des Kreuzungsbereichs erforderlich, um eine elektrische Isolierung zwischen Ansteuerleitungen und Detektionsleitungen zu gewährleisten. Zwischen den im Überbrückungsbereich in unterschiedlichen Ebenen verlaufenden Leitungsabschnitten ist vorzugsweise ein elektrisch isolierendes Material zwischen den Leitungen zu verwenden.

Vorzugsweise ist der erste Leitungsabschnitt der mindestens einen Ansteuerleitung und/oder der mindestens einen Detektionsleitung mit dem zweiten Leitungsabschnitt der mindestens einen Ansteuerleitung und/oder der mindestens einen Detektionsleitung mittels mindestens einem im Wesentlichen vertikal zu dem Substrat verlaufend angeordneten elektrischen Kontaktierungselement gekoppelt. Insbesondere sind Vias möglich, um Leitungsabschnitte der Ansteuerleitungen und/oder der Detektionsleitungen, die in unterschiedlichen Ebenen verlaufen, miteinander zu koppeln.

Die mindestens eine Ansteuerleitung und/oder die mindestens eine Detektionsleitung kann auf einer Unterseite des Substrats oder unterhalb des Substrats verlaufend ausgebildet sein.

Mit anderen Worten kann eine Leitungsebene zum Beispiel auch an der Unterseite eines Chips realisiert sein. Hierfür sind Durchkontaktierungen erforderlich. Ferner kann unterhalb des Chips eine dielektrische Schicht ausgebildet werden, in welche elektrisch leitfähige Strukturen eingebettet werden, um Signalleitungen auszubilden.

Die Biosensor-Felder des erfindungsgemäßen Biosensor-Arrays können im Wesentlichen in einer rechteckigen, vorzugsweise quadratischen, hexagonalen oder dreieckigen Matrix angeordnet sein. Bei einer matrixförmigen rechteckigen Anordnung der Biosensor-Felder mit gleicher Zeilen- und Spaltenzahl (quadratische Matrix) ist ein besonders günstiges Verhältnis der Anzahl von erforderlichen Signalleitungen (bzw. Pads) zu der Anzahl von Biosensor-Feldern ermöglicht.

Die Ansteuereinheit kann eine für alle Biosensor-Felder gemeinsame Versorgungseinheit aufweisen, die derart eingerichtet ist, dass mit ihr an das zumindest eine ausgewählte Biosensor-Feld das elektrische Ansteuersignal anlegbar ist.

Mit anderen Worten kann beispielsweise eine einzige gemeinsame Spannungsquelle als Versorgungseinheit vorgesehen sein, die unter Verwendung der Funktionalität der Auswahleinheit mit jeweils einem Biosensor-Feld oder einem Teil der Biosensor-Felder (beispielsweise einer Spalte von Biosensor-Feldern) gekoppelt wird, um diesem Biosensor-Feld bzw. diesen Biosensor-Feldern das elektrische Ansteuersignal bereitzustellen. Die Verwendung einer einzigen gemeinsamen Versorgungseinheit verringert die Herstellungskosten des Biosensor-Arrays. -

Insbesondere kann für die zuletzt beschriebene Ausgestaltung die Ansteuereinheit und/oder die Detektionseinheit derart eingerichtet sein, dass mit ihr an zumindest einen Teil der nicht ausgewählten Biosensor-Felder ein elektrisches Referenzsignal anlegbar ist.

Mittels der Versorgungseinheit kann somit an ein einziges Biosensor-Feld oder beispielsweise eine Zeile von Biosensor-Feldern ein Spannungssignal als elektrisches Ansteuersignal angelegt werden, und an einen Teil oder an alle übrigen nicht ausgewählten Biosensor-Felder kann ein elektrisches Referenzsignal, insbesondere das elektrische Massepotential, angelegt sein.

Alternativ kann die Ansteuereinheit für jeweils eine Gruppe von Biosensor-Feldern eine der jeweiligen Gruppe zugehörige Versorgungseinheit aufweisen, die derart eingereichtet ist, dass mit ihr an die Biosensor-Felder der zugehörigen Gruppe das elektrische Ansteuersignal anlegbar ist.

Beispielsweise kann bei einer matrixförmigen Anordnung der Biosensor-Felder für jede Spalte von Sensorfeldern eine gemeinsame Spannungsquelle als den entlang der Spalte angeordneten Biosensor-Feldern zugehörige Versorgungseinheit vorgesehen sein. Die Ansteuereinheit bzw. die Auswahleinheit können insbesondere derart eingerichtet sein, dass jeweils eine der Versorgungseinheiten der zugehörigen Gruppe von Biosensor-Feldern ein elektrisches Ansteuersignal bereitstellt, wohingegen die anderen Versorgungseinheiten den zugehörigen Biosensor-Feldern ein Referenzpotential, beispielsweise das elektrische Massepotential, bereitstellen.

Die Detektionseinheit kann eine für alle Biosensor-Felder gemeinsame Messeinheit aufweisen, die derart eingerichtet ist, dass mit ihr an genau einem ausgewählten Biosensor-Feld das elektrische Detektionssignal erfassbar ist.

Mit anderen Worten kann beispielsweise für alle Biosensor-Felder eine gemeinsame Stromerfasseinheit (z.B. Amperemeter) vorgesehen sein, die unter Verwendung der Auswahleinheit einem ausgewählten Biosensor-Feld zugeschaltet wird, so dass in diesem Fall der elektrische Strom durch das ausgewählte Biosensor-Feld mittels der für alle Biosensor-Felder gemeinsam vorgesehene Messeinheit erfasst wird.

Alternativ kann die Detektionseinheit für jeweils eine Gruppe von Biosensor-Feldern eine der jeweiligen Gruppe zugehörige Messeinheit aufweisen, wobei jede der Messeinheiten derart eingerichtet ist, dass mit ihr an genau einem ausgewählten Biosensor-Feld der zugehörigen Gruppe das elektrische Detektionssignal erfassbar ist.

Bezogen auf das Beispiel einer matrixförmigen Anordnung von Biosensor-Feldern kann beispielsweise für jede Zeile von Biosensor-Feldern eine gemeinsame Messeinheit (beispielsweise Stromerfasseinheit) vorgesehen sein. In diesem Falle ist es möglich, beispielsweise die ausgewählten Biosensor-Felder einer Spalte zeitlich parallel auszulesen, indem die Messeinheiten für die in unterschiedlichen Zeilen angeordneten, ausgewählten Biosensor-Felder jeweils separat das elektrische Auslesesignal erfassen.

Ferner kann das erfindungsgemäße Biosensor-Array eine Potentiostat-Einrichtung aufweisen, die derart eingerichtet ist, dass mit ihr zumindest einem Teil der Biosensor-Felder ein konstantes elektrisches Potential vorgebbar ist.

Insbesondere kann die Potentiostat-Einrichtung eine Referenzelektrode, eine Gegenelektrode und einen Operationsverstärker aufweisen, wobei ein erster Eingang des Operationsverstärkers mit der Referenzelektrode, ein zweiter Eingang des Operationsverstärkers mit einem Referenzpotential (beispielsweise dem elektrischen Massepotential) und ein Ausgang des Operationsverstärkers mit der Gegenelektrode gekoppelt ist.

Im Weiteren wird das erfindungsgemäße Verfahren zum Betreiben des erfindungsgemäßen Biosensor-Arrays beschrieben. Ausgestaltungen des Biosensor-Arrays gelten auch für das Verfahren zum Betreiben des erfindungsgemäßen Biosensor-Arrays.

Vorzugsweise wird für das mindestens eine ausgewählte Biosensor-Feld basierend auf dem Ansteuersignal und dem Detektionssignal ermittelt, ob an dem mindestens einen ausgewählten Biosensor-Feld Sensorereignisse erfolgt sind und/oder in welcher Quantität an dem mindestens einen ausgewählten Biosensor-Feld Sensorereignisse erfolgt sind.

Das Problem der Erfindung wird gemäß einem anderen Aspekt der Erfindung gelöst durch ein Biosensor-Array und durch ein Verfahren zum Betreiben eines Biosensor-Arrays mit den Merkmalen gemäß den unabhängigen Patentansprüchen.

Das erfindungsgemäße Biosensor-Array gemäß dem anderen Aspekt der Erfindung weist ein Substrat und eine Mehrzahl von auf dem Substrat angeordneten Biosensor-Felder auf, von denen jedes einen ersten Anschluss und einen zweiten Anschluss aufweist. Ferner enthält das Biosensor-Array mindestens eine erste Signalleitung und mindestens eine zweite Signalleitung, wobei die mindestens eine erste Signalleitung von der mindestens einen zweiten Signalleitung elektrisch isoliert ist. Jeweils der erste Anschluss eines jeden Biosensor-Felds ist mit genau einer der mindestens einen ersten Signalleitung gekoppelt, und der zweite Anschluss eines jeden Biosensor-Felds ist mit genau einer der mindestens einen zweiten Signalleitung gekoppelt. Zumindest eine der mindestens einen ersten Signalleitung und zumindest eine der mindestens einen zweiten Signalleitung ist mit zumindest zwei der Biosensor-Feldern gekoppelt. Ferner ist eine erste Ansteuereinheit zum Bereitstellen eines ersten elektrischen Ansteuersignals und eine zweite Ansteuereinheit zum Bereitstellen eines zweiten elektrischen Ansteuersignals bereitgestellt. Darüber hinaus enthält das Biosensor-Array eine mit der ersten Ansteuereinheit gekoppelte erste Detektionseinheit und/oder eine mit der zweiten Ansteuereinheit gekoppelte zweite Detektionseinheit, die derart eingerichtet ist oder sind, dass sie ein aus dem ersten und dem zweiten elektrischen Ansteuersignal resultierendes erstes und/oder zweites elektrisches Detektionssignal eines ausgewählten Biosensor-Feldes erfasst oder erfassen. Eine Auswahleinheit ist derart eingerichtet, dass sie die erste Ansteuereinheit mit der ersten Signalleitung eines auszuwählenden Biosensor-Felds und die zweite Ansteuereinheit mit der zweiten Signalleitung des auszuwählenden Biosensor-Felds koppelt, womit das Biosensor-Feld ausgewählt wird.

Ferner ist gemäß dem anderen Aspekt der Erfindung ein Verfahren zum Betreiben eines Biosensor-Arrays mit den oben beschriebenen Merkmalen geschaffen. Gemäß dem Verfahren wird die erste Ansteuereinheit mit der ersten Signalleitung eines auszuwählenden Biosensor-Felds und die zweite Ansteuereinheit mit der zweiten Signalleitung des auszuwählenden Biosensor-Felds gekoppelt, womit das mindestens eine Biosensor-Feld ausgewählt wird. Ferner wird der ersten Signalleitung des ausgewählten Biosensor-Felds ein erstes elektrisches Ansteuersignal und der zweiten Signalleitung des ausgewählten Biosensor-Felds ein zweites elektrisches Ansteuersignal bereitgestellt. Darüber hinaus wird ein aus dem ersten oder dem zweiten elektrischen Ansteuersignal resultierendes erstes Detektionssignal an der ersten Signalleitung des ausgewählten Biosensor-Felds und/oder ein aus dem ersten und dem zweiten elektrischen Ansteuersignal resultierendes zweites Detektionssignal an der zweiten Signalleitung des ausgewählten Biosensor-Felds erfasst.

Eine Grundidee der Erfindung besteht darin, für jeweils eine Mehrzahl von Biosensor-Feldern eines Biosensor-Arrays gemeinsam vorgesehene erste Signalleitungen bzw. zweite Signalleitungen bereitzustellen, wodurch die Anzahl der zum Betreiben des Biosensor-Arrays erforderlichen Signalleitungen erheblich reduziert ist. Dadurch ist es ermöglicht, ein Biosensor-Array (insbesondere auf einem passiven Chip) bei einer relativ geringen Anzahl von Signalleitungen bzw. einer geringen Anzahl von mit den Signalleitungen gekoppelten Pads zu betreiben. Dadurch ist Platz auf dem Biosensor-Array eingespart, was eine höhere Integrationsdichte ermöglicht und die Herstellungskosten verringert. Die erfindungsgemäße Array-Architektur kann jedoch auch bei aktiven Chips eingesetzt werden, da sie es erlaubt, den schaltungstechnischen Aufwand pro Biosensor-Feld gering zu halten, was wiederum die Herstellung hochdichter Arrays ermöglicht. Bei aktiven Biosensor-Arrays sind auf dem Substrat zusätzliche Schaltkreis-Einrichtungen (beispielsweise Vorverstärker, AD-Wandler etc.) bereitgestellt.

Für eine beispielsweise matrixförmige Anordnung der Biosensor-Felder entlang von als Zeilenleitungen vorgesehenen zweiten Signalleitungen und entlang von als Spaltenleitungen vorgesehenen ersten Signalleitungen können z.B. m Spalten wahlweise mit einer anregenden ersten Spannungsquelle der ersten Ansteuereinheit oder mit elektrischem Massepotential gekoppelt werden. Die n Zeilen können wahlweise mit einer zweiten anregenden Spannungsquelle der zweiten Ansteuereinheit oder mit elektrischem Massepotential gekoppelt werden. Das Auswählen der Kopplung der Anschlüsse der Biosensor-Felder mit den Spannungsquellen oder mit dem Massepotential erfolgt mittels der Auswahleinheit.

Beispielsweise kann an genau einer Spaltenleitung eine positive elektrische Spannung als erstes elektrisches Ansteuersignal angelegt werden und kann an genau eine Zeilenleitung eine elektrische Spannung negativen Vorzeichens als zweites elektrisches Ansteuersignal angelegt werden. Nur ein in dem Kreuzungsbereich der ausgewählten Zeile mit der ausgewählten Spalte angeordnetes Biosensor-Feld hat zwischen seinen beiden Anschlüssen (d.h. seinen beiden Elektroden) eine ausreichend große Potentialdifferenz, dass Redox-Recycling-Prozesse auf dem Biosensor-Feld erfolgen können. Alle anderen Biosensor-Felder haben zwischen ihren Anschlüssen eine Potentialdifferenz, die der ersten elektrischen Spannung oder der zweiten elektrischen Spannung entspricht, da der jeweils andere Anschluss auf Massepotential liegt. Dadurch sind an diesen Biosensor-Feldern Redox-Recycling-Prozesse nicht bzw. nicht in ausreichendem Maße möglich, um ein detektierbares zeitlich ansteigendes Signal zu generieren.

Tritt bei einem ausgewählten Biosensor-Feld ein Sensorereignis, beispielsweise ein Hybridisierungsereignis, zwischen auf dem Biosensor-Feld immobilisierten Fängermolekülen und zu erfassenden Partikeln eines Analyten auf, können unter Verwendung eines Labels an den zu erfassenden Partikeln, einer in den Analyten eingebrachten chemischen Komponente und einer ausreichend großen elektrischen Potentialdifferenz zwischen den Sensor-Elektroden Redox-Recycling-Prozesse auftreten. Als Folge davon fließt auf der mit dem ausgewählten Biosensor-Feld gekoppelten ersten Signalleitung und auf der mit dem ausgewählten Biosensor-Feld gekoppelten zweiten Signalleitung jeweils ein elektrischer Strom als Detektionssignal. Mittels Erfassens eines Werts oder vorzugsweise beider Werte der Ströme kann auf das Auftreten von Hybridisierungsereignissen geschlossen werden.

Für den Fall einer matrixförmigen Anordnung der Biosensor-Felder mit m Spalten und n Zeilen sind gemäß der Erfindung lediglich n+m+2 Anschlüsse erforderlich, nämlich m erste Signalleitungen, n zweite Signalleitungen und (optional) zwei weitere Anschlüsse für Referenz- und Gegenelektrode eines Potentiostaten. Für einen Chip mit beispielsweise 8x12=96 Positionen sind daher lediglich 22 Signalleitungen erforderlich, für einen Chip mit 32x48=1536 Positionen sind 82 Signalleitungen erforderlich. Dies stellt gegenüber dem Stand der Technik eine erhebliche Aufwandsverringerung dar. Das optimal erreichbare Verhältnis aus Zahl der Anschlüsse normiert auf die Anzahl der Sensor-Positionen auf dem Chip ergibt sich für den Fall n=m, das heißt für ein Sensor-Array mit einer quadratischen Architektur (Zeilenzahl=Spaltenzahl).

Anschaulich ist es erfindungsgemäß ermöglicht, den herstellungstechnischen Aufwand für ein Biosensor-Array dadurch wesentlich zu reduzieren, dass zumindest eine der mindestens einen ersten Signalleitung und mindestens eine der mindestens einen zweiten Signalleitung mit zumindest zwei der Biosensor-Felder gekoppelt ist. Mit anderen Worten sind für eine jeweilige Mehrzahl von Biosensor-Feldern gemeinsame Signalleitungen zum Ansteuern und Detektieren bereitgestellt.

Bevorzugte Weiterbildungen der Erfindung ergeben sich aus den abhängigen Ansprüchen.

Das Biosensor-Array kann eine Auswerteeinheit aufweisen, die derart eingerichtet ist, dass sie für das mindestens eine ausgewählte Biosensor-Feld basierend auf dem ersten und/oder dem zweiten Detektionssignal ermittelt, ob an dem mindestens einen ausgewählten Biosensor-Feld Sensorereignisse erfolgt sind und/oder in welcher Quantität an dem mindestens einen ausgewählten Biosensor-Feld Sensorereignisse erfolgt sind.

Mindestens eines der Biosensor-Felder kann als elektrochemisches Biosensor-Feld eingerichtet sein. Insbesondere kann zumindest eines der Biosensor-Felder ein Redox-Recycling-Biosensor-Feld sein. Bei einem Redox-Recycling-Biosensor-Feld werden zu erfassende Partikel vorzugsweise mit einem Label versehen, das nach einem erfolgten Hybridisierungsereignis mit auf dem Sensor-Feld immobilisierten Fängermolekülen dazu verwendet wird, eine in die Anordnung einzubringende, bei den verwendeten Potentialen elektrochemisch inaktive Substanz in zwei Teilmoleküle zu spalten, von denen mindestens eines elektrochemisch aktiv ist. Dies führt zu einer Veränderung der elektrischen Eigenschaften der jeweiligen Sensor-Position des Biosensor-Arrays.

Das Biosensor-Feld kann eine erste und eine zweite Elektrode aufweisen, wobei die erste Elektrode mit dem ersten Anschluss und wobei die zweite Elektrode mit dem zweiten Anschluss des Biosensor-Feldes gekoppelt ist. Die erste und die zweite Elektrode ist vorzugsweise eine Interdigitalelektrode. Mit anderen Worten kann die erste und/oder die zweite Elektrode wie die in Fig.1C gezeigte erste oder zweite Interdigitalelektrode 112, 113 ausgestaltet und betreibbar sein.

Die Biosensor-Felder können zu einer Mehrzahl von Biosensor-Gruppen gruppiert sein, derart, dass jede Biosensor-Gruppe wahlweise separat von den anderen Biosensor-Gruppen oder gemeinsam mit zumindest einem Teil der anderen Biosensor-Gruppen betreibbar ist. Anschaulich ist eine Kompartimentierung des Biosensor-Arrays möglich. Ist beispielsweise für eine bestimmte Anwendung ein Teilbereich der Biosensor-Felder ausreichend und werden die anderen Biosensor-Felder für diese Anwendung nicht benötigt, so können die Biosensor-Felder des Teilbereichs zu einer Gruppe gruppiert werden und diese Gruppe separat von den übrigen Biosensor-Feldern betrieben werden.

Das Substrat kann ein Keramik-Substrat, ein Halbleiter-Substrat (insbesondere ein Silizium-Substrat, d.h. ein Silizium-Wafer oder ein Silizium-Chip), ein Glas-Substrat oder ein Plastik-Substrat sein.

Das erste und das zweite elektrische Ansteuersignal sind vorzugsweise elektrische Gleichspannungssignale mit unterschiedlichen Vorzeichen bezogen auf ein Referenzpotential, welches Referenzpotential an zumindest einem Anschluss eines nicht ausgewählten Biosensor-Feldes anliegen kann, und das erste und/oder das zweite elektrische Detektionssignal ist vorzugsweise ein elektrischer Strom.

Es ist alternativ vorgesehen, dass die ersten und zweiten elektrischen Ansteuersignale zueinander gegenphasige Spannungssignale sind. Bedingung für das Auftreten von Redox-Recycling-Prozessen an einem ausgewählten Sensorfeld ist lediglich, dass die Potentialdifferenz zwischen dem ersten und dem zweiten elektrischen Ansteuersignal einen gewissen Schwellwert überschreitet.

In der Regel wird an einen Anschluss oder an beide Anschlüsse eines nicht ausgewählten Biosensor-Felds ein elektrisches Referenzpotential (z.B. das Massepotential) angelegt. Es ist jedoch auch möglich, dass zumindest ein nicht ausgewähltes Biosensor-Feld "floatet", d.h. dass die Anschlüsse dieses Biosensor-Felds nicht auf ein definiertes elektrisches Potential gebracht werden.

Die Amplituden und Vorzeichen des ersten und des zweiten elektrischen Ansteuersignals sind vorzugsweise derart gewählt, dass infolge eines an einem Biosensor-Feld erfolgten Sensorereignisses im Wesentlichen nur dann ein signifikantes erstes und/oder zweites Detektionssignal generiert wird, wenn der erste Anschluss des Biosensor-Felds mit der ersten Ansteuereinheit und simultan der zweite Anschluss des Biosensor-Felds mit der zweiten Ansteuereinheit gekoppelt ist. Mit anderen Worten sind die Werte der ersten und zweiten elektrischen Ansteuersignale vorzugsweise derart gewählt, dass ein nicht auszuwählendes Biosensor-Feld, an dessen ersten Anschluss das erste Ansteuersignal angelegt ist und an dessen zweiten Anschluss das zweite Ansteuersignal nicht angelegt ist, nicht fähig ist, Redox-Recycling-Prozesse durchzuführen. Ferner sind die Werte der ersten und zweiten elektrischen Ansteuersignale vorzugsweise derart gewählt, dass ein nicht auszuwählendes Biosensor-Feld, an dessen ersten Anschluss das erste Ansteuersignal nicht angelegt ist und an dessen zweiten Anschluss das zweite Ansteuersignal angelegt ist, nicht fähig ist, Redox-Recycling-Prozesse durchzuführen. Nur diejenigen Biosensor-Felder sind ausgewählt, an deren ersten Anschluss das erste Ansteuersignal und an deren zweiten Anschluss das zweite Ansteuersignal anliegt.

Vorteilhaft ist eine Ausgestaltung des erfindungsgemäßen Biosensor-Arrays als aktiver Sensor-Chip, in dem integrierte Schaltkreise mit beliebigen Funktionen enthalten sein können. In dem Substrat des Biosensor-Arrays kann ein Analog-Digital-Wandler-Schaltkreis integriert sein, der derart eingerichtet ist, dass er ein analoges elektrisches Signal in ein digitales Signal umwandelt und der Auswerteeinheit bereitstellt. Ferner kann eine elektrische Versorgungseinheit in dem Substrat integriert sein, die derart eingerichtet ist, dass sie der ersten und/oder der zweiten Ansteuereinheit und/oder der Auswahleinheit elektrische Spannungssignale und/oder elektrische Stromsignale bereitstellen kann. Darüber hinaus kann in dem Substrat ein Digital-Analog-Wandler-Schaltkreis integriert sein, der derart eingerichtet ist, dass er ein digitales Signal der Versorgungseinheit in ein analoges Signal umwandeln und der Ansteuereinheit und/oder der Auswahleinheit bereitstellen kann. Auch kann eine Eingabe-/Ausgabe-Schnittstelle zum Anschließen einer externen Vorrichtung auf dem Biosensor-Array vorgesehen sein. Diese kann beispielsweise als digitale I/O-Schnittstelle eingerichtet sein. Ferner kann in dem Substrat eine Verstärkereinheit integriert sein, eingerichtet zum Verstärken des ersten und/oder des zweiten elektrischen Detektionssignals. Aufgrund einer Verstärkung "On-Chip" ist vermieden, dass ein störanfälliges, analoges Signal entlang einer langen Signalleitung verläuft und daher Störungen ausgesetzt ist. Dadurch ist das Signal-Rausch-Verhältnis verbessert.

Vorzugsweise ist die mindestens eine erste Signalleitung einerseits und die mindestens eine zweite Signalleitung andererseits zumindest teilweise in zwei unterschiedlichen Leiterebenen (z.B. Metallisierungsebenen) in und/oder auf und/oder unter dem Substrat ausgebildet. Die Verwendung zweier unterschiedlicher Leitungsebenen ermöglicht eine elektrisch isolierte Leitungskreuzung zwischen ersten und zweiten Signalleitungen. Die zwei Leitungsebenen (insbesondere Metallebenen) können so realisiert sein, wie es von Prozessen der Mikroelektronik bekannt ist. Dort sind häufig die Metallebenen oberhalb des Bulk-Materials (des Substrats) in Intermetall-Dielelektrika eingebettet.

Alternativ ist jedoch auch möglich, dass eine der Leitungsebenen in der gleichen Ebene (und vorzugsweise aus dem gleichen Material) realisiert ist wie die Transducer-Elemente selbst (z.B. Goldmaterial von Interdigitalelektroden). Mit anderen Worten können die Biosensor-Felder in genau einer der Leitungsebenen ausgebildet sein.

Ferner können in einem ersten Leitungsabschnitt, in dem die mindestens eine erste Signalleitung und die mindestens eine zweite Signalleitung von einer gegenseitigen Kreuzung frei sind, die mindestens eine erste Signalleitung und die mindestens eine zweite Signalleitung in derselben Ebene verlaufend ausgebildet sein. Ferner können in einem zweiten Leitungsabschnitt, in dem die mindestens eine erste Signalleitung und die mindestens eine zweite Signalleitung sich gegenseitig kreuzen, die mindestens eine erste Signalleitung und die mindestens eine zweite Signalleitung in unterschiedlichen Ebenen verlaufend ausgebildet sein.

Mit anderen Worten muss eine zweite Leiterebene nicht notwendigerweise vergraben bezüglich einer ersten Leiterebene vorgesehen sein. Es ist auch möglich, beide Ebenen teilweise in derselben Ebene wie die Transducer zu realisieren, und aus dem gleichen Material wie die Transducer herzustellen. Dann ist nur in Kreuzungsbereichen zwischen ersten und zweiten Signalleitungen eine Überbrückung des Kreuzungsbereichs erforderlich, um eine elektrische Isolierung zwischen Ansteuerleitungen und Detektionsleitungen zu gewährleisten. Zwischen den im Überbrückungsbereich in unterschiedlichen Ebenen verlaufenden Leitungsabschnitten ist vorzugsweise ein elektrisch isolierendes Material zwischen den Leitungen zu verwenden.

Vorzugsweise ist der erste Leitungsabschnitt der mindestens einen ersten Signalleitung und/oder der mindestens einen zweiten Signalleitung mit dem zweiten Leitungsabschnitt der mindestens einen ersten Signalleitung und/oder der mindestens einen zweiten Signalleitung mittels mindestens einem im Wesentlichen vertikal zu dem Substrat verlaufend angeordneten elektrischen Kontaktierungselement gekoppelt. Insbesondere sind Vias möglich, um Leitungsabschnitte einer ersten Signalleitung (und/oder einer zweiten Signalleitung), die in unterschiedlichen Ebenen verlaufen, jeweils miteinander zu koppeln.

Die mindestens eine erste Signalleitung und/oder die mindestens eine zweite Signalleitung kann auf einer Unterseite des Substrats oder unterhalb des Substrats verlaufend ausgebildet sein.

Mit anderen Worten kann eine Leitungsebene zum Beispiel auch an der Unterseite eines Substrats (z.B. Leiterplatte) realisiert sein. Hierfür sind Durchkontaktierungen erforderlich. Ferner kann unterhalb des Substrats eine dielektrische Schicht ausgebildet werden, in welche elektrisch leitfähige Strukturen eingebettet werden, um Signalleitungen auszubilden.

Die Biosensor-Felder der erfindungsgemäßen Biosensor-Arrays können in einer im Wesentlichen rechteckigen, vorzugsweise quadratischen, hexagonalen oder dreieckigen Matrix angeordnet sein. Bei einer matrixförmigen rechteckigen Anordnung der Biosensor-Felder mit gleicher Zeilen- und Spaltenzahl (quadratische Matrix) ist ein besonders günstiges Verhältnis der Anzahl von erforderlichen Signalleitungen (bzw. Pads) zu der Anzahl von Biosensor-Feldern ermöglicht.

Die Ansteuereinheit kann eine für alle Biosensor-Felder gemeinsame erste Versorgungseinheit und/oder die zweite Ansteuereinheit kann eine für alle Biosensor-Felder gemeinsame zweite Versorgungseinheit aufweisen, wobei die erste Versorgungseinheit derart eingerichtet ist, dass mit ihr an das zumindest eine ausgewählte Biosensor-Feld das erste elektrische Ansteuersignal anlegbar ist, und/oder wobei die zweite Versorgungseinheit derart eingerichtet ist, dass mit ihr an das zumindest eine ausgewählte Biosensor-Feld das zweite elektrische Ansteuersignal anlegbar ist.

Mit anderen Worten kann beispielsweise eine einzige gemeinsame Spannungsquelle als erste Versorgungseinheit bzw. eine einzige gemeinsame Spannungsquelle als zweite Versorgungseinheit vorgesehen sein, die unter Verwendung der Funktionalität der Auswahleinheit mit jeweils einem Biosensor-Feld oder einem Teil der Biosensor-Felder (beispielsweise einer Spalte oder Zeile von Biosensor-Feldern) gekoppelt wird, um diesem Biosensor-Feld bzw. diesen Biosensor-Feldern das entsprechende elektrische Ansteuersignal bereitzustellen. Die Verwendung einer einzigen gemeinsamen ersten Versorgungseinheit bzw. einer einzigen gemeinsamen zweiten Versorgungseinheit verringert die Herstellungskosten des Biosensor-Arrays.

Die erste und die zweite Ansteuereinheit können derart eingerichtet sein, dass an zumindest einen Teil der nicht ausgewählten Biosensor-Felder ein elektrisches Referenzsignal anlegbar ist, dessen Wert im Wesentlichen der Mittelwert aus dem ersten und dem zweiten Ansteuersignal ist. An einem ausgewählten Biosensor-Feld können nur dann Redox-Recycling-Vorgänge stattfinden, wenn an dessen ersten Anschluss das erste Ansteuersignal und an dessen zweiten Anschluss das zweite Ansteuersignal mit vorzugsweise entgegengesetztem Vorzeichen angelegt wird, da das Auftreten von Redox-Recycling-Prozessen eine ausreichend große Potentialdifferenz zwischen den Anschlüssen erfordert. Indem als Referenzpotential für die nicht auszuwählenden Biosensor-Felder der arithmetische Mittelwert aus dem ersten und dem zweiten elektrischen Ansteuersignal verwendet wird (oder eine Spannung nahe dem arithmetischen Mittelwert), ist sichergestellt, dass an nicht ausgewählten Biosensor-Feldern unerwünschte Redox-Recycling-Prozesse vermieden sind. Mit anderen Worten wird an einen Anschluss oder an beide Anschlüsse eines nicht ausgewählten Biosensor-Felds häufig ein elektrisches Referenzpotential (z.B. das Massepotential) angelegt. Es ist jedoch auch möglich, dass zumindest ein nicht ausgewähltes Biosensor-Feld "floatet", d.h. dass die Anschlüsse dieses Biosensor-Felds nicht auf ein definiertes elektrisches Potential gebracht sind.
Die erste Ansteuereinheit kann für jeweils eine erste Gruppe von Biosensor-Feldern eine der jeweiligen Gruppe zugehörige erste Versorgungseinheit aufweisen, welche erste Versorgungseinheit derart eingerichtet ist, dass mit ihr an die Biosensor-Felder der zugehörigen ersten Gruppe das erste elektrische Ansteuersignal anlegbar ist, und/oder die zweite Ansteuereinheit kann für jeweils eine zweite Gruppe von Biosensor-Feldern eine der jeweiligen Gruppe zugehörige zweite Versorgungseinheit aufweisen, welche zweite Versorgungseinheit derart eingerichtet ist, dass mit ihr an die Biosensor-Felder der zugehörigen zweiten Gruppe das zweite elektrische Ansteuersignal anlegbar ist.

Beispielsweise kann bei einer matrixförmigen Anordnung der Biosensor-Felder für jede Spalte von Sensor-Feldern eine gemeinsame Spannungsquelle als den entlang einer Spalte angeordneten Biosensor-Feldern zugehörige Versorgungseinheit vorgesehen sein. Ferner kann für jede Zeile von Sensor-Feldern eine andere gemeinsame Spannungsquelle als den entlang der Zeile angeordneten Biosensor-Feldern zugehörige zweite Versorgungseinheit vorgesehen sein.

Die Ansteuereinheiten bzw. die Auswahleinheit können insbesondere derart eingerichtet sein, dass jeweils eine der Versorgungseinheiten der zugehörigen Gruppe von Biosensor-Feldern ein elektrisches Ansteuersignal bereitstellt, wohingegen die anderen Versorgungseinheiten den zugehörigen Biosensor-Feldern ein Referenzpotential, beispielsweise das elektrische Massepotential, bereitstellen.

Die erste Detektionseinheit kann eine für alle Biosensor-Felder gemeinsame erste Messeinheit (beispielsweise ein Amperemeter) aufweisen, welche erste Messeinheit derart eingerichtet ist, dass mit ihr an genau einem ausgewählten Biosensor-Feld das elektrische erste Detektionssignal erfassbar ist. Alternativ oder ergänzend kann die zweite Detektionseinheit eine für alle Biosensor-Felder gemeinsame zweite Messeinheit (beispielsweise ein Amperemeter) aufweisen, welche zweite Messeinheit derart eingerichtet ist, dass mit ihr an genau einem ausgewählten Biosensor-Feld das elektrische zweite Detektionssignal erfassbar ist.

Die erste Detektionseinheit kann für jeweils eine dritte Gruppe von Biosensor-Feldern eine der jeweiligen dritten Gruppe zugehörige erste Messeinheit aufweisen, wobei jede der ersten Messeinheiten derart eingerichtet ist, dass mit ihr an genau einem ausgewählten Biosensor-Feld der zugehörigen dritten Gruppe das elektrische erste Detektionssignal erfassbar ist.

Ferner kann die zweite Detektionseinheit für jeweils eine vierte Gruppe von Biosensor-Feldern eine der jeweiligen vierten Gruppe zugehörige zweite Messeinheit aufweisen, wobei jede der zweiten Messeinheiten derart eingerichtet ist, dass mit ihr an genau einem ausgewählten Biosensor-Feld der zugehörigen vierten Gruppe das elektrische zweite Detektionssignal erfassbar ist.

Ferner kann das erfindungsgemäße Biosensor-Array eine Potentiostat-Einrichtung aufweisen, die derart eingerichtet ist, dass mit ihr zumindest einem Teil der Biosensor-Felder ein konstantes elektrisches Potential vorgebbar ist.

Insbesondere kann die Potentiostat-Einrichtung eine Referenzelektrode, eine Gegenelektrode und einen Operationsverstärker aufweisen, wobei ein erster Eingang des Operationsverstärkers mit der Referenzelektrode, ein zweiter Eingang des Operationsverstärkers mit einem Referenzpotential (beispielsweise dem elektrischen Massepotential) und ein Ausgang des Operationsverstärkers mit der Gegenelektrode gekoppelt ist.

Ferner kann für jede Zeile von Biosensor-Feldern eine jeweils eigene erste Gleichspannungsquelle und kann für jede Spalte von Biosensor-Feldern eine jeweils eigene zweite Gleichspannungsquelle bereitgestellt sein. Darüber hinaus kann für jede Zeile von Biosensor-Feldern eine jeweils eigene erste Stromerfasseinheit und kann für jede Spalte von Biosensor-Feldern eine jeweils eigene zweite Stromerfasseinheit bereitgestellt sein. Dann können simultan für alle Biosensor-Felder gemeinsam die Sensorereignisse erfasst werden, indem in allen Zeilen und Spalten Summenströme erfasst werden. Unter Verwendung einer geeigneten Korrelationsrechnung kann aus korrelierten Zeilen- und Spaltenströmen auf die einzelnen Sensorsignale der einzelnen Biosensor-Felder rückgerechnet werden. Dies funktioniert besonders gut, wenn in einem bestimmten Betriebszustand nur sehr wenige oder gar nur ein einziges Biosensor-Feld ein Sensorsignal aufweist. In letzterem Fall ist im Wesentlichen nur in einer Zeilenleitung und in einer Spaltenleitung ein elektrischer Strom erfassbar, so dass auf ein Sensorereignis in dem Biosensor-Feld in dem Kreuzungsbereich der Zeilenleitung mit der Spaltenleitung geschlossen werden kann.

Im Weiteren wird das erfindungsgemäße Verfahren zum Betreiben des erfindungsgemäßen Biosensor-Arrays beschrieben. Ausgestaltungen des Biosensor-Arrays gelten auch für das Verfahren zum Betreiben des erfindungsgemäßen Biosensor-Arrays.

Vorzugsweise wird für das mindestens eine ausgewählte Biosensor-Feld basierend auf dem ersten und/oder dem zweiten Detektionssignal ermittelt, ob an dem mindestens einen ausgewählten Biosensor-Feld Sensorereignisse erfolgt sind und/oder in welcher Quantität an dem mindestens einen ausgewählten Biosensor-Feld Sensorereignisse erfolgt sind.

Sind beispielsweise die Biosensor-Felder als Redox-Recycling-Biosensor-Felder ausgestaltet, und ist als erstes Ansteuersignal eine erste Gleichspannung und als zweites Ansteuersignal eine zweite Gleichspannung mit bezüglich der ersten Gleichspannung inversem Vorzeichen gewählt, so kann ein an einem ausgewählten Redox-Recycling-Biosensor-Feld erfolgtes Hybridisierungsereignis dadurch nachgewiesen werden, dass Redox-Recycling-Prozesse an dem ausgewählten Redox-Recycling-Biosensor-Feld aufgrund der zwischen den Elektroden dieses Biosensor-Feldes angelegten ausreichend starken Spannung generiert werden. Dies wird mittels Erfassens eines elektrischen Stroms auf einer der Signalleitungen oder auf beiden Signalleitungen erfasst, wobei der Wert und die Zeitabhängigkeit des Stroms Information darüber liefert, ob an dem ausgewählten Biosensor-Feld ein Sensorereignis erfolgt ist bzw. in welcher Menge dort Sensorereignisse erfolgt sind. Dadurch kann ermittelt werden, ob in einem zu untersuchenden Analyten zu erfassende Partikel enthalten sind, und ggf. in welcher Konzentration die zu erfassenden Partikel in dem Analyten enthalten sind.

Ausführungsbeispiele der Erfindung sind in den Figuren dargestellt und werden im Weiteren näher erläutert.

Es zeigen:
- Figuren 1A, 1B: eine Draufsicht und eine Querschnittsansicht entlang der Schnittlinie I-I' einer Interdigitalelektroden-Anordnung gemäß dem Stand der Technik,
- Figur 1C: eine andere Interdigitalelektroden-Anordnung gemäß dem Stand der Technik,
- Figuren 2A, 2B: Querschnittsansichten eines ersten Teilbereichs der in Figur 1 gezeigten Interdigitalelektroden-Anordnung zu unterschiedlichen Zeitpunkten während eines Verfahrens zum Betreiben der Interdigitalelektroden-Anordnung gemäß dem Stand der Technik,
- Figur 3: eine Querschnittsansicht eines zweiten Teilbereichs der in Figur 1 gezeigten Interdigitalelektroden-Anordnung gemäß dem Stand der Technik,
- Figur 4: ein Ersatzschaltbild des ersten Teilbereichs der Interdigitalelektroden-Anordnung aus Figur 1 gemäß dem Stand der Technik,
- Figuren: 5A, 5B Ersatzschaltbilder des ersten Teilbereichs der in Figur 1 gezeigten Interdigitalelektroden-Anordnung gemäß dem Stand der Technik,
- Figur 6: ein Biosehsor-Array gemäß einem ersten Ausführungsbeispiel der Erfindung,
- Figur 7: ein Biosensor-Array gemäß einem zweiten Ausführungsbeispiel der Erfindung,
- Figur 8: ein Ersatzschaltbild des in Figur 7 gezeigten Biosensor-Arrays,
- Figur 9: ein vereinfachtes Ersatzschaltbild des in Figur 7 gezeigten Biosensor-Arrays,
- Figur 10: ein Biosensor-Array gemäß einem dritten Ausführungsbeispiel der Erfindung,
- Figur 11: ein Biosensor-Array gemäß einem vierten Ausführungsbeispiel der Erfindung,
- Figur 12: ein Biosensor-Array gemäß einem fünften Ausführungsbeispiel der Erfindung,
- Figur 13: eine schematische Draufsicht eines Kreuzungsbereichs von drei Signalleitungen gemäß dem in Figur 12 gezeigten Biosensor-Array,
- Figur 14: ein Sensor-Array gemäß einem sechsten Ausführungsbeispiel der Erfindung,
- Figur 15A bis Figur 15C: Querschnitts-Ansichten eines Redox-Recycling-Biosensor-Felds des in Figur 14 gezeigten Biosensor-Arrays in unterschiedlichen Betriebszuständen,
- Figur 16: ein Biosensor-Array gemäß einem siebten Ausführungsbeispiel der Erfindung,
- Figur 17: ein Biosensor-Array gemäß einem achten Ausführungsbeispiel der Erfindung,
- Figur 18: ein Biosensor-Array gemäß einem neunten Ausführungsbeispiel der Erfindung,
- Figur 19: ein Biosensor-Array gemäß einem zehnten Ausführungsbeispiel der Erfindung,
- Figur 20: ein Biosensor-Array gemäß einem elften Ausführungsbeispiel der Erfindung,
- Figur 21: ein Biosensor-Array gemäß einem zwölften Ausführungsbeispiel der Erfindung,
- Figur 22: ein Biosensor-Array gemäß einem dreizehnten Ausführungsbeispiel der Erfindung,
- Figur 23: eine schematische Draufsicht eines Kreuzungsbereichs von drei Signalleitungen gemäß dem in Fig.22 gezeigten Biosensor-Array.

In unterschiedlichen Ausführungsbeispielen sind gleiche Komponenten mit gleichen Bezugszeichen versehen.

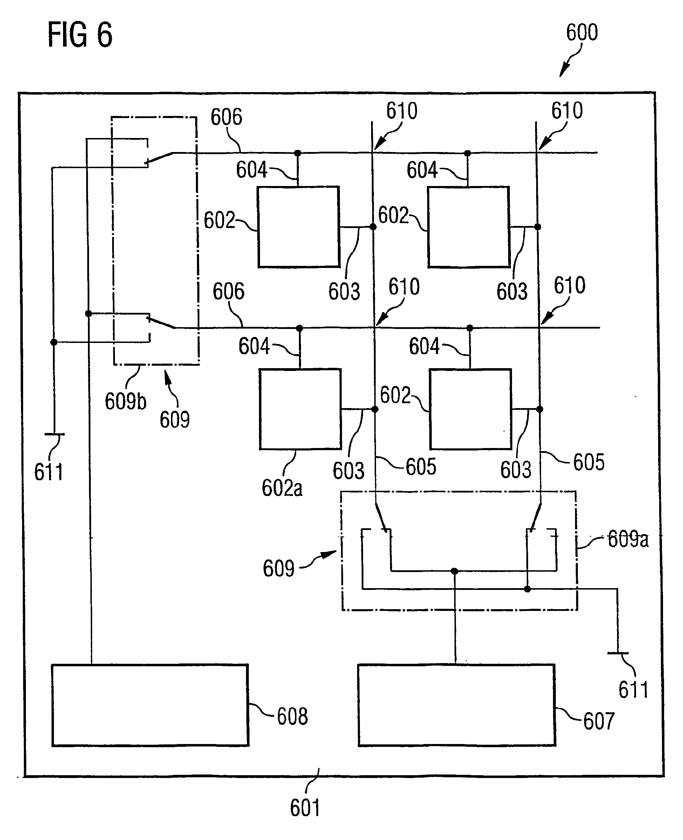

Im Weiteren wird bezugnehmend auf **Fig.6** ein Biosensor-Array 600 gemäß einem ersten Ausführungsbeispiel der Erfindung beschrieben.

Das Biosensor-Array 600 weist ein Silizium-Substrat 601 und vier Impedanz-Biosensor-Felder 602 auf, die auf dem Silizium-Substrat 601 matrixförmig angeordnet sind. Jedes der Impedanz-Biosensor-Felder 602 weist einen ersten Anschluss 603 und einen zweiten Anschluss 604 auf. Ferner enthält das Biosensor-Array 600 zwei Ansteuerleitungen 605 und zwei Detektionsleitungen 606, wobei die Ansteuerleitungen 605 von den Detektionsleitungen 606 (insbesondere in Kreuzungsbereichen 610) elektrisch isoliert sind. Jeweils der erste Anschluss 603 eines jeden Impedanz-Biosensor-Felds 602 ist mit jeweils genau einer der beiden Ansteuerleitungen 605 gekoppelt. Jeweils der zweite Anschluss 604 eines jeden Impedanz-Biosensor-Felds 602 ist mit genau einer der beiden Detektionsleitungen 606 gekoppelt. Mit anderen Worten ist jeweils eine der beiden Ansteuerleitungen 605 für die in der zugehörigen Spalte angeordneten Impedanz-Biosensor-Felder 602 gemeinsam vorgesehen. Dadurch sind insgesamt vier Signalleitungen 605, 606 erforderlich, um die vier Impedanz-Biosensor-Felder 602 elektrisch zu kontaktieren. Ferner enthält das Biosensor-Array eine Ansteuereinheit 607 zum Bereitstellen eines elektrischen Ansteuersignals und eine Detektionseinheit 608 zum Erfassen eines aus dem elektrischen Ansteuersignal resultierenden elektrischen Detektionssignals.

Eine Auswahleinheit 609 ist derart eingerichtet, dass sie die Ansteuereinheit 607 mit der Ansteuerleitung 605 eines auszuwählenden Impedanz-Biosensor-Felds 602a und die Detektionseinheit 608 mit der Detektionsleitung 606 des auszuwählenden Impedanz-Biosensor-Felds 602a koppelt, womit das Impedanz-Biosensor-Feld 602a ausgewählt wird. Mittels der Auswahleinheit 609, die in Fig.6 schematisch durch eine erste Schalteinrichtung 609a und eine zweite Schalteinrichtung 609b symbolisiert ist, wird gemäß dem beschriebenen Ausführungsbeispiel jeweils genau eines der Impedanz-Biosensor-Felder 602 ausgewählt, indem die Auswahleinheit 609 das ausgewählte Biosensor-Feld, gemäß dem in Fig.6 gezeigten Szenario das Biosensor-Feld 602a, mit der Ansteuereinheit 607 und mit der Detektionseinheit 608 derart koppelt, dass an das ausgewählte Impedanz-Biosensor-Feld 602a mittels der Ansteuereinheit 607 ein elektrisches Ansteuersignal angelegt wird, und dass an dem ausgewählten Impedanz-Biosensor-Feld 602a mittels der Detektionseinheit 608 ein aus dem elektrischen Ansteuersignal resultierendes elektrisches Detektionssignal erfassbar ist. Bei dem Biosensor-Array-600 kann mittels Umschaltens des Schalters der ersten Schalteinrichtung 609a die Ansteuereinheit 607 mit der gemäß Fig.6 linken Ansteuerleitung 605 und/oder mit der gemäß Fig.6 rechten Ansteuerleitung 605 gekoppelt werden. Ferner kann mittels der zweiten Schalteinrichtung 609b die Detektionseinheit 608 mit der gemäß Fig.6 oberen und/oder mit der gemäß Fig.6 unteren Detektionsleitung gekoppelt werden. Ferner kann mittels der Schalteinrichtungen 609a, 609b mindestens eine Ansteuerleitung 605 auf elektrisches Massepotential 611 gebracht sein, und/oder es kann mindestens eine Detektionsleitung 606 auf elektrisches Massepotential 611 gebracht sein. Gemäß der Schalterstellungen der Schalter der Schalteinrichtungen 609a, 609b in dem in Fig.6 gezeigten Betriebszustand ist die rechte Ansteuerleitung 605 und ist die obere Detektionsleitung 606 auf Massepotential 611.

Es ist anzumerken, dass aufgrund der Funktionalität der Auswahleinheit 609 die Schalterstellung der ersten und zweiten Schalteinrichtung 609a, 609b umgelegt bzw. gesteuert werden kann.

Gemäß dem in Fig.6 gezeigten Szenario ist die Schalterstellung der ersten Schalteinrichtung 609a so gewählt, dass die Ansteuereinheit 607 den beiden gemäß Fig.6 linken Impedanz-Biosensor-Feldern 602, 602a das elektrische Ansteuersignal bereitstellt. Ferner ist gemäß dem in Fig.6 gezeigten Szenario die Schalterstellung der zweiten Schaltereinrichtung 609b derart gewählt, dass die Detektionseinheit 608 mit den beiden gemäß Fig.6 unteren Impedanz-Biosensor-Feldern 602a, 602 gekoppelt ist. Nur das ausgewählte Impedanz-Biosensor-Feld 602a ist sowohl mit der Ansteuereinheit 607 als auch mit der Detektionseinheit 608 gekoppelt und ist daher ausgewählt. Somit wird dem ausgewählten Impedanz-Biosensor-Feld 602a mittels der Ansteuereinheit 607 das elektrische Ansteuersignal bereitgestellt, und mittels der Detektionseinheit 608 wird ein aus dem elektrischen Ansteuersignal resultierendes elektrisches Detektionssignal des ausgewählten Impedanz-Biosensor-Felds 602a detektiert.

Gemäß dem in Fig.6 gezeigten Ausführungsbeispiel der Erfindung sind die Biosensor-Felder als Impedanz-Biosensor-Felder realisiert. Insbesondere ist jedes der Impedanz-Biosensor-Felder 602 ausgestaltet wie die bezugnehmend auf Fig.1A bis Fig.5B beschriebene Interdigitalelektroden-Anordnung 100. Der erste Anschluss 603 ist mit der ersten Elektrodenstruktur 102 gekoppelt, und der zweite Anschluss 604 ist mit der zweiten Elektrodenstruktur 103 gekoppelt. Das elektrische Ansteuersignal ist eine Wechselspannung, die von der Ansteuereinheit 607 generiert und bereitgestellt wird. Aufgrund dieser Wechselspannung wird ein Wechselstrom in dem ausgewählten Impedanz-Biosensor-Feld 602a generiert, der mittels eines Amperemeters der Detektionseinheit 608 erfasst wird. Aus den Werten der Wechselspannung und des Wechselstroms kann der Wert der Impedanz bestimmt werden. Dieser ändert sich, wie oben beschrieben, infolge eines Hybridisierungsereignisses an einem Impedanz-Biosensor-Feld 602 signifikant, so dass mittels Erfassens des Werts der Impedanz vor und nach einem Hybridisierungsereignis (d.h. vor bzw. nach Einfüllen eines möglicherweise zu erfassende Partikel aufweisenden Analyten in das Biosensor-Array 600) das Auftreten von Hybridisierungsereignissen qualitativ bzw. quantitativ ermittelt werden kann.

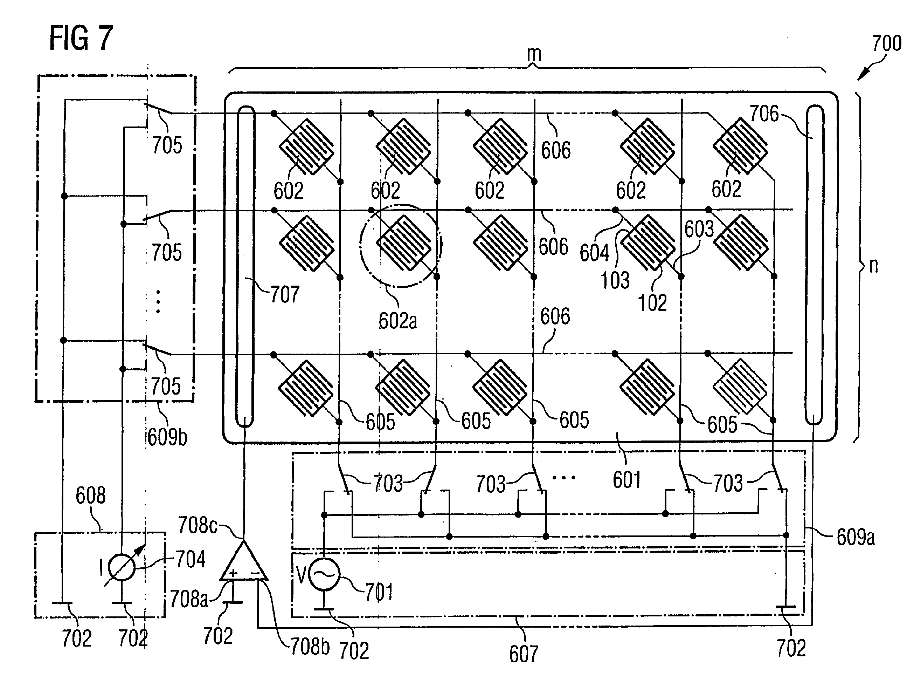

Im Weiteren wird bezugnehmend auf **Fig.7** ein Biosensor-Array 700 gemäß einem zweiten Ausführungsbeispiel der Erfindung beschrieben.

Bei dem Biosensor-Array 700 ist eine Vielzahl von Impedanz-Biosensor-Feldern 602 matrixförmig auf einem Silizium-Substrat 601 angeordnet. Das Biosensor-Array 700 weist n Zeilen und m Spalten von matrixförmig angeordneten Impedanz-Biosensor-Feldern 602 auf, das heißt m x n Impedanz-Biosensor-Felder. Ferner sind, wie in Fig.7 gezeigt, m Ansteuerleitungen 605 und n Detektionsleitungen 606 vorgesehen, das heißt, n + m Signalleitungen. Im Kreuzungsbereich jeweils einer Ansteuerleitung 605 mit jeweils einer Detektionsleitung 606 ist jeweils ein als Interdigitalelektroden-Anordnung ausgestaltetes Impedanz-Biosensor-Feld 602 angeordnet. Der Ansteuer-Schaltkreis 607 weist eine Wechselspannungsquelle 701 und einen weiteren Anschluss auf, an dem ein elektrisches Massepotential 702 bereitgestellt ist. Die erste Schalteinrichtung 609a weist m erste Schalter 703 auf, von denen jeder mit einer der Ansteuerleitungen 605 gekoppelt ist. Eine Spalte von Impedanz-Biosensor-Feldern 602 wird ausgewählt, indem die Impedanz-Biosensor-Felder 602 der Spalte mit der Wechselspannungsquelle 601 gekoppelt werden. Alle anderen Spalten von Impedanz-Sensorfeldern 602 sind aufgrund entsprechend gewählter Schalterstellungen der ersten Schalter 703 mit dem elektrischen Massepotential 702 gekoppelt, wie in Fig.7 gezeigt. Gemäß dem in Fig.7 gezeigten Szenario sind nur die Impedanz-Biosensor-Felder 602 in der zweiten Spalte von links mit der Wechselspannungsquelle 701 gekoppelt.

Die Detektionseinheit 608 weist eine Stromerfasseinheit 704 auf, und ist ferner derart eingerichtet, dass sie ein elektrisches Massepotential 702 bereitstellen kann. Wie in Fig.7 ferner gezeigt, ist die Detektionseinheit 608 mittels der zweiten Schalteinrichtung 609b mit den Detektionsleitungen 606 gekoppelt. Zweite Schalter 705 befinden sind jeweils in solchen Schalterstellung, dass mittels der zweiten Schalteinrichtung 609b genau eine der Detektionsleitungen 606 mit der Stromerfasseinrichtung 704 gekoppelt ist, wohingegen alle anderen Detektionsleitungen 606 auf elektrischem Massepotential 702 sind. Gemäß dem in Fig.7 gezeigten Szenario sind nur die Impedanz-Biosensor-Felder 602 in der zweiten Reihe von oben mit der Stromerfasseinrichtung 704 gekoppelt.

Somit ist gemäß dem in Fig.7 gezeigten Szenario nur das in der zweiten Zeile und der zweiten Spalte angeordnete Impedanz-Biosensor-Feld 602a ausgewählt. Gemäß dem in Fig.7 gezeigten Szenario ist mittels der Wechselspannungsquelle 701 an das Impedanz-Biosensor-Feld 602a eine elektrische Wechselspannung angelegt. Daraus resultiert ein elektrischer Wechselstrom, der von der Stromerfasseinrichtung 704 erfasst wird. Ändert sich infolge eines Hybridisierungsereignisses die Impedanz des Impedanz-Biosensor-Felds 602a, so führt dies zu einer Veränderung des Werts des Wechselstroms, der von der Stromerfasseinrichtung 704 erfasst wird. Dadurch kann ermittelt werden, ob an dem ausgewählten Impedanz-Biosensor-Feld 602a ein Sensorereignis erfolgt ist oder nicht.

Ferner weist das Biosensor-Array 700 eine Potentiostat-Einrichtung auf. Diese ist aufgebaut aus einer Referenzelektrode 706 auf dem Substrat 601, einer Gegenelektrode 707 auf dem Substrat 701, und einem Operationsverstärker 708, der außerhalb des Chips ("Off-Chip") angeordnet ist. Ein nichtinvertierender Eingang 708a des Operationsverstärkers 708 ist auf elektrischem Massepotential 702. Ein invertierender Eingang 708b ist, mit der Referenzelektrode 706 elektrisch gekoppelt, und ein Ausgang 708c des Operationsverstärkers 708 ist mit der Gegenelektrode 707 gekoppelt. Gemeinsam bilden diese Komponenten eine Potentiostat-Schaltung. Obwohl bei Impedanzsensoren bei sachgemäßem Betrieb vermieden werden kann, dass unerwünschte elektrochemische Umsätze an den Elektrodenstrukturen auftreten, kann die in Fig.7 gezeigte Konfiguration vorteilhaft genutzt werden, um einem Analyten, der in das Biosensor-Array 700 eingebracht ist, ein stabiles elektrochemisches Potential niederohmig zuzuweisen (vgl. [1] bis [4]). Die Konfiguration mit einer Potentiostat-Einrichtung ist insbesondere dann vorteilhaft, wenn die Biosensor-Felder als Redox-Recycling-Sensoren ausgeführt sind.

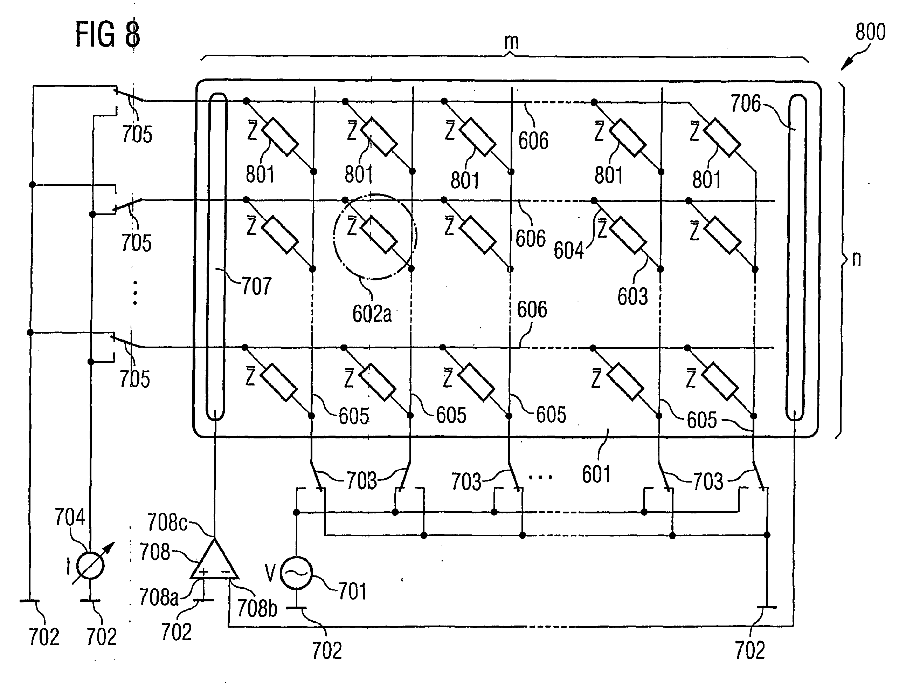

Im Weiteren wird bezugnehmend auf **Fig.8** ein Ersatzschaltbild 800 des in Fig.7 gezeigten Biosensor-Arrays beschrieben.

In Fig.8 sind die als Interdigitalelektroden-Anordnung ausgestalteten Impedanz-Biosensor-Felder 602 schaltungstechnisch durch eine Impedanz Z̅ 801 (eine komplexe Größe) ersetzt, da die als Interdigitalelektroden-Anordnung ausgestalteten Impedanz-Biosensor-Felder 602 einen ohmschen und einen kapazitiven Anteil der Impedanz enthalten.

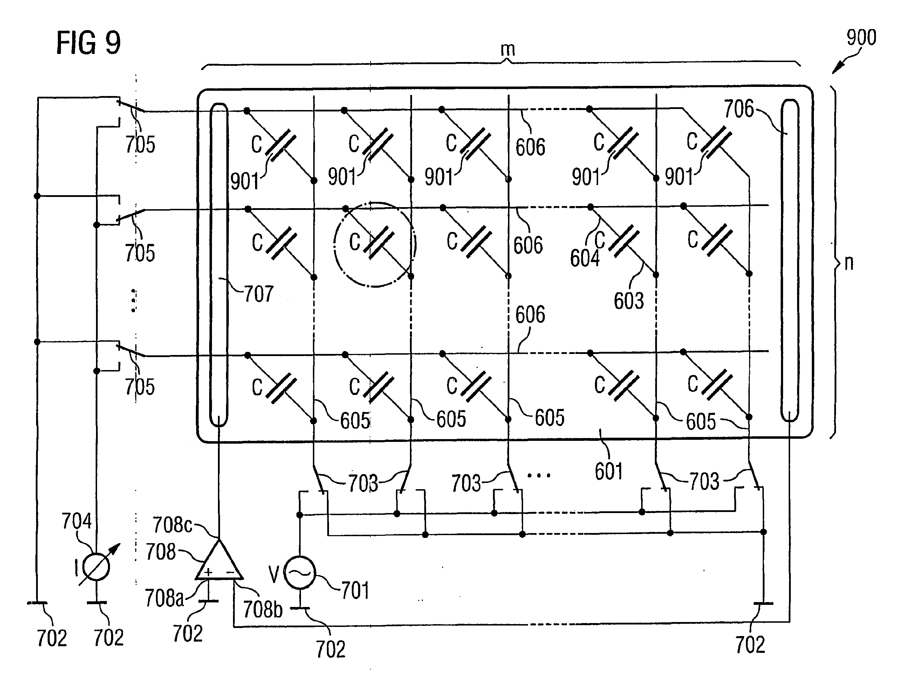

In **Fig.9** ist ein vereinfachtes Ersatzschaltbild 900 des Biosensor-Arrays 700 gezeigt, in dem die häufig in guter Näherung gültige Approximation verwendet ist, dass bei der Impedanz Z̅ von Impedanz-Biosensor-Feldern der kapazitive Anteil dominant über den ohmschen Anteil ist, so dass der ohmsche Anteil näherungsweise vernachlässigbar ist. Daher ist die Impedanz 801 aus Fig.8 in Fig.9 durch eine Kapazität C 901 angenähert. Dies entspricht in der Darstellung von Fig.5A, Fig.5B der Annahme, dass die parallel geschalteten Komponenten C_{M}, R_{M} derartige Werte aufweisen, dass R_{M} gegenüber C_{M} vernachlässigbar ist.

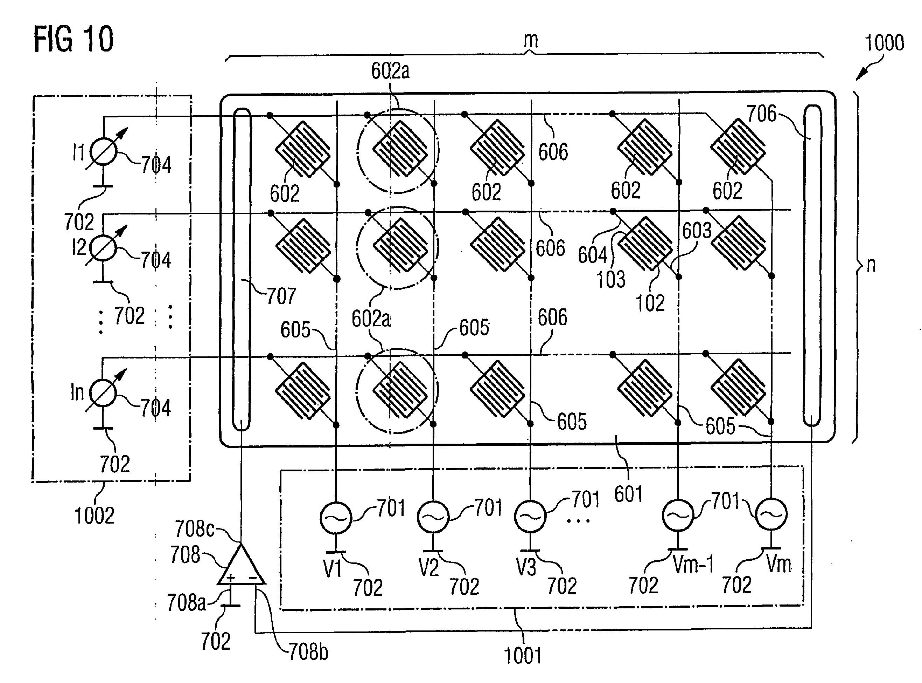

Im Weiteren wird bezugnehmend auf Fig.10 ein Biosensor-Array 1000 gemäß einem dritten Ausführungsbeispiel der Erfindung beschrieben.

Bei dem Biosensor-Array 1000 ist abweichend von dem Biosensor-Array 700 für jede Spalte von Impedanz-Biosensor-Feldern 602 eine separate Wechselspannungsquelle 701 (V1, V2,..., Vm-1, Vm) bereitgestellt. Ferner ist abweichend von dem Biosensor-Array 700 bei dem Biosensor-Array 1000 für jede Zeile von Impedanz-Biosensor-Feldern 602 eine separate Stromerfasseinrichtung 704 (I1, I2,..., In-1, In) bereitgestellt. Jede der Wechselspannungsquellen 701 kann der zugehörigen Spalte von Impedanz-Biosensor-Feldern 602 eine Wechselspannung bereitstellen, wobei in einem bestimmten Betriebszustand jeweils nur eine der Wechselspannungsquellen V1, V2...Vm-1, Vm eine Wechselspannung bereitstellt, wohingegen die anderen der Spannungsquellen inaktiv sind. Mit anderen Worten sind bis auf eine der Wechselspannungsquellen 701 alle anderen ausgeschaltet, so dass alle bis auf eine der Ansteuerleitungen 605 auf Massepotential 702 sind. Dieses Auswählen einer jeweils aktivierten Spannungsquelle 701 erfolgt mittels der Auswähleinheit, die gemäß dem in Fig.10 gezeigten Ausführungsbeispiel anschaulich einstückig mit der Ansteuereinheit ausgeführt ist. Mit anderen Worten wird die beschriebene Funktionalität von der Ansteuer-/Auswahl-Einheit 1001 wahrgenommen.

Gemäß dem in Fig.10 gezeigten Szenario sind alle in der zweiten Spalte angeordneten Impedanz-Biosensor-Felder 602a ausgewählt, da nur die Wechselspannungsquelle V2 eine Wechselspannung bereitstellt. Dagegen sind die Wechselspannungsquellen V1, V3, V4,...Vm-1, Vm deaktiviert, so dass die zugehörigen Ansteuerleitungen 605 auf elektrischem Massepotential 702 sind. Beim Betrieb des Biosensor-Arrays 1000 liefern alle bis auf genau eine Spannungsquelle (gemäß dem in Fig.10 vorliegenden Szenario V2) elektrisches Massepotential 701, wohingegen die Spannungsquelle V2 702 als Stimulus für die entsprechende Spalte von Impedanz Biosensor-Feldern 602a fungiert.

Da jede Zeile mit einer separaten Stromerfasseinrichtung 704 versehen ist, können bei dem Biosensor-Array 1000 die Zeilen zeitlich parallel ausgelesen werden. Beispielsweise kann mit der Stromerfasseinrichtung I1 das ausgewählte Impedanz-Biosensor-Feld 602a der ersten Zeile ausgelesen werden, es kann zeitlich parallel mit der Stromerfasseinrichtung 12 das ausgewählte Impedanz-Biosensor-Feld 602a der zweiten Zeile ausgelesen werden, etc.

Alternativ ist auch ein sequentieller Lesebetrieb möglich. In diesem Falle ist die Detektions-/Auswahl-Einheit 1002 derart eingerichtet, dass sie auswählt, welche der Stromerfasseinrichtungen I1, I2,...In einen aus der Wechselspannung (beispielsweise der Spannungsquelle V2) resultierenden Wechselstrom erfasst.

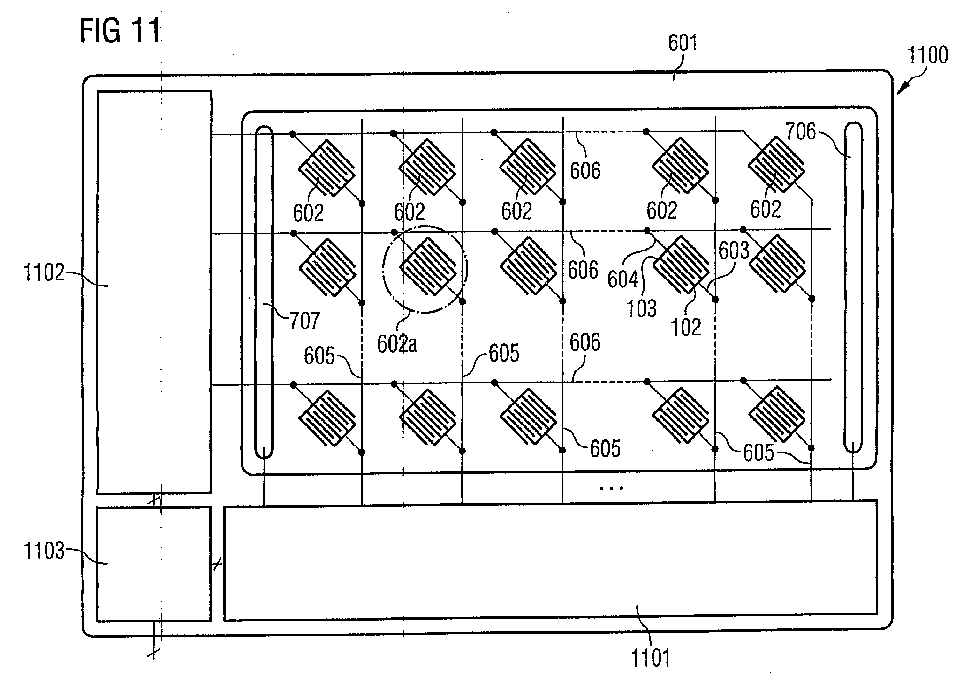

Im Weiteren wird bezugnehmend auf **Fig.11** ein Biosensor-Array 1100 gemäß einem vierten Ausführungsbeispiel der Erfindung beschrieben.

Das Biosensor-Array 1100 weist einen ersten Schaltungsblock 1101 und einen zweiten Schaltungsblock 1102 auf sowie eine Eingabe-/Ausgabe-Schnittstelle 1103, die mit den beiden Schaltungsblöcken 1102, 1103 gekoppelt ist. An der Eingabe-/Ausgabe-Schnittstelle kann ein Sensorsignal bereitgestellt sein, beispielsweise das elektrische Ansteuersignal und das elektrische Detektionssignal.

Das Biosensor-Array 1100 stellt einen sogenannten aktiven Chip dar. Darunter wird ein Halbleiter-Substrat verstanden, in das monolithisch Schaltkreise integriert sind, die unterschiedliche Funktionen aufweisen können. Insbesondere sind die Komponenten Spannungsquellen 701, Operationsverstärker 708 und Teile der Auswähleinheit 709 in dem ersten Schaltungsblock 1101 integriert, und es sind andere Komponenten wie die Stromerfassungseinrichtung 704, andere Teile der Auswahleinheit 609, etc. in dem zweiten Schaltungsblock 1102 integriert. Ferner sind weitere Komponenten für die Signal-Vorverarbeitung und SignalWeiterverarbeitung in den Schaltungsblöcken 1101, 1102 "On - Chip" realisiert. Ferner weist der Chip des Biosensor-Arrays 1100 eine definierte, gemäß den Bedürfnissen der jeweiligen Anwendung konfigurierte (z.B. digitale) Schnittstelle 1103 (I/O) auf.

Die Verwendung der erfindungsgemäßen Architektur auf aktiven Chips kann beispielsweise von Vorteil sein, wenn eine große Anzahl relativ kleinflächiger Interdigitalstrukturen - verwendet wird, deren Fläche es nicht mehr erlaubt, unterhalb eines jeden Sensors eine aktive Schaltung zum Steuern des jeweiligen Sensors zu realisieren. Ferner ergeben sich besondere Vorteile, wenn die Anforderungen an die Leistungsfähigkeit der On-Chip realisierten Schaltungen sehr groß ist. Letzteres gilt insbesondere dann, wenn die Fläche eines Sensorelements maßgeblichen Einfluss auf die Leistungsfähigkeit (beispielsweise das Rauschen) hat.

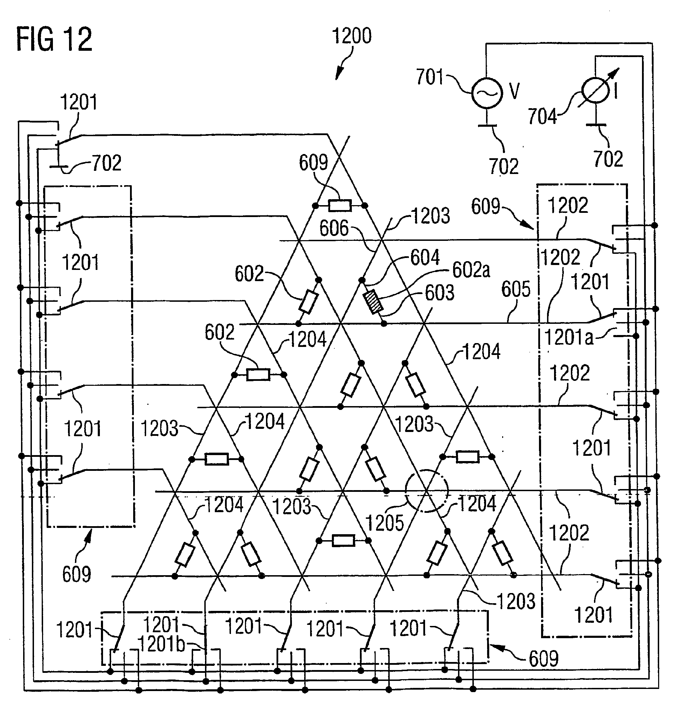

Im Weiteren wird bezugnehmend auf **Fig.12** ein Biosensor-Array 1200 gemäß einem fünften Ausführungsbeispiel der Erfindung beschrieben.

Das Biosensor-Array 1200 ist eine Anordnung von Impedanz-Biosensor-Feldern 602, die als Dreiecksmatrix mit drei Verdrahtungsrichtungen vorgesehen ist. Ferner ist eine gemeinsame Wechselspannungsquelle 701 als Ansteuereinheit und eine gemeinsame Stromerfasseinrichtung 704 als Detektionseinheit vorgesehen. Die Auswahleinheit 609 ist mittels einer Vielzahl von Schaltern 1201 mit steuerbaren Schalterstellungen symbolisiert. Die Schalterstellungen sind mittels der Auswahleinheit 609 steuerbar. Ferner sind in Fig.12 erste Signalleitungen 1202, zweite Signalleitungen 1203 und dritte Signalleitungen 1204 derart verlaufend angeordnet, dass in (voneinander elektrisch isolierten) Kreuzungsbereichen der Signalleitungen 1202 bis 1204 sich diese in 60°-Winkeln überkreuzen. Insbesondere ist in Fig.12 ein ausgewähltes Impedanz-Biosensor-Feld 602a gezeigt, das infolge der in Fig.12 gezeigten Schalterstellungen der Schalter 1201 ausgewählt ist. Ein erster Schalter 1201a ist in einer derartigen Schalterstellung, dass der erste Anschluss 603 des ausgewählten Impedanz-Biosensor-Feldes 602a mit der Wechselspannungsquelle 701 gekoppelt ist. Ferner ist ein zweiter Schalter 1201b in einer derartigen Schalterstellung, dass der zweite Anschluss 604 des ausgewählten Impedanz-Biosensor-Feldes 602a mit der Stromerfasseinrichtung 704 gekoppelt ist. Die Schalterstellungen aller anderen Schalter 1200 sind derart, dass die an diese anderen Schalter 1200 angrenzenden ersten, zweiten bzw. dritten Signalleitungen 1202 bis 1204 auf elektrischem Massepotential 702 sind. Mit anderen Worten ist gemäß dem in Fig.12 gezeigten Szenario das ausgewählte Impedanz-Biosensor-Feld 602a das einzige der Impedanz-Biosensor-Felder 602, das sowohl mit der Wechselspannungsquelle 701 als auch mit der Stromerfasseinrichtung 704 gekoppelt ist. Gemäß dem in Fig.12 gezeigten Szenario fungiert die an das ausgewählte Impedanz-Biosensor-Feld 602a angeschlossene ersten Signalleitung 1202 als Ansteuerleitung 605, die an das ausgewählte Impedanz-Biosensor-Feld 602a angeschlossene zweite Signalleitung 1203 fungiert als Detektionsleitung 606. Jeder der Schalter 1201 weist drei Schalterstellungen auf, so dass die jeweils zugehörige Signalleitung 1202 bis 1204 wahlweise mit dem elektrischen Massepotential 702, der Wechselspannungsquelle 701 oder der Stromerfasseinrichtung 704 gekoppelt werden kann. Dadurch ist eine unabhängige Messung auf jeder Position der Impedanz-Biosensor-Felder 602 möglich.

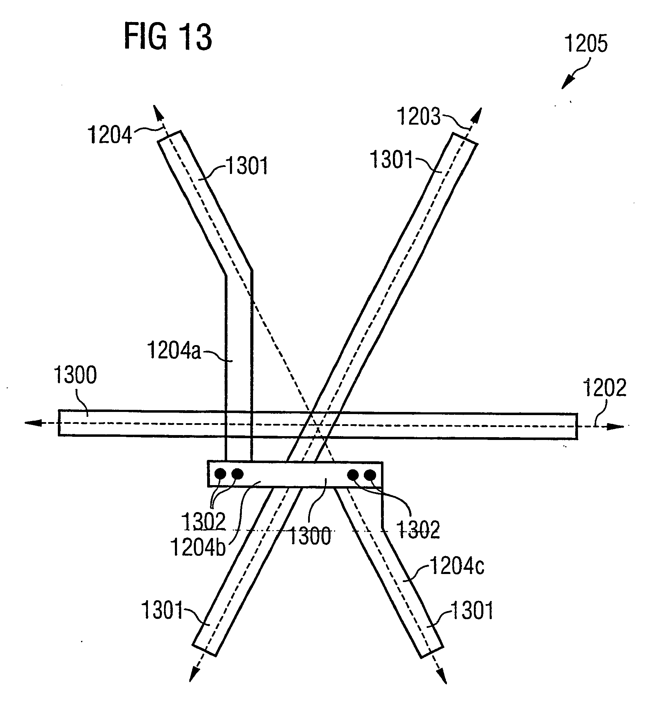

Im Weiteren wird bezugnehmend auf **Fig.13** beschrieben, wie ein Kreuzungsbereich 1205 zwischen einer der ersten Signalleitungen 1202, einer der zweiten Signalleitungen 1203 und einer der dritten Signalleitungen 1204 unter Verwendung von nur zwei Verdrahtungsebenen realisiert sein kann.

Hierfür ist in Fig.13 eine erste Metallisierungsebene 1300 und ist eine zweite Metallisierungsebene 1301 in Draufsicht gezeigt. Die erste Metallisierungsebene 1300 ist in einer Richtung senkrecht zu der Papierebene von Fig.13 gegenüber der zweiten Metallisierungsebene 1301 verschoben, d.h. die Papierebene von Fig.13 ist parallel zu der Oberfläche des Biosensor-Arrays 1200. In dem Kreuzungsbereich 1205 treffen sich eine der ersten Signalleitungen 1202, die vollständig in der ersten Metallisierungsebene 1300 vorgesehen ist, eine der zweiten Signalleitungen 1203, die vollständig in der zweiten Metallisierungsebene 1301 vorgesehen ist und eine der dritten Signalleitungen 1204, die, wie in Fig.13 gezeigt, zum Teil in der ersten Metallisierungsebene 1300 und zu einem anderen Teil in der zweiten Metallisierungsebene 1301 vorgesehen ist. Um in dem Kreuzungsbereich 1205 eine elektrische Isolation der Signalleitungen 1202 bis 1204 voneinander zu ermöglichen, ist die dritte Signalleitung 1204 in Fig.13 in einen ersten Abschnitt 1204a, einen zweiten Abschnitt 1204b und einen dritten Abschnitt 1204c aufgeteilt. Der erste und der dritte Abschnitt 1204a, 1204c verlaufen in der zweiten Metallisierungsebene 1301, wohingegen der zweite Abschnitt 1204b in der ersten Metallisierungsebene 1300 verläuft. Mittels vertikaler Kontaktierungselemente 1302, die senkrecht zu der Papierebene von Fig.13 verlaufend angeordnet sind, ist der erste Abschnitt 1204 mit dem zweiten Abschnitt 1204b bzw. der zweite Abschnitt 1204b mit dem dritten Abschnitt 1204c der dritten Signalleitung 1204 gekoppelt. Dadurch ist unter Verwendung von nur zwei Metallisierungsebenen ermöglicht, dass drei Signalleitungen 1202 bis 1204 einander überkreuzen, ohne dass die elektrische Isolation unterbrochen wird.

In diesem Zusammenhang ist anzumerken, dass eine matrixförmige Anordnung mit drei (oder mehr) Verdrahtungsrichtungen nicht notwendigerweise mit drei (oder mehr) unabhängigen Verdrahtungsebenen realisiert sein muss. Zwei Verdrahtungsebenen sind in jedem Falle hinreichend, wie in Fig.13 schematisch gezeigt.

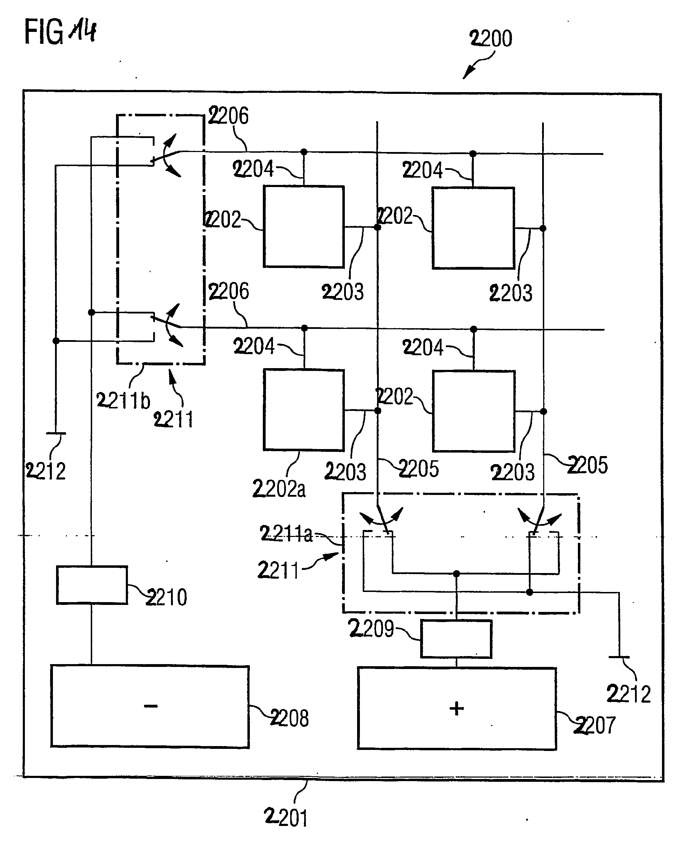

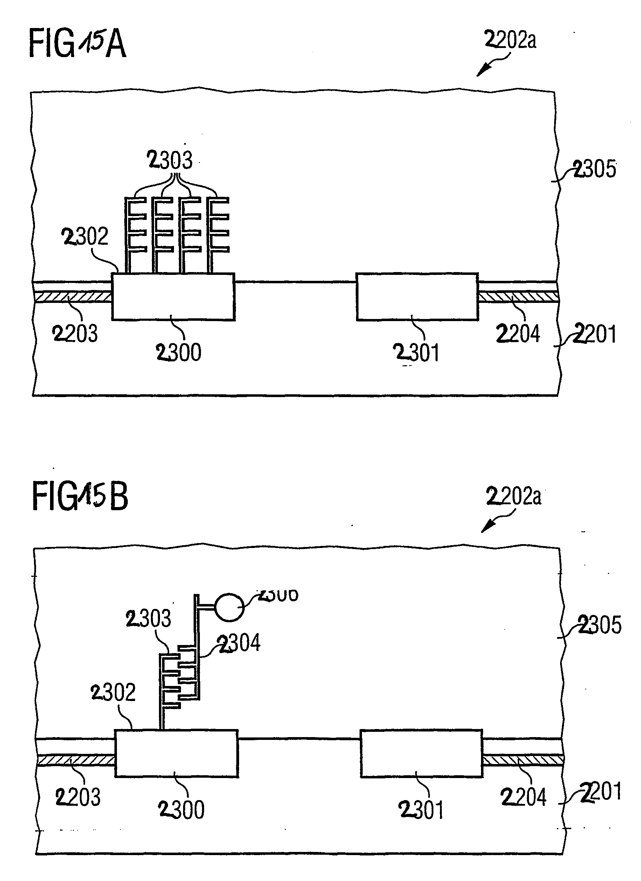

Im Weiteren wird bezugnehmend auf **Fig.14** ein Redox-Recycling-Biosensor-Array 2200 gemäß einem sechsten Ausführungsbeispiel der Erfindung beschrieben.

Das Redox-Recycling-Biosensor-Array 2200 weist ein Silizium-Substrat 2201 und vier matrixförmig auf dem Silizium-Substrat 2201 angeordnete Redox-Recycling-Biosensor-Felder 2202 auf, von denen jedes einen ersten Anschluss 2203 und einen zweiten Anschluss 2204 aufweist. Ferner sind zwei erste Signalleitungen 2205 und zwei zweite Signalleitungen 2206 vorgesehen, wobei die ersten Signalleitungen 2205 von den zweiten Signalleitungen 2206 elektrisch isoliert sind. Jeweils der erste Anschluss 2203 eines jeden Redox-Recycling-Biosensor-Felds 2202 ist mit genau einer der mindestens einen ersten Signalleitung 2205 gekoppelt und der zweite Anschluss 2204 eines jeden Redox-Recycling-Biosensor-Felds.2202 ist mit genau einer der mindestens einen zweiten Signalleitung 2206 gekoppelt. Wie in Fig.14 gezeigt, ist jede der ersten Signalleitungen 2205 mit zwei der Redox-Recycling-Biosensor-Felder 2202 gekoppelt, und es ist jede zweite Signalleitung 2206 mit ebenfalls zwei der Redox-Recycling-Biosensor-Felder 2202 gekoppelt. Ferner ist eine erste Ansteuereinheit 2207 zum Bereitstellen eines ersten elektrischen Ansteuersignals und eine zweite Ansteuereinheit 2208 zum Bereitstellen eines zweiten elektrischen Ansteuersignals vorgesehen. Darüber hinaus ist eine mit der ersten Ansteuereinheit 2207 gekoppelte erste Detektionseinheit 2209 und eine mit der zweiten Ansteuereinheit 2208 gekoppelte zweite Detektionseinheit 2210 bereitgestellt, die derart eingerichtet sind, dass sie ein aus dem ersten und dem zweiten Ansteuersignal resultierendes erstes und zweites elektrisches Detektionssignal eines ausgewählten Biosensor-Felds erfassen. Ferner ist eine Auswahleinheit 2211 bereitgestellt, die derart eingerichtet ist, dass sie die erste Ansteuereinheit 2207 mit der ersten Signalleitung 2205 eines auszuwählenden Redox-Recycling-Biosensor-Felds 2202a und die zweite Ansteuereinheit 2208 mit der zweiten Signalleitung 2206 des auszuwählenden Redox-Recycling-Biosensor-Felds 2202a koppelt, womit das Redox-Recycling-Biosensor-Feld 2202a ausgewählt wird. Mittels der Auswahleinheit 2211, die in Fig.14 schematisch durch eine erste Schalteinrichtung 2211a und eine zweite Schalteinrichtung 2211b symbolisiert ist, wird gemäß dem beschriebenen Ausführungsbeispiel jeweils genau eines der Redox-Recycling-Biosensor-Felder 2202 ausgewählt. Hierfür wird mittels der Auswahleinheit 2211 das auszuwählende Biosensor-Feld, gemäß dem in Fig.14 gezeigten Szenario das Redox-Recycling-Biosensor-Felds 2202a, mit der ersten Ansteuereinheit 2207 und mit der zweiten Ansteuereinheit 2208 derart gekoppelt, dass an das ausgewählte Redox-Recycling-Biosensor-Feld 2202a mittels der ersten Ansteuereinheit 2207 ein erstes elektrisches Ansteuersignal angelegt wird, und dass an das ausgewählte Redox-Recycling-Biosensor-Feld 2202a mittels der zweiten Ansteuereinheit ein zweites Ansteuersignal angelegt wird. Die erste Schalteinrichtung 2211a weist für jede erste Signalleitung 2205 einen zugehörigen Schalter auf, der zwischen zwei Stellungen geschaltet werden kann, wobei gemäß einer ersten Schalterstellung die zugehörige erste Signalleitung mit der ersten Ansteuereinheit 2209 gekoppelt ist, und wobei gemäß einer zweiten Schalterstellung die jeweilige erste Signalleitung 2205 auf elektrischem Massepotential 2212 liegt. Analog weist die zweite Schalteinrichtung 2211b für jede zweite Zeilenleitüng 2206 einen Schalter auf, der in einer von zwei möglichen Schalterstellungen vorliegen kann. Gemäß einer ersten Schalterstellung ist die zugehörige zweite Signalleitung 2206 mit der zweiten Ansteuereinheit 2208 gekoppelt, gemäß einer zweiten Schalterstellung liegt die jeweilige zweite Signalleitung 2206 auf elektrischem Massepotential 2212. Gemäß dem in Fig.14 gezeigten Szenario ist nur das gemäß Fig.14 linke untere Redox-Recycling-Biosensor-Feld 2202 ausgewählt, da gemäß den Schalterstellungen von Fig.14 nur dieses Sensor-Feld an dem ersten Anschluss 2203 mit der ersten Ansteuereinheit 2207 und an dem zweiten Anschluss 2204 mit der zweiten Ansteuereinheit 2208 gekoppelt ist. Mittels der ersten Ansteuereinheit 2207 wird an den ersten Anschluss 2203 des ausgewählten Redox-Recycling-Biosensor-Felds 2202a eine positive elektrische Spannung angelegt, und mittels der zweiten Ansteuereinheit 2208 wird an den zweiten Anschluss 2204 des ausgewählten Redox-Recycling-Biosensor-Felds 2202a eine negative elektrische Spannung angelegt. Daher ist die Potentialdifferenz zwischen den beiden Anschlüssen 2203, 2204 bei dem ausgewählten Redox-Recycling-Biosensor-Feld 2202a größer als bei den drei nicht ausgewählten Redox-Recycling-Biosensor-Feldern 2202. Bei letzteren ist jeweils einer der Anschlüsse 2203, 2204 auf elektrischem Massepotential 2212, und der andere Anschluss 2204, 2203 ist entweder auf dem von der ersten Ansteuereinheit 2207 bereitgestellten positiven elektrischen Potential oder auf dem von der zweiten Ansteuereinheit 2208 bereitgestellten negativen elektrischen Potential. Daher reicht nur bei dem ausgewählten Redox-Recycling-Biosensor-Feld 2202a die Potentialdifferenz zwischen den beiden Anschlüssen 2203, 2204 aus, um im Falle eines Hybridisierungsereignisses an dem ausgewählten Redox-Recycling-Biosensor-Feld 2202a elektrochemische Redox-Recycling-Prozesse in ausreichendem Maße zu generieren.

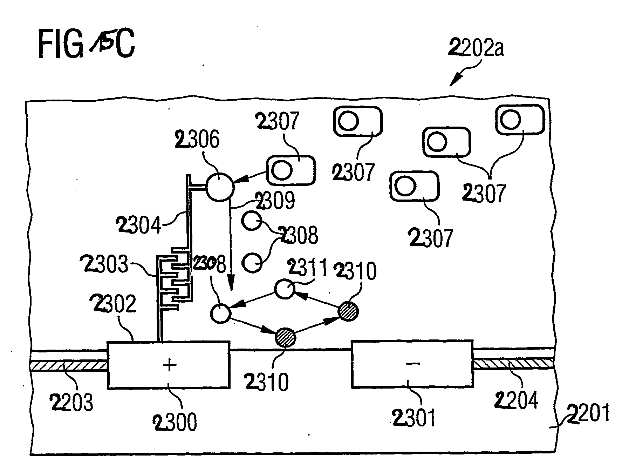

Im Weiteren wird bezugnehmend auf Fig. 15A bis Fig. 15C die Ausgestaltung eines der Redox-Recycling-Biosensor-Felder 2202, 2202a am Beispiel des ausgewählten Redox-Recycling-Biosensor-Felds 2202a beschrieben.

In **Fig.15A** ist das ausgewählte Redox-Recycling-Biosensor-Feld 2202a mit einer ersten Elektrode 2300 und einer zweiten Elektrode 2301 gezeigt, die in dem Silizium-Substrat 2201 integriert sind. Auf der ersten Elektrode 2300 ist ein Haltebereich 2302 aus Goldmaterial aufgebracht. Der Haltebereich 2302 dient zum Immobilisieren von DNA-Sondenmolekülen 2303 als Fängermoleküle auf der ersten Elektrode 2300. Auf der zweiten Elektrode 2301 ist ein solcher Haltebereich nicht vorgesehen.

Sollen mittels des Redox-Recycling-Biosensor-Felds 2202a DNA-Stränge 2304 mit einer Basensequenz, die komplementär ist zu der Sequenz der immobilisierten DNA-Sondenmoleküle 2303, erfasst werden, so wird das Redox-Recycling-Biosensor-Feld 2202a mit einer zu untersuchenden Lösung, nämlich einem Elektrolyt 2305, in Kontakt gebracht, derart, dass in der zu untersuchenden Lösung 2305 möglicherweise enthaltene DNA-Stränge 2304 mit einer zu der Sequenz der DNA-Sondenmoleküle 2303 komplementären Sequenz mit den DNA-Sondenmolekülen 2303 hybridisieren können.

In **Fig.15B** ist ein Szenario gezeigt, bei dem in der zu untersuchenden Lösung 2305 zu erfassende DNA-Stränge 2304 enthalten sind, von denen einer mit einem DNA-Sondenmolekül 2303 hybridisiert ist. Die DNA-Stränge 2304 in der zu untersuchenden Lösung sind mit einem Enzym-Label 2306 markiert, mit dem es möglich ist, im Weiteren beschriebene Moleküle in elektrochemisch aktivierte Teilmoleküle zu spalten. Üblicherweise ist eine erheblich größere Anzahl von DNA-Sondenmolekülen 2303 bereitgestellt, als zu erfassende DNA-Stränge 2304 in der zu untersuchenden Lösung 2305 enthalten sind.

Nachdem die in der zu untersuchenden Lösung 2305 enthaltene DNA-Stränge 2304 samt dem Enzym-Label 2306 mit den immobilisierten DNA-Sondenmolekülen 2303 hybridisiert sind, erfolgt vorzugsweise eine spezielle Spülung des Redox-Recycling-Biosensor-Felds 2202a. Bei dem Spülen können mit Fängermolekülen nicht hybridisierte DNA-Moleküle entfernt werden. Der zum Spülen verwendeten Spüllösung wird eine elektrochemisch inaktive Substanz beigegeben, die Moleküle enthält, die mittels des Enzyms 2306 gespalten werden können in zwei Teilmoleküle 2308, von denen mindestens eines elektrochemisch aktiv ist und üblicherweise eine elektrische Ladung aufweist.

Die gemäß dem beschriebenen Ausführungsbeispiel negativ geladenen Teilmoleküle 2308 werden, wie in **Fig.15C** gezeigt, zu der positiv geladenen Elektrode 2300 gezogen, was mittels eines Pfeils 2309 angedeutet ist. Die negativ geladenen Teilmoleküle 2308 werden an der ersten Elektrode 2300, an die über dem ersten Anschluss 2203 mittels der ersten Ansteuereinheit 2207 ein positives elektrisches Potential angelegt ist, oxidiert, und werden als oxidierte Teilmoleküle 2310 an die negativ geladene zweite Elektrode 2301 gezogen, an die über dem zweiten Anschluss 2204 mittels der zweiten Ansteuereinheit 2208 ein negatives elektrisches Potential angelegt ist. Dort-werden sie wiederum reduziert. Die reduzierten Teilmoleküle 2311 wandern wiederum zu der positiv geladenen ersten Elektrode 2300. Auf diese Weise wird ein elektrischer Kreisstrom generiert, der proportional ist zu der Anzahl der jeweils mittels der Enzyme 2306 erzeugten Ladungsträger.

Für die Funktionalität des ausgewählten Redox-Recycling-Biosensor-Felds 2202a ist essentiell, dass eine der Elektroden 2300 ausreichend stark positiv gegenüber einer der anderen Elektrode 2301 geladen ist, so dass die Reduktions- und Oxidationsprozesse ablaufen können. Aus diesem Grund sind die nicht ausgewählten Redox-Recycling-Biosensor-Felder 2202 aus Fig.14 gemäß dem gezeigten Betriebszustand nicht in der Lage, von den Detektionseinheiten 2211, 2209 detektierbare ausreichend starke Ströme zu generieren, selbst wenn an ihnen ein Sensorereignis erfolgt ist.

Ein Beispiel für ein für das Redox-Recycling geeignetes chemisches System ist die Verwendung einer Salzlösung als Pufferlösung, einer alkalischen Phosphatase als Labelmolekül 2306 und von Para-Aminophenolphosphat als elektrochemisch inaktive Substanz 2307. Die mittels des Labels generierte, zu oxidierende Subspezies kann Para-Aminophenol sein, die mittels des Labels generierte, zu reduzierende Subspezies kann Chinonimin sein.

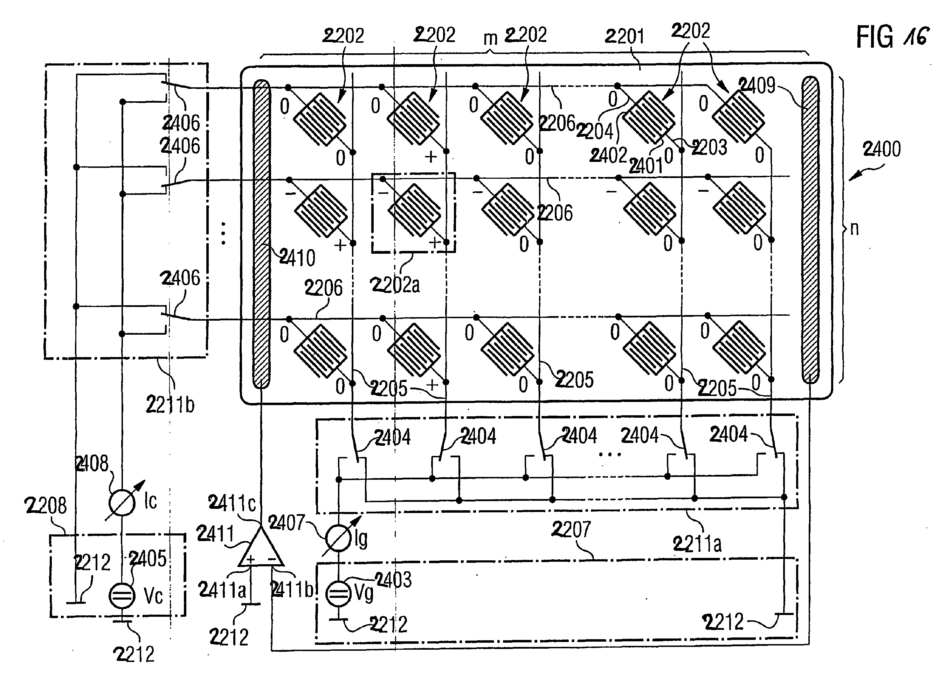

Im Weiteren wird bezugnehmend auf **Fig.16** ein Biosensor-Array 2400 gemäß einem siebten Ausführungsbeispiel der Erfindung beschrieben.

Bei dem Biosensor-Array 2400 ist eine Vielzahl von Redox-Recycling-Biosensor-Feldern 2202 matrixförmig auf einem Silizium-Substrat 2201 angeordnet. Das Biosensor-Array 2400 weist n Zeilen und m Spalten von matrixförmig angeordneten Redox-Recycling-Biosensor-Feldern 2202 auf. Ferner sind, wie in Fig.16 gezeigt, m erste Signalleitungen 2205 und n zweite Signalleitungen 2206 vorgesehen, das heißt n+m Signalleitungen. Im Kreuzungsbereich jeweils einer ersten Signalleitung 2205 mit jeweils einer zweiten Signalleitung 2206 ist jeweils ein als Interdigitalelektroden-Anordnung ausgestaltetes Redox-Recycling-Biosensor-Feld 2202 angeordnet. Dieses enthält zwei fingerförmig ineinandergreifende Interdigitalelektroden 2401, 2402, die ähnlich ausgestaltet sind wie die in Fig.1C gezeigten Interdigitalelektroden 112, 113.

Die erste Ansteuereinheit 2207 weist eine erste Gleichspannungsquelle Vg 2403 und einen weiteren Anschluss auf, an dem ein elektrisches Massepotential 2212 bereitgestellt ist. Die erste Schalteinrichtung 2211a weist m erste Schalter 2404 auf, von denen jeder mit einer der ersten Signalleitungen 2205 gekoppelt ist. Eine Spalte von Redox-Recycling-Biosensor-Feldern wird ausgewählt, indem die Redox-Recycling-Biosensor-Felder der Spalte mit der ersten Gleichspannungsquelle Vg 2403 gekoppelt werden. Alle anderen Spalten von den Redox-Recycling-Biosensor-Feldern 2202 sind aufgrund entsprechend gewählter Schalterstellungen der ersten Schalter 2404 mit dem elektrischen Massepotential 2212 gekoppelt, wie in Fig.16 gezeigt. Gemäß dem in Fig.16 gezeigten Szenario sind nur die Redox-Recycling-Biosensor-Felder 2202 in der zweiten Spalte von links mit der ersten Gleichspannungsquelle Vg 2403 gekoppelt.

Eine Zeile von Redox-Recycling-Biosensor-Feldern 2202 wird ausgewählt, indem die auszuwählende Zeile, gemäß dem in Fig.16 gezeigten Szenario die zweite Zeile von oben, mit einer zweiten Gleichspannungsquelle Vc 2405 der zweiten Ansteuereinheit 2208 gekoppelt wird. Dies erfolgt mittels geeigneter Wahl der Schalterstellungen von zweiten Schaltern 2406 der zweiten Schalteinrichtung 2211b. Ferner enthält die zweite Ansteuereinheit einen Anschluss, der das elektrische Massepotential 2212 bereitstellt.

Die erste Detektionseinheit ist als eine erste Stromerfasseinheit Ig 2407 zum Erfassen eines elektrischen Stroms einer ausgewählten Spaltenleitung 2205 realisiert, und die zweite Detektionseinheit ist als eine zweite Stromerfasseinheit Ic 2408 realisiert, mittels der ein auf einer ausgewählten Zeile fließender elektrischer Strom erfasst werden kann.

Ferner weist das Biosensor-Array 2400 eine Potentiostat-Einrichtung auf. Dies ist aufgebaut aus einer Referenzelektrode 2409 auf dem Substrat 2201, einer Gegenelektrode 2410 auf dem Substrat 2201 und einem Operationsverstärker 2411, der außerhalb des Chips ("Off-Chip") angeordnet ist. Ein nicht invertierender Eingang 2411a des Operationsverstärkers 2411 ist auf einem elektrischen Massepotential 2212. Ein invertierender Eingang 2411b des Operationsverstärkers 2411 ist mit der Gegenelektrode 2410 gekoppelt. Gemeinsam bilden diese Komponenten eine Potentiostat-Schaltung. Diese kann vorteilhaft genutzt werden, um einem Analyten, der in das Biosensor-Array 2400 eingebracht ist, ein stabiles elektrochemisches Potential niederohmig zuzuweisen. Diese Konfiguration mit einer Potentiostat-Einrichtung ist insbesondere dann vorteilhaft, wenn die Biosensor-Felder als Redox-Recycling-Biosensor-Felder eingerichtet sind.

Bei dem Biosensor-Array 2400 sind die ersten Ansteuerleitungen 2205 und die zweiten Ansteuerleitungen 2206 in unterschiedlichen Ebenen ausgebildet, so dass elektrisch isolierte Leitungskreuzungen ermöglicht sind. Alle m Spalten können wahlweise mit der ersten Gleichspannungsquelle Vg 2403 oder mit elektrischem Massepotential 2212 gekoppelt werden. Alle n Zeilen können wahlweise mit der zweiten Gleichspannungsquelle Vc 2405 oder mit dem elektrischem Massepotential 2212 gekoppelt werden. Mittels der Stromerfassinstrumente Ig 2407 und Ic 2408 können die elektrischen Ströme, die durch die assoziierten Gleichspannungsquellen 2403, 2405 fließen, gemessen werden. In der angegebenen Konfiguration können also Generator- und Kollektorstrom charakterisiert werden. Da diese Ströme näherungsweise vom Betrag her gleich groß sind, kann optional auch nur einer der Ströme gemessen werden. Das Erfassen eines Stroms ist ausreichend und stellt eine Realisierung mit einem minimalen Aufwand dar. Das Erfassen beider Ströme ermöglicht ein redundantes Erfassen eines Sensorereignisses und daher eine erhöhte Nachweisempfindlichkeit und Fehlerrobustheit.

Für den Auslesebetrieb wird an genau eine Spalte die positive Spannung Vg und an genau eine Zeile die negative Spannung Vc angelegt. An allen anderen Zeilen und Spalten liegt das elektrische Massepotential 2212. Wie in Fig.16 mit "+" und "-" Zeichen skizziert, liegt nur an dem Redox-Recycling-Biosensor-Feld 2202a, der in dem Kreuzungsbereich der ausgewählten Zeile 2206 und der ausgewählten Spalte 2205 liegt, ein hinreichend großes Potentialgefälle an, um sowohl die Vorgänge der Oxidation als auch der Reduktion zu erlauben. An allen anderen Redox-Recycling-Biosensor-Feldern 2202 ist die Spannung an mindestens einer der Anschlüsse 2203, 2204 betragsmäßig kleiner als der Schwellwert, welcher überschritten werden muss, um beide gewünschte elektrochemische Vorgänge in Gang zu setzen. Gegebenenfalls kann hier an einer der Elektroden 2401 oder 2402 bei Anlegen der Spannungen ein einmaliger kurzer Stromstoss auftreten, der jedoch rasch abklingt, und nicht wie bei dem ausgewählten Redox-Recycling-Biosensor-Feld 2202a ein kontinuierlich ansteigender Strom ist. An den meisten der Redox-Recycling-Biosensor-Felder 2202 der Matrix liegt an beiden Anschlüssen 2203, 2204 das elektrische Massepotential 2212.

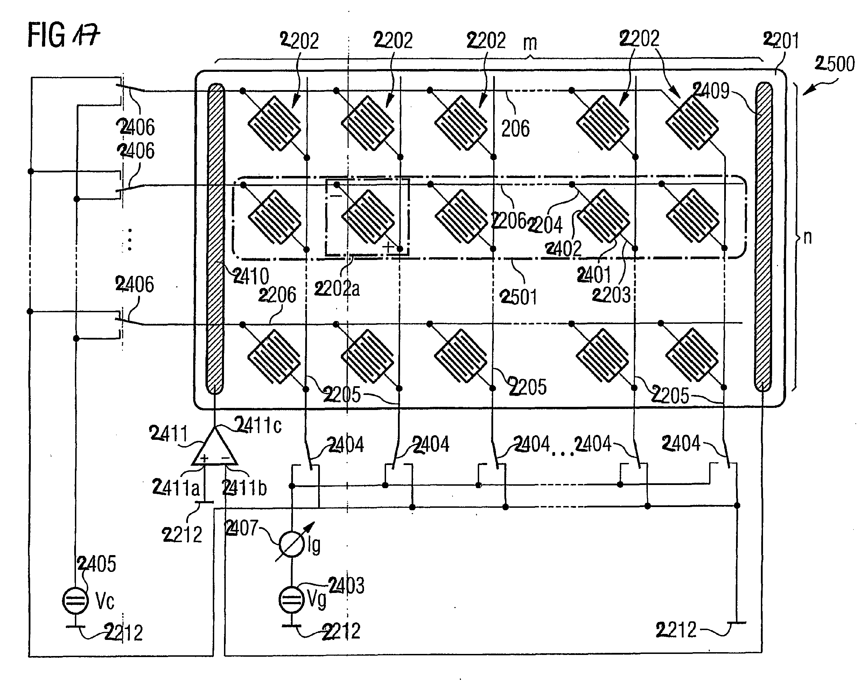

Im Weiteren wird bezugnehmend auf **Fig.17** ein Biosensor-Array 2500 gemäß einem achten Ausführungsbeispiel der Erfindung beschrieben.

Generator- und Kollektorstrom, d.h. Ig und Ic, sind bei Redox-Recycling-Biosensor-Feldern betragsmäßig häufig sehr ähnlich, haben jedoch unterschiedliches Vorzeichen. Somit genügt es im Prinzip, nur einen der beiden Ströme zu messen und auszuwerten. Ein auf dieser Tatsache beruhendes Ausführungsbeispiel des erfindungsgemäßen Biosensor-Arrays ist in Fig.17 gezeigt.

Bei dem Biosensor-Array 2500 wird an alle Spaltenleitungen 2205 mittels der ersten Gleichspannungsquelle Vg 2403 die Spannung Vg angelegt. Ferner wird an alle bis auf eine der Zeilenleitungen 2206 die Spannung Vg der ersten Gleichspannungsquelle Vg 2403 gelegt. Nur an der gemäß Fig.17 zweiten Zeile von oben ist aufgrund der Schalterstellungen der zweiten Schalter 2406 eine Kopplung zwischen der zugehörigen zweiten Signalleitung 2206 und der zweiten Gleichspannungsquelle Vc 2405 hergestellt. Somit liegt an allen Redox-Recycling-Biosensor-Feldern 2202 außer den Redox-Recycling-Biosensor-Feldern 2202 in der ausgewählten zweiten Zeile 2501 die Potentialdifferenz Null. Für alle Redox-Recycling-Biosensor-Felder 2202 der ausgewählten Zeile 2501 ist die Anforderung an die angelegten Spannungen für das Auftreten von Oxidations- und Reduktions-Prozessen erfüllt. Das heißt, dass alle Redox-Recycling-Biosensor-Felder der ausgewählten Zeile 2501 elektrischen Strom liefern können, sofern an ihnen Sensorereignisse stattfinden. Da jedoch nur der elektrische Strom der gemäß Fig.16 zweiten Spalte von Redox-Recycling-Biosensor-Feldern 2202 aufgrund der Schalterstellungen der ersten Schalter 2404 gemessen wird, wird gemäß dem in Fig.17 gezeigten Szenario nur der elektrische Strom des ausgewählten Redox-Recycling-Biosensor-Felds 2202a erfasst. Auf diese Weise kann selektiv mittels Einstellens geeigneter Schalterstellungen 2404, 2406 jedes der Redox-Recycling-Biosensor-Felder 2202 innerhalb der Matrix separat ausgewählt werden.

Alternativ können die Funktionen von Zeilen und Spalten vertauscht werden, ebenso die Rollen von Vg und Vc, das heißt dass dann anstatt des Werts Ig der Wert Ic erfasst wird.

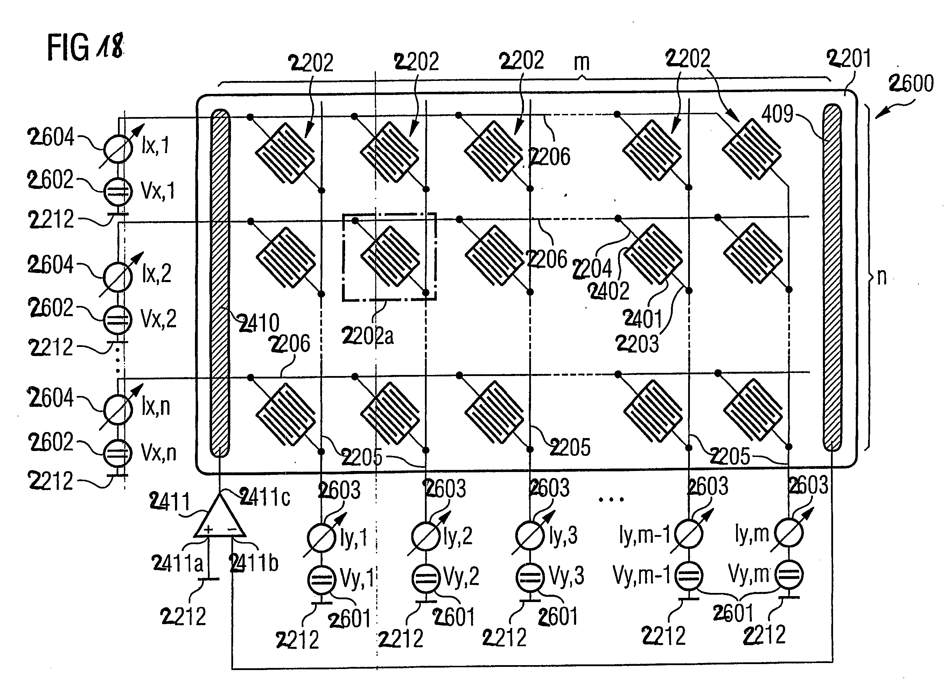

Im Weiteren wird bezugnehmend auf **Fig.18** ein Biosensor-Array 2600 gemäß einem neunten Ausführungsbeispiel der Erfindung beschrieben.

Bei dem Biosensor-Array 2600 ist für jede erste Signalleitung 2205, das heißt für jede Spalte von Redox-Recycling-Biosensor-Feldern 2202, eine separate erste Gleichspannungsquelle 2601 Vy,i mit i= 1, 2, ..., m sowie eine erste Stromerfasseinrichtung 2603 Iy,i mit i= 1, 2, ..., m vorgesehen. Ferner ist für jede zweite Signalleitung 2206, das heißt für jede Zeile von Redox-Recycling-Biosensor-Feldern 2202, jeweils eine separate zweite Gleichspannungsquelle 2602 Vx,j mit j= 1, 2, ..., n und eine separate zweite Stromerfasseinrichtung 2604 Ix,j mit j= 1, 2, ..., n vorgesehen. Anschaulich ist jede Spalte und jede Zeile mit einer separaten Spannungsquelle und mit einem separaten Strommessinstrument versehen. Je nach Zuweisung von Spannungen an die gezeigten Spannungsquellen kann mit dieser Konfiguration der Betrieb der Sensor-Anordnung aus Fig.16 bzw. aus Fig.17 erreicht werden. Ein Vorteil bei dem Biosensor-Array 2600 besteht darin, dass zeilen- oder spaltenweises paralleles Auslesen möglich ist. Anschaulich ist bei dem in Fig.18 gezeigten Ausführungsbeispiel die Auswahleinheit in der Steuerung der Gleichspannungsquellen 2601 bzw. 2602 integriert, da jede von den Spannungsquellen wahlweise zu- bzw. abgeschaltet werden kann.

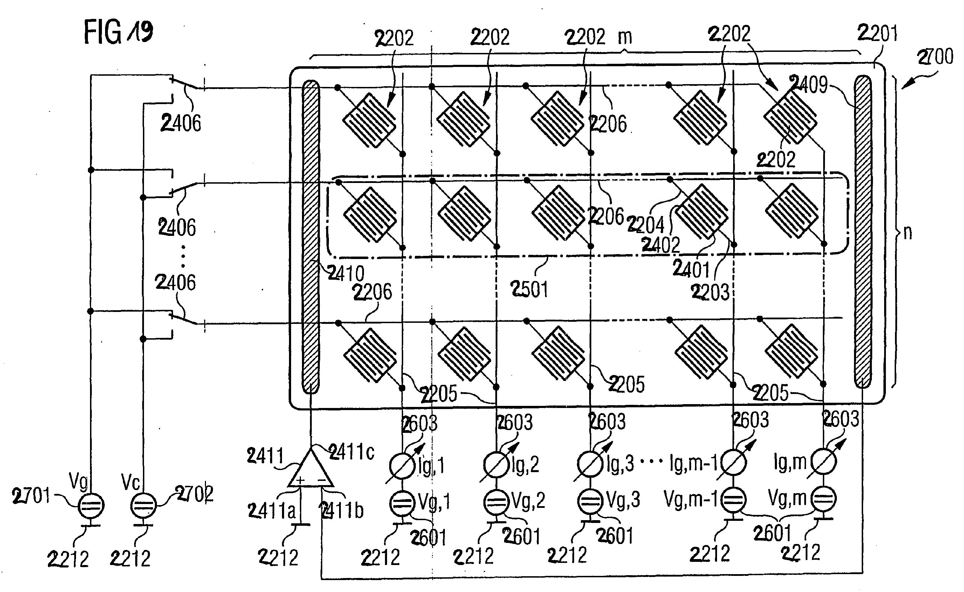

Im Weiteren wird bezugnehmend auf **Fig.19** ein Biosensor-Array 2700 gemäß einem zehnten Ausführungsbeispiel der Erfindung beschrieben.

Bei dem Biosensor-Array 2700 ist jede Spalte von Redox-Recycling-Biosensor-Feldern 2202, das heißt jede erste Signalleitung 2205, mit einer separaten ersten Gleichspannungsquelle 2601 und mit einer separaten ersten Stromerfasseinrichtung 2603 gekoppelt. Dagegen ist für die unterschiedlichen Zeilen von Redox-Recycling-Biosensor-Feldern 2202 jeweils eine gemeinsame dritte Gleichspannungsquelle Vg 2701 und vierte Gleichspannungsquelle Vc 2702 bereitgestellt, wobei mittels der zweiten Schalter 2406 genau eine Zeile von Redox-Recycling-Biosensor-Feldern mit der vierten Gleichspannungsquelle Vc 2702 gekoppelt wird, wohingegen alle anderen Zeilen mit der dritten Gleichspannungsquelle Vg 2701 gekoppelt sind. Gemäß dem in Fig.19 gezeigten Ausführungsbeispiel ist nur die ausgewählte Zeile 2501 mit der vierten Gleichspannungsquelle Vc 2702 gekoppelt. Gemäß dem gezeigten Szenario liefern alle ersten Gleichspannungsquellen 2601 das elektrische Potential Vg, so dass nur an den Redox-Recycling-Biosensor-Feldern 2202 der ausgewählten Zeile 2501 eine ausreichend große Potentialdifferenz anliegt, dass Redox-Recycling-Prozesse in hinreichendem Maße auftreten können. Diese Sensorsignale werden zeilenweise ausgelesen, indem jede der ersten Stromerfasseinrichtungen 2603 den elektrischen Strom von genau einem zugeordneten Redox-Recycling-Biosensor-Feld der ausgewählten Zeile 2501 detektiert.

Gemäß einem ähnlichen Prinzip kann auch jeweils spaltenweise ausgelesen werden.

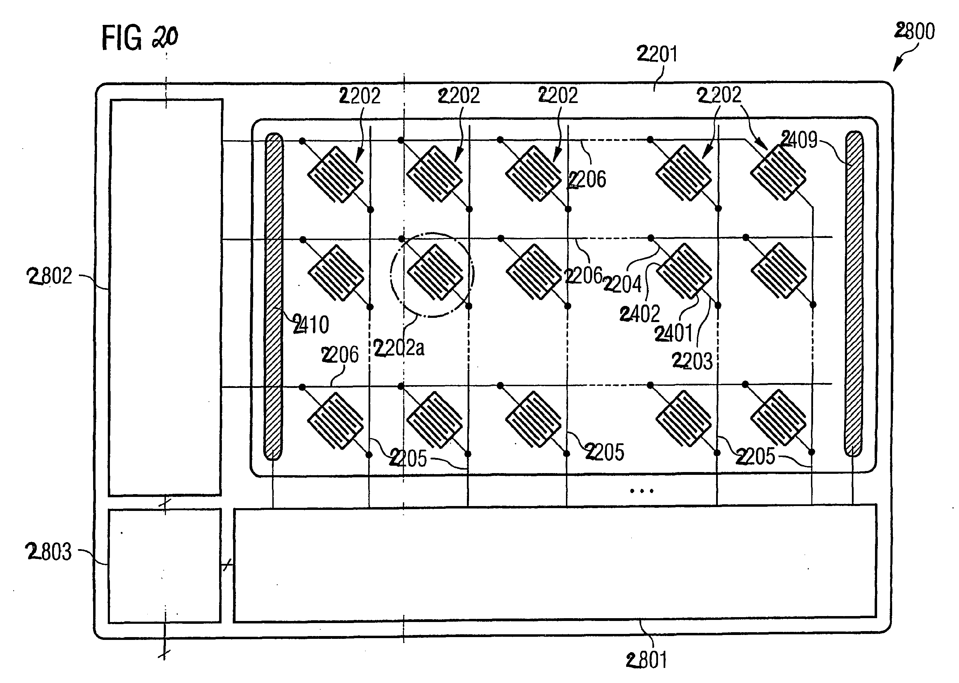

Im Weiteren wird bezugnehmend auf **Fig.20** ein Biosensor-Array 2800 gemäß einem elften Ausführungsbeispiel der Erfindung beschrieben.

Das Biosensor-Array 2800 weist einen ersten Schaltungsblock 2801 und einen zweiten Schaltungsblock 2802 auf, sowie eine Eingabe-/Ausgabe-Schnittstelle 2803, die mit den beiden Schaltungsblöcken 2801, 2802 gekoppelt ist. An der Eingabe-/Ausgabe-Schnittstelle 2803 kann ein Sensorsignal bereitgestellt sein, beispielsweise ein elektrisches Ansteuersignal oder ein elektrisches Detektionssignal.

Das Biosensor-Array 2800 stellt einen sogenannten "aktiven" Chip dar. Darunter wird ein Halbleiter-Substrat verstanden, in dem monolithisch Schaltkreise integriert sind, die unterschiedliche Funktionen aufweisen können. Insbesondere sind die Komponenten Spannungsquellen 2403 bzw. 2601, Stromerfasseinheiten 2407 bzw. 2603, Operationsverstärker 2411 und Teile der Auswahleinheit 2211 in dem ersten Schaltungsblock 2801 integriert, und es sind andere Komponenten wie die zweiten Spannungsquellen 2405 bzw. 2602, Stromerfasseinrichtungen 2408 bzw. 2604, andere Teile der Auswahleinheit 2211, etc. in dem zweiten Schaltungsblock 2802 integriert. Ferner sind weitere Komponenten für die Signalvorverarbeitung und die Signalweiterverarbeitung in den Schaltungsblöcken 2801, 2802 "On-Chip" realisiert. Darüber hinaus weist der Chip des Biosensor-Arrays 2800 eine definierte, gemäß den Bedürfnissen der jeweiligen Anwendung konfigurierte (z.B. digitale) Schnittstelle 2803 (I/O) auf.

Die Verwendung der erfindungsgemäßen Architektur auf aktiven Chips kann beispielsweise von Vorteil sein, wenn eine große Anzahl relativ kleinflächiger Interdigitalstrukturen verwendet wird, deren Fläche es nicht mehr erlaubt, unterhalb eines jeden Sensors eine aktive Schaltung zum Steuern des jeweiligen Sensors zu realisieren. Ferner ergeben sich besondere Vorteile, wenn die Anforderungen an die Leistungsfähigkeit der "On-Chip" realisierten Schaltungen sehr groß ist. Letzteres gilt insbesondere dann, wenn die Fläche eines Sensor-Elements maßgeblichen Einfluss auf die Leistungsfähigkeit (beispielsweise das Rauschen) hat.

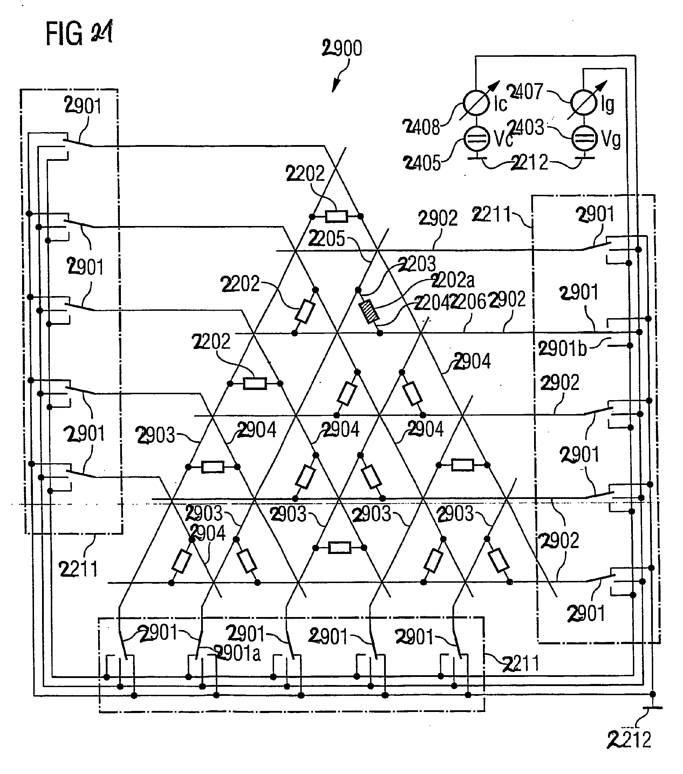

Im Weiteren wird bezugnehmend auf Fig.21 ein Biosensor-Array 2900 gemäß einem zwölften Ausführungsbeispiel der Erfindung beschrieben.

Das Biosensor-Array 2900 ist eine Anordnung von Redox-Recycling-Biosensor-Feldern 2202, die als Dreiecks-Matrix mit drei Verdrahtungsrichtungen vorgesehen sind. Ferner ist eine gemeinsame erste Gleichspannungsquelle 2403 Vg als erste Ansteuereinheit und eine gemeinsame erste Stromerfasseinrichtung 2407 Ig als erste Detektionseinheit vorgesehen. Darüber hinaus ist eine zweite Gleichspannungsquelle 2405 Vc und eine damit gekoppelte zweite Stromerfasseinheit 2408 Ic als zweite Detektionseinheit vorgesehen. Die Auswahleinheit 2211 ist mittels einer Vielzahl von Schaltern 2901 mit steuerbaren Schalterstellungen symbolisiert. Die Schalterstellungen sind mittels der Auswahleinheit 2211 steuerbar. Ferner sind in Fig.21 erste Leitungen 2902, zweite Leitungen 2903 und dritte Leitungen 2904 derart verlaufend angeordnet, dass in (voneinander elektrisch isolierten) Kreuzungsbereichen der Leitungen 2902 bis 2904 sich diese in 60°-Winkeln überkreuzen. Insbesondere ist in Fig.21 ein ausgewähltes Redox-Recycling-Biosensor-Feld 2202a gezeigt, das infolge der in Fig.21 gezeigten Schalterstellungen der Schalter 2901 ausgewählt ist. Ein erster Schalter 2901a ist in einer derartigen Schalterstellung, dass der erste Anschluss 2203 des ausgewählten Redox-Recycling-Biosensor-Feldes 2202a mit der ersten Gleichspannungsquelle 2403 Vg und mit der ersten Stromerfasseinrichtung 2407 Ig gekoppelt ist. Ferner ist ein zweiter Schalter 2901b in einer derartigen Schalterstellung, dass der zweite Anschluss 2204 des ausgewählten Redox-Recycling-Biosensor-Felds 2202a mit der zweiten Gleichspannungsquelle Vc 2405 und mit der zweiten Stromerfasseinheit 2408 Ic gekoppelt ist. Die Schalterstellungen aller anderen Schalter 2901 sind in einer derartigen Stellung, dass die an diesen Schalter 2901 angrenzenden ersten, zweiten bzw. dritten Signalleitungen 2902 bis 2904 auf elektrischem Massepotential 2212 sind. Mit anderen Worten ist gemäß dem in Fig.21 gezeigten Szenario das ausgewählte Redox-Recycling-Biosensor-Feld 202a das einzige der Redox-Recycling-Biosensor-Felder 2202, das sowohl mit der Gleichspannungsquelle 2403 Vg, als auch mit der Gleichspannungsquelle 2405 Vc gekoppelt ist. Gemäß dem in Fig.21 gezeigten Szenario fungiert die an das ausgewählte Redox-Recycling-Biosensor-Feld 2202a angeschlossene erste Leitung 2902 als zweite Signalleitung 2206, wohingegen die an das ausgewählte Redox-Recycling-Biosensor-Feld 2202a angeschlossene zweite Leitung 2903 als erste Signalleitung 2205 fungiert. Jeder der Schalter 2901 weist drei Schalterstellungen auf, so dass die jeweils zugehörigen Leitungen 2902 bis 2904 wahlweise mit dem elektrischen Massepotential 2212, der Gleichspannungsquelle Vg 2403 oder der Gleichspannungsquelle Vc 2405 gekoppelt werden können. Dadurch ist eine unabhängige Messung auf jeder Position des Sensor-Arrays 2900 möglich. Die Konfiguration von Fig.21 entspricht der Konfiguration von Fig.16, jedoch in einer Architektur mit einer Dreiecksmatrix.

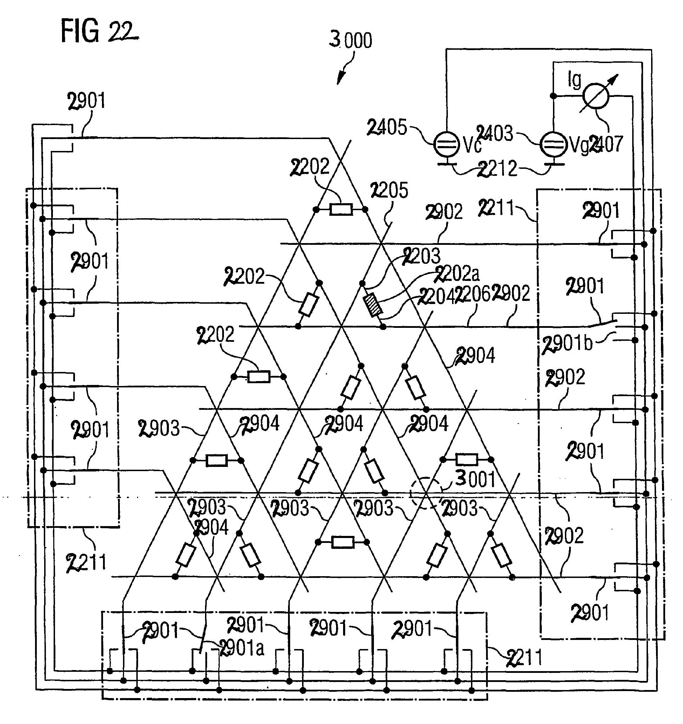

Im Weiteren wird bezugnehmend auf **Fig.22** ein Biosensor-Array 3000 gemäß einem dreizehnten Ausführungsbeispiel der Erfindung beschrieben.

Das Biosensor-Array 3000 entspricht der Konfiguration von Fig.17, ist jedoch in einer Architektur mit einer Dreiecks-Matrix-förmigen Anordnung der Redox-Recycling-Biosensor-Felder 2202 ausgeführt. Gemäß dem in Fig.22 dargestellten Szenario ist der erste Schalter 2901a in einer derartigen Schalterstellung, dass die zugehörige zweite Leitung 2903 mit der Stromerfasseinheit 2407 Ig gekoppelt ist. Ferner ist der zweite Schalter 2901b in einer derartigen Stellung, dass die zugehörige erste Leitung 2902 als einzige mit der zweiten Gleichspannungsquelle Vc 2405 gekoppelt ist. Alle anderen Schalter der Schalter 2901 sind in einer solchen Stellung, dass die zugehörigen Leitungen 2902 bis 2904 mit der ersten Spannungsquelle 2403 Vg gekoppelt sind. Dadurch wird zwischen die Anschlüsse 2203, 2204 des ausgewählten Redox-Recycling-Biosensor-Felds 2202a die Potentialdifferenz Vg-Vc angelegt, und es wird der auf der ersten Signalleitung 2205 fließende Strom mittels der ersten Stromerfasseinheit 2407 erfasst.

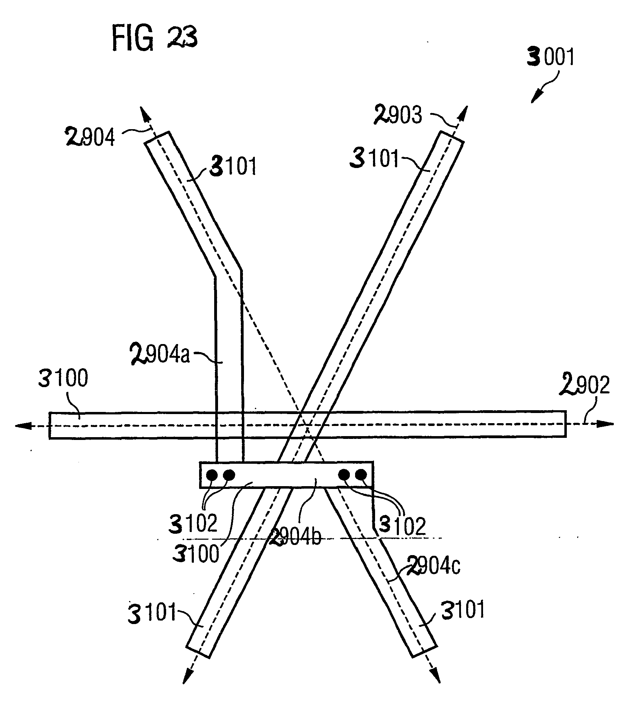

Im Weiteren wird bezugnehmend auf **Fig.23** beschrieben, wie ein Kreuzungsbereich 3001 zwischen einer der ersten Leitungen 2902, einer der zweiten Leitungen 2903 und einer der dritten Leitungen 2904 unter Verwendung von nur zwei Verdrahtungsebenen realisiert sein kann.

In Fig.23 ist eine erste Metallisierungsebene 3100 und ist eine zweite Metallisierungsebene 3101 in Draufsicht gezeigt. Die erste Metallisierungsebene 3100 ist in einer Richtung senkrecht zu der Papierebene von Fig.23 gegenüber der zweiten Metallisierungsebene 3101 verschoben, das heißt, die Papierebene von Fig.23 ist parallel zu der Oberfläche des Biosensor-Arrays 2900. In dem Kreuzungsbereich 3101 treffen sich eine der ersten Leitungen 2902, die vollständig in der ersten Metallisierungsebene 3100 vorgesehen ist, eine der zweiten Signalleitungen 2903, die vollständig in der zweiten Metallisierungsebene 3101 vorgesehen ist, und eine der dritten Leitungen 2904, die, wie in Fig.23 gezeigt, zum Teil in der ersten Metallisierungsebene 3100 und zu einem anderen Teil in der zweiten Metallisierungsebene 3101 vorgesehen ist. Um in dem Kreuzungsbereich 3001 eine elektrische Isolation der Signalleitungen 2902 bis 2904 voneinander zu ermöglichen, ist die dritte Leitung 2904 in Fig.23 in einen ersten Abschnitt 2904a, in einem zweiten Abschnitt 2904b und in einen dritten Abschnitt 2904c aufgeteilt. Der erste Abschnitt 2904a und der dritte Abschnitt 2904c verlaufen in der zweiten Metallisierungsebene 3101, wohingegen der zweite Abschnitt 2904b in der ersten Metallisierungsebene 3100 verläuft. Mittels vertikaler Kontaktierungselemente 3102, die senkrecht zu der Papierebene von Fig.23 verlaufend angeordnet sind, ist der erste Abschnitt 2904a mit dem zweiten Abschnitt 2904b bzw. der zweite Abschnitt 2904b mit dem dritten Abschnitt 2904c der dritten Leitung 2904 gekoppelt. Dadurch ist es unter Verwendung von nur zwei Metallisierungsebenen ermöglicht, dass drei Leitungen 2902 bis 2904 einander überkreuzen, ohne dass die elektrische Isolation unterbrochen wird.

In diesem Zusammenhang ist anzumerken, dass eine matrixförmige Anordnung mit drei (oder mehr) Verdrahtungsrichtungen nicht notwendigerweise mit drei (oder mehr) unabhängigen Verdrahtungsebenen realisiert sein muss. Zwei Verdrahtungsebenen sind in jedem Fall hinreichend, wie in Fig.23 schematisch gezeigt.

In diesem Dokument sind folgende Veröffentlichungen zitiert:
[1] WO 93/22678
[2] DE 19610115 A1
[3] US Patent Serial No.60/007840
[4] Peter Van Gerwen et al., "Nanoscaled Interdigitated Electrode Arrays for Biochemical Sensors", Proc. International Conference on Solid-State Sensors and Actuators (Transducers '97), S.907-910, 1997
[5] Hagleitner, C. et al. "A Gas Detection System on a Single CMOS-Chip comprising capacity, calorimetric, and mass sensitive microsensors", Proc. International Solid-State Circuit Conference (ISSCC), S.430, 2002
[6] R. Thewes et al., "Sensor Arrays for Fully Electronic DNA Detection on CMOS", Proc. Int. Solid-State Circuits Conf. (ISSCC), p. 350, 2002
[7] R. Hintsche et al, "Microelectrode arrays and application to biosensing devices", Biosensors & Bioelectronics, p. 697-705, 1994
[8] R. Hintsche et al., "Microbiosensors using electrodes made in Si-technology" in "Frontiers in Biosensorics I", F. Scheller et al. ed., Birkhäuser, Basel, Switzerland, 1997
[9] M. Paeschke et al, "Highly sensitive electrochemical microsensors using submicrometer electrode arrays", Sensors and Actuators B, p. 394-397, 1995
[10] WO 00/62048
[11] WO 96/07917
[12] WO 01/43870 A2
[13] WO 01/75151 A2
[14] WO 88/09499 A1

### Bezugszeichenliste

- 100: Interdigitalelektroden-Anordnung
- 101: Substrat
- 102: erste Elektrodenstruktur
- 103: zweite Elektrodenstruktur
- 104: erster Teilbereich
- 105: zweiter Teilbereich
- 110: Redox-Recycling-Biosensor
- 111: Substrat
- 112: erste Interdigitalelektrode
- 113: zweite Interdigitalelektrode
- 114: Referenzelektrode
- 115: Gegenelektrode
- 116: Differenzverstärker
- 116a: nicht-invertierender Eingang
- 116b: invertierender Eingang
- 116c: Ausgang
- 117: Massepotential
- 118: erste Gleichspannungsquelle
- 119: zweite Gleichspannungsquelle
- 120: erstes Amperemeter
- 121: zweites Amperemeter
- 200: Fängermoleküle
- 201: Analyt
- 202: zu erfassende Partikel
- 203: Impedanz
- 300: Feldlinien
- 301: Symmetrielinien
- 302: Bedeckungsbereich
- 400: Ersatzschaltbild
- 401: erste Kapazität
- 402: erster ohmscher Widerstand
- 403: zweite Kapazität
- 404: zweiter ohmscher Widerstand
- 405: dritte Kapazität
- 406: dritter ohmscher Widerstand
- 500: Ersatzschaltbild
- 501: Amperemeter
- 502: Wechselspannungsquelle
- 503: Massepotential
- 510: vereinfachtes Ersatzschaltbild
- 511: erste effektive Kapazität
- 512: erster effektiver ohmscher Widerstand
- 600: Sensor-Array
- 601: Silizium-Substrat
- 602: Impedanz-Biosensor-Felder
- 602a: ausgewähltes Impedanz-Biosensor-Feld
- 603: erster Anschluss
- 604: zweiter Anschluss
- 605: Ansteuerleitung
- 606: Detektionsleitung
- 607: Ansteuereinheit
- 608: Detektionseinheit
- 609: Auswahleinheit
- 609a: erstes Schalteinrichtung
- 609b: zweite Schalteinrichtung
- 610: Kreuzungsbereiche
- 611: Massepotential
- 700: Sensor-Array
- 701: Wechselspannungsquelle
- 702: elektrisches Massepotential
- 703: erste Schalter
- 704: Stromerfasseinrichtung
- 705: zweite Schalter
- 706: Referenzelektrode
- 707: Gegenelektrode
- 708: Operationsverstärker
- 708a: nichtinvertierender Eingang
- 708b: invertierender Eingang
- 708c: Ausgang
- 800: Ersatzschaltbild
- 801: Impedanz
- 900: vereinfachtes Ersatzschaltbild
- 901: Kapazität
- 1000: Sensor-Array
- 1001: Ansteuer-/Auswahl-Einheit
- 1002: Detektions-/Auswahl-Einheit
- 1100: Sensor-Array
- 1101: erster Schaltungsblock
- 1102: zweiter Schaltungsblock
- 1103: Eingabe-/Ausgabe-Schnittstelle
- 1200: Sensor-Array
- 1201: Schalter
- 1201a: erster Schalter
- 1201b: zweiter Schalter
- 1202: erste Signalleitungen
- 1203: zweite Signalleitungen
- 1204: dritte Signalleitungen
- 1204a: erster Abschnitt
- 1204b: zweiter Abschnitt
- 1204c: dritter Abschnitt
- 1205: Kreuzungsbereich
- 1300: erste Metallisierungsebene
- 1301: zweite Metallisierungsebene
- 1302: vertikale Kontaktierungselemente
- 2200: Redox-Recycling-Biosensor-Array
- 2201: Silizium-Substrat
- 2202: Redox-Recycling-Biosensor-Felder
- 2202a: ausgewähltes Redox-Recycling-Biosensor-Felder
- 2203: erster Anschluss
- 2204: zweiter Anschluss
- 2205: erste Signalleitung
- 2206: zweite Signalleitung
- 2207: erste Ansteuereinheit
- 2208: zweite Ansteuereinheit
- 2209: erste Detektionseinheit
- 2210: zweite Detektionseinheit
- 2211: Auswahleinheit
- 2211a: erste Schalteinrichtung
- 2211b: zweite Schalteinrichtung
- 2212: Massepotential
- 2300: erste Elektrode
- 2301: zweite Elektrode
- 2302: Haltebereich
- 2303: DNA-Sondenmoleküle
- 2304: DNA-Stränge
- 2305: Elektrolyt
- 2306: Enzym-Label
- 2307: Moleküle
- 2308: Teilmoleküle
- 2309: Pfeil
- 2310: oxidierte Teilmoleküle
- 2311: reduzierte Teilmoleküle
- 2400: Biosensor-Array
- 2401: erste Interdigitalelektrode
- 2402: zweite Interdigitalelektrode
- 2403: erste Gleichspannungsquelle
- 2404: erste Schalter
- 2405: zweite Gleichspannungsquelle
- 2406: zweite Schalter
- 2407: erste Stromerfasseinheit
- 2408: zweite Stromerfasseinheit
- 2409: Referenzelektrode
- 2410: Gegenelektrode
- 2411: Operationsverstärker
- 2411a: nicht-invertierender Eingang
- 2411b: invertierender Eingang
- 2411c: Ausgang
- 2500: Biosensor-Array
- 2501: ausgewählte Zeile
- 2600: Biosensor-Array
- 2601: erste Gleichspannungsquellen
- 2602: zweite Gleichspannungsquellen
- 2603: erste Stromerfasseinrichtungen
- 2604: zweite Stromerfasseinrichtungen
- 2700: Biosensor-Array
- 2701: dritte Gleichspannungsquelle
- 2702: vierte Gleichspannungsquelle
- 2800: Sensor-Array
- 2801: erster Schaltungsblock
- 2802: zweiter Schaltungsblock
- 2803: Eingabe-/Ausgabe-Schnittstelle
- 2900: Biosensor-Array
- 2901: Schalter
- 2901a: erster Schalter
- 2901b: zweiter Schalter
- 2902: erste Leitungen
- 2903: zweite Leitungen
- 2904: dritte Leitungen
- 2904a: erster Abschnitt
- 2904b: zweiter Abschnitt
- 2904c: dritter Abschnitt
- 3000: Biosensor-Array
- 3001: Kreuzungsbereich
- 3100: erste Metallisierungsebene
- 3101: zweite Metallisierungsebene
- 3102: Kontaktierungselemente

## Patentansprüche

1. Biosensor-Array (600)
• mit einem Substrat (601);
• mit einer Mehrzahl von auf dem Substrat angeordneten Biosensor-Feldern (602), von denen jedes einen ersten Anschluss (603) und einen zweiten Anschluss (604) aufweist;
• mit mindestens einer Ansteuerleitung und mit mindestens einer Detektionsleitung, wobei
o die mindestens eine Ansteuerleitung von der mindestens einen Detektionsleitung elektrisch isoliert ist;
o jeweils der erste Anschluss eines jeden Biosensor-Felds mit genau einer der mindestens einen Ansteuerleitung gekoppelt ist und der zweite Anschluss eines jeden Biosensor-Felds mit genau einer der mindestens einen Detektionsleitung gekoppelt ist;
o zumindest eine der mindestens einen Ansteuerleitung und zumindest eine der mindestens einen Detektionsleitung mit zumindest zwei der Biosensor-Felder gekoppelt ist;
• mit einer Ansteuereinheit (607) zum Bereitstellen eines elektrischen Ansteuersignals;
• mit einer Detektionseinheit (608) zum Erfassen eines aus dem elektrischen Ansteuersignal resultierenden elektrischen Detektionssignals; und
• mit einer Auswahleinheit (609), die derart eingerichtet ist, dass sie die Ansteuereinheit mit der Ansteuerleitung eines auszuwählenden Biosensor-Felds und die Detektionseinheit mit der Detektionsleitung des auszuwählenden Biosensor-Felds koppelt, womit das Biosensor-Feld ausgewählt wird.

2. Biosensor-Array nach Anspruch 1,
mit einer Auswerteeinheit, die derart eingerichtet ist, dass sie für das mindestens eine ausgewählte Biosensor-Feld basierend auf dem Ansteuersignal und dem Detektionssignal ermittelt, ob an dem mindestens einen ausgewählten Biosensor-Feld Sensorereignisse erfolgt sind und/oder in welcher Quantität an dem mindestens einen ausgewählten Biosensor-Feld Sensorereignisse erfolgt sind.

3. Biosensor-Array nach Anspruch 1 oder 2,
bei dem mindestens eines der Biosensor-Felder
• ein elektrochemisches Biosensor-Feld; oder
• ein Impedanz-Biosensor-Feld
ist.

4. Biosensor-Array nach Anspruch 3,
bei dem zumindest ein als elektrochemisches Biosensor-Feld eingerichtetes Biosensor-Feld ein Redox-Recycling-Biosensor-Feld ist.

5. Biosensor-Array nach einem der Ansprüche 1 bis 4,
bei dem zumindest ein Biosensor-Feld ein Interdigitalelektroden-Biosensor-Feld ist.

6. Biosensor-Array nach einem der Ansprüche 1 bis 5,
bei dem die Biosensor-Felder zu einer Mehrzahl von Biosensor-Gruppen gruppiert sind derart, dass jede Biosensor-Gruppe wahlweise separat von den anderen Biosensor-Gruppen oder gemeinsam mit zumindest einem Teil der anderen Biosensor-Gruppen betreibbar ist.

7. Biosensor-Array nach einem der Ansprüche 1 bis 6,
bei dem das Substrat
• ein Keramik-Substrat;
• ein Halbleiter-Substrat;
• ein Glas-Substrat; oder
• ein Plastik-Substrat
ist.

8. Biosensor-Array nach einem der Ansprüche 1 bis 7,
bei dem das elektrische Ansteuersignal ein zeitlich veränderliches elektrisches Signal ist.

9. Biosensor-Array nach einem der Ansprüche 1 bis 8,
bei dem
• das Ansteuersignal eine zeitlich veränderliche elektrische Spannung und das Detektionssignal ein zeitlich veränderlicher elektrischer Strom ist; oder
• das Ansteuersignal ein zeitlich veränderlicher elektrischer Strom und das Detektionssignal eine zeitlich veränderliche elektrische Spannung ist.

10. Biosensor-Array nach einem der Ansprüche 2 bis 9,
bei dem in dem Substrat
• ein Analog-Digital-Wandler-Schaltkreis integriert ist, der derart eingerichtet ist, dass er ein analoges elektrisches Signal in ein digitales Signal umwandeln und der Auswerteeinheit bereitstellen kann; und/oder
• eine elektrische Versorgungseinheit integriert ist, die derart eingerichtet ist, dass sie der Ansteuereinheit und/oder der Auswahleinheit elektrische Spannungssignale und/oder elektrische Stromsignale bereitstellen kann; und/oder
• ein Digital-Analog-Wandler-Schaltkreis integriert ist, der derart eingerichtet ist, dass er ein digitales Spannungssignal und/oder Stromsignal der Versorgungseinheit in ein analoges Signal umwandeln und der Ansteuereinheit und/oder der Auswahleinheit bereitstellen kann; und/oder
• eine Eingabe-/Ausgabe-Schnittstelle integriert ist; und/oder
• eine Verstärkereinheit, eingerichtet zum Verstärken des elektrischen Detektionssignals, integriert ist.

11. Biosensor-Array nach einem der Ansprüche 1 bis 10,
bei dem die mindestens eine Ansteuerleitung und die mindestens eine Detektionsleitung zumindest teilweise in zwei unterschiedlichen Leitungsebenen in und/oder auf und/oder unter dem Substrat ausgebildet sind.

12. Biosensor-Array nach Anspruch 11,
bei dem die Biosensor-Felder in genau einer der Leitungsebenen ausgebildet sind.

13. Biosensor-Array nach Anspruch 11 oder 12,
bei dem in einem ersten Leitungsabschnitt, in dem die mindestens eine Ansteuerleitung und die mindestens eine Detektionsleitung von einer gegenseitigen Kreuzung frei sind, die mindestens eine Ansteuerleitung und die mindestens eine Detektionsleitung in derselben Ebene verlaufend ausgebildet sind, und bei dem in einem zweiten Leitungsabschnitt, in dem die mindestens eine Ansteuerleitung und die mindestens eine Detektionsleitung sich gegenseitig kreuzen, die mindestens eine Ansteuerleitung und die mindestens eine Detektionsleitung in unterschiedlichen Ebenen verlaufend ausgebildet sind.

14. Biosensor-Array nach Anspruch 13,
bei dem der erste Leitungsabschnitt der mindestens einen Ansteuerleitung und/oder der mindestens einen Detektionsleitung mit dem zweiten Leitungsabschnitt der mindestens einen Ansteuerleitung und/oder der mindestens einen Detektionsleitung mittels mindestens einem im Wesentlichen vertikal zu dem Substrat verlaufend angeordneten elektrischen Kontaktierungselement gekoppelt sind.

15. Biosensor-Array nach einem der Ansprüche 11 bis 14,
bei dem die mindestens eine Ansteuerleitung und/oder die mindestens eine Detektionsleitung auf einer Unterseite des Substrats oder unterhalb des Substrats verlaufend ausgebildet ist.

16. Biosensor-Array nach einem der Ansprüche 1 bis 15,
bei dem die Ansteuereinheit eine für alle Biosensor-Felder gemeinsame Versorgungseinheit aufweist, die derart eingerichtet ist, dass mit ihr an das zumindest eine ausgewählte Biosensor-Feld das elektrische Ansteuersignal anlegbar ist.

17. Biosensor-Array nach Anspruch 16,
bei dem die Ansteuereinheit und/oder die Detektionseinheit derart eingerichtet sind, dass an zumindest einen Teil der nicht ausgewählten Biosensor-Felder ein elektrisches Referenzsignal anlegbar ist.

18. Biosensor-Array nach einem der Ansprüche 1 bis 16,
bei dem die Ansteuereinheit für jeweils eine Gruppe von Biosensor-Feldern eine der jeweiligen Gruppe zugehörige Versorgungseinheit aufweist, die derart eingerichtet ist, dass mit ihr an die Biosensor-Felder der zugehörigen Gruppe das elektrische Ansteuersignal anlegbar ist.

19. Biosensor-Array nach einem der Ansprüche 1 bis 18,
bei dem die Detektionseinheit eine für alle Biosensor-Felder gemeinsame Messeinheit aufweist, die derart eingerichtet ist, dass mit ihr an genau einem ausgewählten Biosensor-Feld das elektrische Detektionssignal erfassbar ist.

20. Biosensor-Array nach einem der Ansprüche 1 bis 18,
bei dem die Detektionseinheit für jeweils eine Gruppe von Biosensor-Feldern eine der jeweiligen Gruppe zugehörige Messeinheit aufweist, wobei jede der Messeinheiten derart eingerichtet ist, dass mit ihr an genau einem ausgewählten Biosensor-Feld der zugehörigen Gruppe das elektrische Detektionssignal erfassbar ist.

21. Biosensor-Array nach einem der Ansprüche 1 bis 20,
mit einer Potentiostat-Einrichtung (706, 707, 708), die derart eingerichtet ist, dass mit ihr zumindest einem Teil der Biosensor-Felder ein konstantes elektrisches Potential vorgebbar ist.

22. Biosensor-Array nach Anspruch 21,
bei dem die Potentiostat-Einrichtung eine Referenzelektrode, eine Gegenelektrode und einen Operationsverstärker aufweist, wobei ein erster Eingang des Operationsverstärkers mit der Referenzelektrode, ein zweiter Eingang des Operationsverstärkers mit einem Referenzpotential und ein Ausgang des Operationsverstärkers mit der Gegenelektrode gekoppelt ist.

23. Verfahren zum Betreiben eines Biosensor-Arrays
• mit einem Biosensor-Array
o mit einem Substrat;
o mit einer Mehrzahl von auf dem Substrat angeordneten Biosensor-Feldern, von denen jedes einen ersten Anschluss und einen zweiten Anschluss aufweist;
o mit mindestens einer Ansteuerleitung und mit mindestens einer Detektionsleitung, wobei
■ die mindestens eine Ansteuerleitung von der mindestens einen Detektionsleitung elektrisch isoliert ist;
■ jeweils der erste Anschluss eines jeden Biosensor-Felds mit genau einer der mindestens einen Ansteuerleitung gekoppelt ist und der zweite Anschluss eines jeden Biosensor-Felds mit genau einer der mindestens einen Detektionsleitung gekoppelt ist;
■ zumindest eine der mindestens einen Ansteuerleitung und zumindest eine der mindestens einen Detektionsleitung mit zumindest zwei der Biosensor-Felder gekoppelt ist;
o mit einer Ansteuereinheit zum Bereitstellen eines elektrischen Ansteuersignals;
o mit einer Detektionseinheit zum Erfassen eines aus dem elektrischen Ansteuersignal resultierenden elektrischen Detektionssignals; und
o mit einer Auswahleinheit, die derart eingerichtet ist, dass sie die Ansteuereinheit mit der Ansteuerleitung eines auszuwählenden Biosensor-Felds und die Detektionseinheit mit der Detektionsleitung des auszuwählenden Biosensor-Felds koppelt, womit das Biosensor-Feld ausgewählt wird;
• wobei gemäß dem Verfahren
o die Ansteuereinheit mit der Ansteuerleitung eines auszuwählenden Biosensor-Felds und die Detektionseinheit mit der Detektionsleitung des auszuwählenden Biosensor-Felds gekoppelt wird, womit das Biosensor-Feld ausgewählt wird;
o der Ansteuerleitung des ausgewählten Biosensor-Felds ein elektrisches Ansteuersignal bereitgestellt wird;
o an der Detektionsleitung des ausgewählten Biosensor-Felds ein aus dem elektrischen Ansteuersignal resultierendes elektrisches Detektionssignal des ausgewählten Biosensor-Felds erfasst wird.

24. Verfahren nach Anspruch 23,
bei dem für das mindestens eine ausgewählte Biosensor-Feld basierend auf dem Ansteuersignal und dem Detektionssignal ermittelt wird, ob an dem mindestens einen ausgewählten Biosensor-Feld Sensorereignisse erfolgt sind und/oder in welcher Quantität an dem mindestens einen ausgewählten Biosensor-Feld Sensorereignisse erfolgt sind.

25. Biosensor-Array (2200)
• mit einem Substrat (2201);
• mit einer Mehrzahl von auf dem Substrat angeordneten Biosensor-Feldern (2202), von denen jedes einen ersten Anschluss (2203) und einen zweiten Anschluss (2204) aufweist;
• mit mindestens einer ersten Signalleitung (2205) und mit mindestens einer zweiten Signalleitung (2206), wobei
o die mindestens eine erste Signalleitung von der mindestens einen zweiten Signalleitung elektrisch isoliert ist;
o jeweils der erste Anschluss eines jeden Biosensor-Felds mit genau einer der mindestens einen ersten Signalleitung gekoppelt ist und der zweite Anschluss eines jeden Biosensor-Felds mit genau einer der mindestens einen zweiten Signalleitung gekoppelt ist;
o zumindest eine der mindestens einen ersten Signalleitung und zumindest eine der mindestens einen zweiten Signalleitung mit zumindest zwei der Biosensor-Felder gekoppelt ist;
• mit einer ersten Ansteuereinheit (2207) zum Bereitstellen eines ersten elektrischen Ansteuersignals und mit einer zweiten Ansteuereinheit (2208) zum Bereitstellen eines zweiten elektrischen Ansteuersignals,
• mit einer mit der ersten Ansteuereinheit gekoppelten ersten Detektionseinheit (2210) und/oder mit einer mit der zweiten Ansteuereinheit gekoppelten zweiten Detektionseinheit, die derart eingerichtet ist oder sind, dass sie ein aus dem ersten und dem zweiten elektrischen Ansteuersignal resultierendes erstes und/oder zweites elektrisches Detektionssignal eines ausgewählten Biosensor-Felds erfasst oder erfassen;
• mit einer Auswahleinheit (2211) die derart eingerichtet ist, dass sie die erste Ansteuereinheit mit der ersten Signalleitung eines auszuwählenden Biosensor-Felds und die zweite Ansteuereinheit mit der zweiten Signalleitung des auszuwählenden Biosensor-Felds koppelt, womit das Biosensor-Feld ausgewählt wird.

26. Biosensor-Array nach Anspruch 25,
mit einer Auswerteeinheit, die derart eingerichtet ist, dass sie für das mindestens eine ausgewählte Biosensor-Feld basierend auf dem ersten und/oder dem zweiten Detektionssignal ermittelt, ob an dem mindestens einen ausgewählten Biosensor-Feld Sensorereignisse erfolgt sind und/oder in welcher Quantität an dem mindestens einen ausgewählten Biosensor-Feld Sensorereignisse erfolgt sind.

27. Biosensor-Array nach Anspruch 25 oder 26,
bei dem mindestens eines der Biosensor-Felder ein elektrochemisches Biosensor-Feld ist.

28. Biosensor-Array nach Anspruch 27,
bei dem zumindest eines der Biosensor-Felder ein Redox-Recycling-Biosensor-Feld ist.

29. Biosensor-Array nach einem der Ansprüche 25 bis 28,
bei dem das Biosensor-Feld eine erste und eine zweite Elektrode aufweist, wobei die erste Elektrode mit dem ersten Anschluss und wobei die zweite Elektrode mit dem zweiten Anschluss des Biosensor-Felds gekoppelt ist.

30. Biosensor-Array nach Anspruch 29,
bei dem die erste und die zweite Elektrode Interdigitalelektroden sind.

31. Biosensor-Array nach einem der Ansprüche 25 bis 30,
bei dem die Biosensor-Felder zu einer Mehrzahl von Biosensor-Gruppen gruppiert sind derart, dass jede Biosensor-Gruppe wahlweise separat von den anderen Biosensor-Gruppen oder gemeinsam mit zumindest einem Teil der anderen Biosensor-Gruppen betreibbar ist.

32. Biosensor-Array nach einem der Ansprüche 25 bis 31,
bei dem das Substrat
• ein Keramik-Substrat;
• ein Halbleiter-Substrat;
• ein Glas-Substrat; oder
• ein Plastik-Substrat
ist.

33. Biosensor-Array nach einem der Ansprüche 25 bis 32,
bei dem das erste und das zweite elektrische Ansteuersignal elektrische Gleichspannungssignale mit unterschiedlichem Vorzeichen sind und bei dem das erste und/oder zweite elektrische Detektionssignal ein elektrischer Strom ist.

34. Biosensor-Array nach einem der Ansprüche 25 bis 33,
bei dem die Werte des ersten und des zweiten elektrischen Ansteuersignals derart eingestellt sind, dass infolge eines an einem Biosensor-Feld erfolgten Sensorereignisses im Wesentlichen nur dann ein signifikantes erstes und/oder zweites Detektionssignal generiert wird, wenn der erste Anschluss des Biosensor-Felds mit der ersten Ansteuereinheit und der zweite Anschluss des Biosensor-Felds mit der zweiten Ansteuereinheit gekoppelt ist.

35. Biosensor-Array nach einem der Ansprüche 26 bis 34,
bei dem in dem Substrat
• ein Analog-Digital-Wandler-Schaltkreis integriert ist, der derart eingerichtet ist, dass er ein analoges elektrisches Signal in ein digitales Signal umwandeln und der Auswerteeinheit bereitstellen kann; und/oder
• eine elektrische Versorgungseinheit integriert ist, die derart eingerichtet ist, dass sie der ersten und/oder der zweiten Ansteuereinheit und/oder der Auswahleinheit elektrische Spannungssignale und/oder elektrische Stromsignale bereitstellen kann; und/oder
• ein Digital-Analog-Wandler-Schaltkreis integriert ist, der derart eingerichtet ist, dass er ein digitales Signal der Versorgungseinheit in ein analoges Signal umwandeln und der Ansteuereinheit und/oder der Auswahleinheit bereitstellen kann; und/oder
• eine Eingabe-/Ausgabe-Schnittstelle integriert ist; und/oder
• eine Verstärkereinheit, eingerichtet zum Verstärken des ersten und/oder des zweiten elektrischen Detektionssignals, integriert ist.

36. Biosensor-Array nach einem der Ansprüche 25 bis 35,
bei dem die mindestens eine erste Signalleitung und die mindestens eine zweite Signalleitung zumindest teilweise in zwei unterschiedlichen Leitungsebenen in und/oder auf und/oder unter dem Substrat ausgebildet sind.

37. Biosensor-Array nach Anspruch 36,
bei dem die Biosensor-Felder in genau einer der Leitungsebenen ausgebildet sind.

38. Biosensor-Array nach Anspruch 36 oder 37,
bei dem in einem ersten Leitungsabschnitt, in dem die mindestens eine erste Signalleitung und die mindestens eine zweite Signalleitung von einer gegenseitigen Kreuzung frei sind, die mindestens eine erste Signalleitung und die mindestens eine zweite Signalleitung in derselben Ebene verlaufend ausgebildet sind, und bei dem in einem zweiten Leitungsabschnitt, in dem die mindestens eine erste Signalleitung und die mindestens eine zweite Signalleitung sich gegenseitig kreuzen, die mindestens eine erste Signalleitung und die mindestens eine zweite Signalleitung in unterschiedlichen Ebenen verlaufend ausgebildet sind.

39. Biosensor-Array nach Anspruch 38,
bei dem der erste Leitungsabschnitt der mindestens einen ersten Signalleitung und/oder der mindestens einen zweiten Signalleitung mit dem zweiten Leitungsabschnitt der mindestens einen ersten Signalleitung und/oder der mindestens einen zweiten Signalleitung mittels mindestens einem im Wesentlichen vertikal zu dem Substrat verlaufend angeordneten elektrischen Kontaktierungselement gekoppelt sind.

40. Biosensor-Array nach einem der Ansprüche 36 bis 39,
bei dem die mindestens eine erste Signalleitung und/oder die mindestens eine zweite Signalleitung auf einer Unterseite des Substrats oder unterhalb des Substrats verlaufend ausgebildet ist.

41. Biosensor-Array nach einem der Ansprüche 25 bis 40,
bei dem die erste Ansteuereinheit eine für alle Biosensor-Felder gemeinsame erste Versorgungseinheit und/oder die zweite Ansteuereinheit eine für alle Biosensor-Felder gemeinsame zweite Versorgungseinheit aufweist, wobei die erste Versorgungseinheit derart eingerichtet ist, dass mit ihr an das zumindest eine ausgewählte Biosensor-Feld das erste elektrische Ansteuersignal anlegbar ist, und/oder wobei die zweite Versorgungseinheit derart eingerichtet ist, dass mit ihr an das zumindest eine ausgewählte Biosensor-Feld das zweite elektrische Ansteuersignal anlegbar ist.

42. Biosensor-Array nach Anspruch 41,
bei dem die erste und zweite Ansteuereinheit derart eingerichtet sind, dass an zumindest einen Teil der nicht ausgewählten Biosensor-Felder ein elektrisches Referenzsignal anlegbar ist, dessen Wert im Wesentlichen der Mittelwert aus dem ersten und aus dem zweiten Ansteuersignal ist.

43. Biosensor-Array nach einem der Ansprüche 25 bis 42,
bei dem die erste Ansteuereinheit für jeweils eine erste Gruppe von Biosensor-Feldern eine der jeweiligen Gruppe zugehörige erste Versorgungseinheit aufweist, welche erste Versorgungseinheit derart eingerichtet ist, dass mit ihr an die Biosensor-Felder der zugehörigen ersten Gruppe das erste elektrische Ansteuersignal anlegbar ist, und/oder bei dem die zweite Ansteuereinheit für jeweils eine zweite Gruppe von Biosensor-Feldern eine der jeweiligen Gruppe zugehörige zweite Versorgungseinheit aufweist, welche zweite Versorgungseinheit derart eingerichtet ist, dass mit ihr an die Biosensor-Felder der zugehörigen zweiten Gruppe das zweite elektrische Ansteuersignal anlegbar ist.

44. Biosensor-Array nach einem der Ansprüche 25 bis 43,
bei dem die erste Detektionseinheit eine für alle Biosensor-Felder gemeinsame erste Messeinheit aufweist, welche erste Messeinheit derart eingerichtet ist, dass mit ihr an genau einem ausgewählten Biosensor-Feld das elektrische erste Detektionssignal erfassbar ist und/oder bei dem die zweite Detektionseinheit eine für alle Biosensor-Felder gemeinsame zweite Messeinheit aufweist, welche zweite Messeinheit derart eingerichtet ist, dass mit ihr an genau einem ausgewählten Biosensor-Feld das elektrische zweite Detektionssignal erfassbar ist.

45. Biosensor-Array nach einem der Ansprüche 25 bis 44,
bei dem die erste Detektionseinheit für jeweils eine dritte Gruppe von Biosensor-Feldern eine der jeweiligen dritten Gruppe zugehörige erste Messeinheit aufweist, wobei jede der ersten Messeinheiten derart eingerichtet ist, dass mit ihr an genau einem ausgewählten Biosensor-Feld der zugehörigen dritten Gruppe das elektrische erste Detektionssignal erfassbar ist und/oder bei dem die zweite Detektionseinheit für jeweils eine vierte Gruppe von Biosensor-Feldern eine der jeweiligen vierten Gruppe zugehörige zweite Messeinheit aufweist, wobei jede der zweiten Messeinheiten derart eingerichtet ist, dass mit ihr an genau einem ausgewählten Biosensor-Feld der zugehörigen vierten Gruppe das elektrische zweite Detektionssignal erfassbar ist.

46. Biosensor-Array nach einem der Ansprüche 25 bis 45,
mit einer Potentiostat-Einrichtung, die derart eingerichtet ist, dass mit ihr einem in zumindest einen Teil der Biosensor-Felder eingebrachten Elektrolyten ein konstantes elektrisches Potential vorgebbar ist.

47. Biosensor-Array nach Anspruch 46,
bei dem die Potentiostat-Einrichtung eine Referenzelektrode, eine Gegenelektrode und einen Operationsverstärker aufweist, wobei ein erster Eingang des Operationsverstärkers mit der Referenzelektrode, ein zweiter Eingang des Operationsverstärkers mit einem Referenzpotential und ein Ausgang des Operationsverstärkers mit der Gegenelektrode gekoppelt ist.

48. Verfahren zum Betreiben eines Biosensor-Arrays
• mit einem Biosensor-Array
o mit einem Substrat;
o mit einer Mehrzahl von auf dem Substrat angeordneten Biosensor-Feldern, von denen jedes einen ersten Anschluss und einen zweiten Anschluss aufweist;
o mit mindestens einer ersten Signalleitung und mit mindestens einer zweiten Signalleitung, wobei
■ die mindestens eine erste Signalleitung von der mindestens einen zweiten Signalleitung elektrisch isoliert ist;
■ jeweils der erste Anschluss eines jeden Biosensor-Felds mit genau einer der mindestens einen ersten Signalleitung gekoppelt ist und der zweite Anschluss eines jeden Biosensor-Felds mit genau einer der mindestens einen zweiten Signalleitung gekoppelt ist;
■ zumindest eine der mindestens einen ersten Signalleitung und zumindest eine der mindestens einen zweiten Signalleitung mit zumindest zwei der Biosensor-Felder gekoppelt ist;
o mit einer ersten Ansteuereinheit zum Bereitstellen eines ersten elektrischen Ansteuersignals und mit einer zweiten Ansteuereinheit zum Bereitstellen eines zweiten elektrischen Ansteuersignals,
o mit einer mit der ersten Ansteuereinheit gekoppelten ersten Detektionseinheit und/oder mit einer mit der zweiten Ansteuereinheit gekoppelten zweiten Detektionseinheit, die derart eingerichtet ist oder sind, dass sie ein aus dem ersten und dem zweiten elektrischen Ansteuersignal resultierendes erstes und/oder zweites elektrisches Detektionssignal eines ausgewählten Biosensor-Felds erfasst oder erfassen;
o mit einer Auswahleinheit, die derart eingerichtet ist, dass sie die erste Ansteuereinheit mit der ersten Signalleitung eines auszuwählenden Biosensor-Felds und die zweite Ansteuereinheit mit der zweiten Signalleitung des auszuwählenden Biosensor-Felds koppelt, womit das Biosensor-Feld ausgewählt wird;
• wobei gemäß dem Verfahren
o die erste Ansteuereinheit mit der ersten Signalleitung eines auszuwählenden Biosensor-Felds und die zweite Ansteuereinheit mit der zweiten Signalleitung des auszuwählenden Biosensor-Felds gekoppelt wird, womit das Biosensor-Feld ausgewählt wird;
o der ersten Signalleitung des ausgewählten Biosensor-Felds ein erstes elektrisches Ansteuersignal und der zweiten Signalleitung des ausgewählten Biosensor-Felds ein zweites elektrisches Ansteuersignal bereitgestellt wird;
o ein aus dem ersten und dem zweiten elektrischen Ansteuersignal resultierendes erstes Detektionssignal an der ersten Signalleitung des ausgewählten Biosensor-Felds und/oder ein aus dem ersten und dem zweiten elektrischen Ansteuersignal resultierendes zweites Detektionssignal an der zweiten Signalleitung des ausgewählten Biosensor-Felds erfasst wird oder werden.

49. Verfahren nach Anspruch 48,
bei dem für das mindestens eine ausgewählte Biosensor-Feld basierend auf dem ersten und/oder dem zweiten Detektionssignal ermittelt wird, ob an dem mindestens einen ausgewählten Biosensor-Feld Sensorereignisse erfolgt sind und/oder in welcher Quantität an dem mindestens einen ausgewählten Biosensor-Feld Sensorereignisse erfolgt sind.

## Claims

1. A biosensor array (600)
• having a substrate (601);
• having a plurality of biosensor zones (602) arranged on the substrate, each of which biosensor zones has a first terminal (603) and a second terminal (604);
• having at least one drive line and having at least one detection line,
o the at least one drive line being electrically insulated from the at least one detection line;
o in each case the first terminal of each biosensor zone being coupled to precisely one of the at least one drive line and the second terminal of each biosensor zone being coupled to precisely one of the at least one detection lines;
o at least one of the at least one drive line and at least one of the at least one detection line being coupled to at least two of the biosensor zones;
• having a drive unit (607) for providing an electrical drive signal;
• having a detection unit (608) for detecting an electrical detection signal resulting from the electrical drive signal; and
• having a selection unit (609) set up in such a way that it couples the drive unit to the drive line of a biosensor zone to be selected and the detection unit to the detection line of the biosensor zone to be selected, whereby the biosensor zone is selected.

2. The biosensor array as claimed in claim 1,
having an evaluation unit set up in such a way that it determines for the at least one selected biosensor zone on the basis of the drive signal and the detection signal whether sensor events have taken place at the at least one selected biosensor zone and/or the quantity in which sensor events have taken place at the at least one selected biosensor zone.

3. The biosensor array as claimed in claim 1 or 2,
in which at least one of the biosensor zones is
• an electrochemical biosensor zone; or
• an impedance biosensor zone.

4. The biosensor array as claimed in claim 3,
in which at least one biosensor zone set up as an electrochemical biosensor zone is a redox recycling biosensor zone.

5. The biosensor array as claimed in one of claims 1 to 4,
in which at least one biosensor zone is an interdigital electrode biosensor zone.

6. The biosensor array as claimed in one of claims 1 to 5,
in which the biosensor zones are grouped to form a plurality of biosensor groups in such a way that each biosensor group can optionally be operated separately from the other biosensor groups or jointly with at least a portion of the other biosensor groups.

7. The biosensor array as claimed in one of claims 1 to 6,
in which the substrate is
• a ceramic substrate;
• a semiconductor substrate;
• a glass substrate; or
• a plastic substrate.

8. The biosensor array as claimed in one of claims 1 to 7,
in which the electrical drive signal is a temporally variable electrical signal.

9. The biosensor array as claimed in one of claims 1 to 8,
in which
• the drive signal is a temporally variable electrical voltage and the detection signal is a temporally variable electric current; or
• the drive signal is a temporally variable electric current and the detection signal is a temporally variable electrical voltage.

10. The biosensor array as claimed in one of claims 2 to 9,
in which, in the substrate,
• an analog-to-digital converter circuit is integrated, which is set up in such a way that it can convert an analog electrical signal into a digital signal and provide it to the evaluation unit; and/or
• an electrical supply unit is integrated, which is set up in such a way that it can provide electrical voltage signals and/or electric current signals to the drive unit and/or to the selection unit; and/or
• a digital-to-analog converter circuit is integrated, which is set up in such a way that it can convert a digital voltage signal and/or current signal of the supply unit into an analog signal and provide it to the drive unit and/or to the selection unit; and/or
• an input/output interface is integrated; and/or
• an amplifier unit, set up for amplifying the electrical detection signal, is integrated.

11. The biosensor array as claimed in one of claims 1 to 10,
in which the at least one drive line and the at least one detection line are at least partly formed in two different line planes in and/or on and/or below the substrate.

12. The biosensor array as claimed in claim 11,
in which the biosensor zones are formed in precisely one of the line planes.

13. The biosensor array as claimed in claim 11 or 12,
in which, in a first line section, in which the at least one drive line and the at least one detection line are free of a mutual crossover, the at least one drive line and the at least one detection line are formed such that they run in the same plane, and in which, in a second line section, in which the at least one drive line and the at least one detection line mutually cross one another, the at least one drive line and the at least one detection line are formed such that they run in different planes.

14. The biosensor array as claimed in claim 13,
in which the first line section of the at least one drive line and/or of the at least one detection line are coupled to the second line section of the at least one drive line and/or of the at least one detection line by means of at least one electrical contact-connection element arranged in a manner essentially running vertically with respect to the substrate.

15. The biosensor array as claimed in one of claims 11 to 14,
in which the at least one drive line and/or the at least one detection line is formed in a manner running on an underside of the substrate or beneath the substrate.

16. The biosensor array as claimed in one of claims 1 to 15,
in which the drive unit has a supply unit that is common to all the biosensor zones and is set up in such a way that it can be used to apply the electrical drive signal to the at least one selected biosensor zone.

17. The biosensor array as claimed in claim 16,
in which the drive unit and/or the detection unit are set up in such a way that an electrical reference signal can be applied to at least a portion of the nonselected biosensor zones.

18. The biosensor array as claimed in one of claims 1 to 16,
in which the drive unit has, for a respective group of biosensor zones, a supply unit that is associated with the respective group and is set up in such a way that it can be used to apply the electrical drive signal to the biosensor zones of the associated group.

19. The biosensor array as claimed in one of claims 1 to 18,
in which the detection unit has a measuring unit that is common to all the biosensor zones and is set up in such a way that it can be used to detect the electrical detection signal at precisely one selected biosensor zone.

20. The biosensor array as claimed in one of claims 1 to 18,
in which the detection unit has, for a respective group of biosensor zones, a measuring unit that is associated with the respective group, each of the measuring units being set up in such a way that it can be used to detect the electrical detection signal at precisely one selected biosensor zone of the associated group.

21. The biosensor array as claimed in one of claims 1 to 20, having a potentiostat device (706, 707, 708) set up in such a way that it can be used to predefine a constant electrical potential for at least a portion of the biosensor zones.

22. The biosensor array as claimed in claim 21,
in which the potentiostat device has a reference electrode, a counterelectrode and an operational amplifier, a first input of the operational amplifier being coupled to the reference electrode, a second input of the operational amplifier being coupled to a reference potential and an output of the operational amplifier being coupled to the counterelectrode.

23. A method for operating a biosensor array,
• having a biosensor array
o having a substrate;
o having a plurality of biosensor zones arranged on the substrate, each of which biosensor zones has a first terminal and a second terminal;
o having at least one drive line and having at least one detection line,
• the at least one drive line being electrically insulated from the at least one detection line;
• in each case the first terminal of each biosensor zone being coupled to precisely one of the at least one drive line and the second terminal of each biosensor zone being coupled to precisely one of the at least one detection lines;
• at least one of the at least one drive line and at least one of the at least one detection line being coupled to at least two of the biosensor zones;
o having a drive unit for providing an electrical drive signal;
o having a detection unit for detecting an electrical detection signal resulting from the electrical drive signal; and
o having a selection unit set up in such a way that it couples the drive unit to the drive line of a biosensor zone to be selected and the detection unit to the detection line of the biosensor zone to be selected, whereby the biosensor zone is selected;
• in which case, in accordance with the method,
o the drive unit is coupled to the drive line of a biosensor zone to be selected and the detection unit is coupled to the detection line of the biosensor zone to be selected, whereby the biosensor zone is selected;
o the drive line of the selected biosensor zone is provided with an electrical drive signal;
o an electrical detection signal of the selected biosensor zone that results from the electrical drive signal is detected on the detection line of the selected biosensor zone.

24. The method as claimed in claim 23,
in which, for the at least one selected biosensor zone on the basis of the drive signal and the detection signal, it is determined whether sensor events have taken place at the at least one selected biosensor zone and/or the quantity in which sensor events have taken place at the at least one selected biosensor zone.

25. A biosensor array (2200)
• having a substrate (2201),
• having a plurality of biosensor zones (2202) arranged on the substrate, each of which biosensor zones has a first terminal (2203) and a second terminal (2204) ;
• having at least one first signal line (2205) and having at least one second signal line (2206),
o the at least one first signal line being electrically insulated from the at least one second signal line;
o in each case the first terminal of each biosensor zone being coupled to precisely one of the at least one first signal line and the second terminal of each biosensor zone being coupled to precisely one of the at least one second signal line;
o at least one of the at least one first signal line and at least one of the at least one second signal line being coupled to at least two of the biosensor zones;
• having a first drive unit (2207) for providing a first electrical drive signal and having a second drive unit (2208) for providing a second electrical drive signal,
• having a first detection unit coupled to the first drive unit (2210) and/or having a second detection unit coupled to the second drive unit, which is or are set up in such a way that it detects or they detect a first and/or second electrical detection signal of a selected biosensor zone that results from the first and the second electrical drive signal;
• having a selection unit (2211) set up in such a way that it couples the first drive unit to the first signal line of a biosensor zone to be selected and the second drive unit to the second signal line of the biosensor zone to be selected, whereby the biosensor zone is selected.

26. The biosensor array as claimed in claim 25,
having an evaluation unit set up in such a way that it determines for the at least one selected biosensor zone on the basis of the first and/or the second detection signal whether sensor events have taken place at the at least one selected biosensor zone and/or the quantity in which sensor events have taken place at the at least one selected biosensor zone.

27. The biosensor array as claimed in claim 25 or 26,
in which at least one of the biosensor zones is an electrochemical biosensor zone.

28. The biosensor array as claimed in claim 27,
in which at least one of the biosensor zones is a redox recycling biosensor zone.

29. The biosensor array as claimed in one of claims 25 to 28,
in which the biosensor zone has a first and a second electrode, the first electrode being coupled to the first terminal and the second electrode being coupled to the second terminal of the biosensor zone.

30. The biosensor array as claimed in claim 29,
in which the first and the second electrode are interdigital electrodes.

31. The biosensor array as claimed in one of claims 25 to 30,
in which the biosensor zones are grouped to form a plurality of biosensor groups in such a way that each biosensor group can optionally be operated separately from the other biosensor groups or jointly with at least a portion of the other biosensor groups.

32. The biosensor array as claimed in one of claims 25 to 31,
in which the substrate is
• a ceramic substrate;
• a semiconductor substrate;
• a glass substrate; or
• a plastic substrate.

33. The biosensor array as claimed in one of claims 25 to 32,
in which the first and the second electrical drive signal are electrical DC voltage signals having a different sign, and in which the first and/or second electrical detection signal is an electric current.

34. The biosensor array as claimed in one of claims 25 to 33,
in which the values of the first and of the second electrical drive signal are set in such a way that, on account of a sensor event that has taken place at a biosensor zone, a significant first and/or second detection signal is generated essentially only when the first terminal of the biosensor zone is coupled to the first drive unit and the second terminal of the biosensor zone is coupled to the second drive unit.

35. The biosensor array as claimed in one of claims 26 to 34,
in which, in the substrate,
• an analog-to-digital converter circuit is integrated, which is set up in such a way that it can convert an analog electrical signal into a digital signal and provide it to the evaluation unit; and/or
• an electrical supply unit is integrated, which is set up in such a way that it can provide electrical voltage signals and/or electric current signals to the first and/or the second drive unit and/or to the selection unit; and/or
• a digital-to-analog converter circuit is integrated, which is set up in such a way that it can convert a digital signal of the supply unit into an analog signal and provide it to the drive unit and/or to the selection unit; and/or
• an input/output interface is integrated; and/or
• an amplifier unit, set up for amplifying the first and/or the second electrical detection signal, is integrated.

36. The biosensor array as claimed in one of claims 25 to 35,
in which the at least one first signal line and the at least one second signal line are at least partly formed in two different line planes in and/or on and/or below the substrate.

37. The biosensor array as claimed in claim 36,
in which the biosensor zones are formed in precisely one of the line planes.

38. The biosensor array as claimed in claim 36 or 37,
in which, in a first line section, in which the at least one first signal line and the at least one second signal line are free of a mutual crossover, the at least one first signal line and the at least one second signal line are formed such that they run in the same plane, and in which, in a second line section, in which the at least one first signal line and the at least one second signal line mutually cross one another, the at least one first signal line and the at least one second signal line are formed such that they run in different planes.

39. The biosensor array as claimed in claim 38,
in which the first line section of the at least one first signal line and/or of the at least one second signal line are coupled to the second line section of the at least one first signal line and/or of the at least one second signal line by means of at least one electrical contact-connection element arranged in a manner essentially running vertically with respect to the substrate.

40. The biosensor array as claimed in one of claims 36 to 39,
in which the at least one first signal line and/or the at least one second signal line is formed in a manner running on an underside of the substrate or beneath the substrate.

41. The biosensor array as claimed in one of claims 25 to 40,
in which the first drive unit has a first supply unit that is common to all the biosensor zones and/or the second drive unit has a second supply unit that is common to all the biosensor zones, the first supply unit being set up in such a way that it can be used to apply the first electrical drive signal to the at least one selected biosensor zone, and/or the second supply unit being set up in such a way that it can be used to apply the second electrical drive signal to the at least one selected biosensor zone.

42. The biosensor array as claimed in claim 41,
in which the first and second drive units are set up in such a way that an electrical reference signal can be applied to at least a portion of the nonselected biosensor zones, the value of said electrical reference signal essentially being the average value of the first and the second drive signal.

43. The biosensor array as claimed in one of claims 25 to 42,
in which the first drive unit has, for a respective first group of biosensor zones, a first supply unit that is associated with the respective group, which first supply unit is set up in such a way that it can be used to apply the first electrical drive signal to the biosensor zones of the associated first group, and/or in which the second drive unit has, for a respective second group of biosensor zones, a second supply unit that is associated with the respective group, which second supply unit is set up in such a way that it can be used to apply the second electrical drive signal to the biosensor zones of the associated second group.

44. The biosensor array as claimed in one of claims 25 to 43,
in which the first detection unit has a first measuring unit that is common to all the biosensor zones, which first measuring unit is set up in such a way that it can be used to detect the electrical first detection signal at precisely one selected biosensor zone, and/or in which the second detection unit has a second measuring unit that is common to all the biosensor zones, which second measuring unit is set up in such a way that it can be used to detect the electrical second detection signal at precisely one selected biosensor zone.

45. The biosensor array as claimed in one of claims 25 to 44,
in which the first detection unit has, for a respective third group of biosensor zones, a first measuring unit that is associated with the respective third group, each of the first measuring units being set up in such a way that it can be used to detect the electrical first detection signal at precisely one selected biosensor zone of the associated third group, and/or in which the second detection unit has, for a respective fourth group of biosensor zones, a second measuring unit that is associated with the respective fourth group, each of the second measuring units being set up in such a way that it can be used to detect the electrical second detection signal at precisely one selected biosensor zone of the associated fourth group.

46. The biosensor array as claimed in one of claims 25 to 45,
having a potentiostat device set up in such a way that it can be used to predefine a constant electrical potential for an electrolyte introduced into at least a portion of the biosensor zones.

47. The biosensor array as claimed in claim 46,
in which the potentiostat device has a reference electrode, a counterelectrode and an operational amplifier, a first input of the operational amplifier being coupled to the reference electrode, a second input of the operational amplifier being coupled to a reference potential and an output of the operational amplifier being coupled to the counterelectrode.

48. A method for operating a biosensor array
• having a biosensor array
o having a substrate,
o having a plurality of biosensor zones arranged on the substrate, each of which biosensor zones has a first terminal and a second terminal;
o having at least one first signal line and having at least one second signal line,
■ the at least one first signal line being electrically insulated from the at least one second signal line;
■ in each case the first terminal of each biosensor zone being coupled to precisely one of the at least one first signal line and the second terminal of each biosensor zone being coupled to precisely one of the at least one second signal line;
■ at least one of the at least one first signal line and at least one of the at least one second signal line being coupled to at least two of the biosensor zones;
o having a first drive unit for providing a first electrical drive signal and having a second drive unit for providing a second electrical drive signal,
o having a first detection unit coupled to the first drive unit and/or having a second detection unit coupled to the second drive unit, which is or are set up in such a way that it detects or they detect a first and/or second electrical detection signal of a selected biosensor zone that results from the first and the second electrical drive signal;
o having a selection unit set up in such a way that it couples the first drive unit to the first signal line of a biosensor zone to be selected and the second drive unit to the second signal line of the biosensor zone to be selected, whereby the biosensor zone is selected;
• in which case, in accordance with the method,
o the first drive unit is coupled to the first signal line of a biosensor zone to be selected and the second drive unit is coupled to the second signal line of the biosensor zone to be selected, whereby the biosensor zone is selected;
o the first signal line of the selected biosensor zone is provided with a first electrical drive signal and the second signal line of the selected biosensor zone is provided with a second electrical drive signal;
o a first detection signal resulting from the first and the second electrical drive signal is detected on the first signal line of the selected biosensor zone and/or a second detection signal resulting from the first and the second electrical drive signal is detected on the second signal line of the selected biosensor zone.

49. The method as claimed in claim 48,
in which, for the at least one selected biosensor zone on the basis of the first and/or the second detection signal, it is determined whether sensor events have taken place at the at least one selected biosensor zone and/or the quantity in which sensor events have taken place at the at least one selected biosensor zone.

## Revendications

1. Réseau de biocapteurs (600) comportant
- un substrat (601) ;
- une pluralité de zones de biocapteurs (602) qui sont disposées sur le substrat et qui comportent chacune une première borne (603) et une deuxième borne (604) ;
- au moins une ligne de commande et au moins une ligne de détection,
* l'au moins une ligne de commande étant électriquement isolée de l'au moins une ligne de détection ;
* la première borne de chaque zone de biocapteurs étant couplée à une seule de l'au moins une ligne de commande et la deuxième borne de chaque zone de biocapteurs étant couplée à une seule de l'au moins une ligne de détection ;
* au moins une de l'au moins une ligne de commande et au moins une de l'au moins une ligne de détection étant couplées à au moins deux des zones de biocapteurs ;
- une unité de commande (607) destinée à délivrer un signal de commande électrique ;
- une unité de détection (608) destinée à détecter un signal de détection électrique résultant du signal de commande électrique ; et
- une unité de sélection (609) qui est conçue de façon à coupler l'unité de commande à une ligne de commande d'une zone de biocapteurs à sélectionner et à coupler l'unité de détection à une ligne de détection de la zone de biocapteurs à sélectionner, ce qui permet de sélectionner la zone de biocapteurs.

2. Réseau de biocapteurs selon la revendication 1, comportant une unité d'exploitation qui est conçue de façon à déterminer pour l'au moins une zone de biocapteurs sélectionnée, en se fondant sur le signal de commande et sur le signal de détection, si des événements de capteurs se sont produits au niveau de l'au moins une zone de biocapteurs sélectionnée et/ou dans quelle quantité les événements de signal se sont produits au niveau de l'au moins une zone de biocapteurs sélectionnée.

3. Réseau de biocapteurs selon la revendication 1 ou 2, dans lequel au moins une des zones de biocapteurs est
- une zone de biocapteurs électrochimique ; ou
- une zone de biocapteurs à impédance.

4. Réseau de biocapteurs selon la revendication 3, dans lequel au moins une zone de biocapteurs conformée en zone de biocapteurs électrochimique est une zone de biocapteurs à recyclage Redox.

5. Réseau de biocapteurs selon l'une des revendications 1 à 4, dans lequel au moins une zone de biocapteurs est une zone de biocapteurs à électrodes interdigitales.

6. Réseau de biocapteurs selon l'une des revendications 1 à 5, dans lequel les zones de biocapteurs sont regroupées en une pluralité de groupes de biocapteurs de telle sorte que chaque groupe de biocapteurs peut être exploité au choix séparément des autres groupes de biocapteurs ou conjointement avec au moins une partie des autres groupes de biocapteurs.

7. Réseau de biocapteurs selon l'une des revendications 1 à 6, dans lequel le substrat est
- un substrat de céramique ;
- un substrat de semi-conducteur ;
- un substrat de verre ; ou
- un substrat de matière plastique.

8. Réseau de biocapteurs selon l'une des revendications 1 à 7, dans lequel le signal de commande électrique est un signal électrique variable dans le temps.

9. Réseau de biocapteurs selon l'une des revendications 1 à 8, dans lequel
- le signal de commande est une tension électrique variable dans le temps et le signal de détection est un courant électrique variable dans le temps ; ou
- le signal de commande est un courant électrique variable dans le temps et le signal de détection est une tension électrique variable dans le temps.

10. Réseau de biocapteurs selon l'une des revendications 2 à 9, dans lequel il est intégré dans le substrat
- un circuit convertisseur analogique/numérique qui est conçu de façon à pouvoir convertir un signal électrique analogique en un signal numérique et à pouvoir délivrer ledit signal numérique à l'unité d'exploitation ; et/ou
- une unité d'alimentation électrique qui est conçue de façon à pouvoir délivrer à l'unité de commande et/ou à l'unité de sélection des signaux de tension électrique et/ou des signaux de courant électrique ; et/ou
- un circuit convertisseur numérique/analogique qui est conçu de façon à pouvoir convertir un signal de tension numérique et/ou un signal de courant numérique de l'unité d'alimentation en un signal analogique et à pouvoir délivrer ledit signal analogique à l'unité de commande et/ou à l'unité d'exploitation ; et/ou
- une interface entrée/sortie ; et/ou
- une unité d'amplification conçue pour amplifier le signal de détection électrique.

11. Réseau de biocapteurs selon l'une des revendications 1 à 10, dans lequel l'au moins une ligne de commande et l'au moins une ligne de détection sont conformées au moins partiellement dans deux plans de lignes différents dans et/ou sur et/ou sous le substrat.

12. Réseau de biocapteurs selon la revendication 11, dans lequel les zones de biocapteurs sont conformées dans un seul des plans de lignes.

13. Réseau de biocapteurs selon la revendication 11 ou 12, dans lequel, dans une première portion de lignes dans laquelle l'au moins une ligne de commande et l'au moins une ligne de détection ne se croisent pas, l'au moins une ligne de commande et l'au moins une ligne de détection sont conformées de façon à s'étendre dans le même plan, et dans lequel, dans une deuxième portion de lignes dans laquelle l'au moins une ligne de commande et l'au moins une ligne détection se croisent, l'au moins une ligne de commande et l'au moins une ligne de détection sont conformées de façon à s'étendre dans des plans différents.

14. Réseau de biocapteurs selon la revendication 13, dans lequel la première portion de lignes de l'au moins une ligne de commande et/ou de l'au moins une ligne de détection est couplée à la deuxième portion de lignes de l'au moins une ligne de commande et/ou de l'au moins une ligne de détection au moyen d'au moins un élément de contact électrique disposé de façon à s'étendre sensiblement verticalement au substrat.

15. Réseau de biocapteurs selon l'une des revendications 11 à 14, dans lequel l'au moins une ligne de commande et/ou l'au moins une ligne de détection sont conformées de façon à s'étendre sur une face inférieure du substrat ou au-dessous du substrat.

16. Réseau de biocapteurs selon l'une des revendications 1 à 15, dans lequel l'unité de commande comporte une unité d'alimentation qui est commune à toutes les zones de biocapteurs et qui est conçue de façon à pouvoir appliquer le signal de commande électrique à l'au moins une zone de biocapteurs sélectionnée.

17. Réseau de biocapteurs selon la revendication 16, dans lequel l'unité de commande et/ou l'unité de détection sont conçues de façon à pouvoir appliquer un signal de référence électrique à au moins une partie des zones de biocapteurs non sélectionnées.

18. Réseau de biocapteurs selon l'une des revendications 1 à 16, dans lequel l'unité de commande comporte pour chaque groupe de zones de biocapteurs une unité d'alimentation qui est associée au groupe respectif et qui est conçue de façon à pouvoir appliquer le signal de commande électrique aux zones de biocapteurs du groupe associé.

19. Réseau de biocapteurs selon l'une des revendications 1 à 18, dans lequel l'unité de détection comporte une unité de mesure qui est commune à toutes les zones de biocapteurs et qui est conçue de façon à pouvoir détecter le signal de détection électrique au niveau d'une seule zone de biocapteurs sélectionnée.

20. Réseau de biocapteurs selon l'une des revendications 1 à 18, dans lequel l'unité de détection comporte pour chaque groupe de zones de biocapteurs une unité de mesure associée au groupe respectif, chacune des unités de mesure étant conçue de façon à pouvoir détecter le signal de détection électrique au niveau d'une seule zone de biocapteurs sélectionnée du groupe associé.

21. Réseau de biocapteurs selon l'une des revendications 1 à 20, comportant un dispositif potentiostatique (706, 707, 708) qui est conçu de façon à pouvoir appliquer un potentiel électrique constant à au moins une partie des zones de biocapteurs.

22. Réseau de biocapteurs selon la revendication 21, dans lequel le dispositif potentiostatique comporte une électrode de référence, une contre-électrode et un amplificateur opérationnel, une première entrée de l'amplificateur opérationnel étant couplée à électrode de référence, une deuxième entrée de l'amplificateur opérationnel étant couplée à un potentiel de référence et une sortie de l'amplificateur opérationnel étant couplée à la contre-électrode.

23. Procédé pour faire fonctionner un réseau de biocapteurs
• au moyen d'un biocapteur comportant
- un substrat ;
- une pluralité de zones de biocapteurs qui sont disposées sur le substrat et qui comportent chacune une première borne et une deuxième borne ;
- au moins une ligne de commande et au moins une ligne de détection,
* l'au moins une ligne de commande étant électriquement isolée de l'au moins une ligne de détection ;
* la première borne de chaque zone de biocapteurs étant couplée à une seule de l'au moins une ligne de commande et la deuxième borne de chaque zone de biocapteurs étant couplée à une seule de l'au moins une ligne de détection ;
* au moins une de l'au moins une ligne de commande et au moins une de l'au moins une ligne de détection étant couplées à au moins deux des zones de biocapteurs ;
- une unité de commande destinée à délivrer un signal de commande électrique ;
- une unité de détection destinée à détecter un signal de détection électrique résultant du signal de commande électrique ; et
- une unité de sélection qui est conçue de façon à coupler l'unité de commande à une ligne de commande d'une zone de biocapteurs à sélectionner et à coupler l'unité de détection à une ligne de détection de la zone de biocapteurs à sélectionner, ce qui permet de sélectionner la zone de biocapteurs ;
• selon le procédé,
- l'unité de commande étant couplée à la ligne de commande d'une zone de biocapteurs à sélectionner et l'unité de détection étant couplée à la ligne de détection de la zone de biocapteurs à sélectionner, ce qui permet de sélectionner la zone de biocapteurs ;
- un signal de commande électrique étant délivré à la ligne de commande de la zone de biocapteurs sélectionnée ;
- un signal de détection électrique, résultant du signal de commande électrique, de la zone de biocapteurs sélectionnée étant détecté sur la ligne de détection de la zone de biocapteurs sélectionnée.

24. Procédé selon la revendication 23, dans lequel on détermine pour l'au moins une zone de biocapteurs sélectionnée, en se fondant sur le signal de commande et sur le signal de détection, si des événements de capteurs se sont produits au niveau de l'au moins une zone de biocapteurs sélectionnée et/ou dans quelle quantité les événements de signal se sont produits au niveau de l'au moins une zone de biocapteurs sélectionnée.

25. Réseau de biocapteurs (2200) comportant
- un substrat (2201) ;
- une pluralité de zones de biocapteurs (2202) qui sont disposées sur le substrat et qui comportent chacune une première borne (2203) et une deuxième borne (2204) ;
- au moins une première ligne de signal (2205) et au moins une deuxième ligne de signal (2206),
* l'au moins une première ligne de signal étant électriquement isolée de l'au moins une deuxième ligne de signal ;
* la première borne de chaque zone de biocapteurs étant couplée à une seule de l'au moins une ligne de signal et la deuxième borne de chaque zone de biocapteurs étant couplée à une seule de l'au moins une ligne de signal ;
* au moins une de l'au moins une première ligne de signal et au moins une de l'au moins une deuxième ligne de signal étant couplées à au moins deux des zones de biocapteurs ;
- une première unité de commande (2207) destinée à délivrer un signal de commande électrique et une deuxième unité de commande (2208) destinée à délivrer un deuxième signal de commande électrique ;
- une première unité de détection (2210) destinée à détecter un premier signal de détection électrique et/ou une deuxième unité de détection destinée à détecter un deuxième signal de détection électrique, lesdites unités de détection étant conçues de façon à détecter un premier et/ou deuxième signal de détection électrique, résultant du premier et du deuxième signal de commande électrique, d'une zone de biocapteurs sélectionnée ;
- une unité de sélection (2211) qui est conçue de façon à coupler la première unité de commande à la première ligne de signal d'une zone de biocapteurs à sélectionner et à coupler la deuxième unité de détection à une deuxième ligne de signal de la zone de biocapteurs à sélectionner, ce qui permet de sélectionner la zone de biocapteurs.

26. Réseau de biocapteurs selon la revendication 25, comportant une unité d'exploitation qui est conçue de façon à déterminer pour l'au moins une zone de biocapteurs sélectionnée, en se fondant sur le premier et/ou deuxième signal de détection, si des événements de capteurs se sont produits au niveau de l'au moins une zone de biocapteurs sélectionnée et/ou dans quelle quantité les événements de signal se sont produits au niveau de l'au moins une zone de biocapteurs sélectionnée.

27. Réseau de biocapteurs selon la revendication 25 ou 26, dans lequel au moins une des zones de biocapteurs est une zone de biocapteurs électrochimique.

28. Réseau de biocapteurs selon la revendication 27, dans lequel au moins une zone de biocapteurs est une zone de biocapteurs à recyclage Redox.

29. Réseau de biocapteurs selon l'une des revendications 25 à 28, dans lequel la zone de biocapteurs comporte une première électrode et une deuxième électrode, la première électrode étant couplée à la première borne et la deuxième électrode étant couplée à la deuxième borne de la zone de biocapteurs.

30. Réseau de biocapteurs selon la revendication 29, dans lequel la première électrode et la deuxième électrode sont des électrodes interdigitales.

31. Réseau de biocapteurs, selon l'une des revendications 25 à 30, dans lequel les zones de biocapteurs sont regroupées en une pluralité de groupes de biocapteurs de telle sorte que chaque groupe de biocapteurs peut être exploité au choix séparément des autres groupes de biocapteurs ou conjointement avec au moins une partie des autres groupes de biocapteurs.

32. Réseau de biocapteurs selon l'une des revendications 25 à 31, dans lequel le substrat est
- un substrat de céramique ;
- un substrat de semi-conducteur ;
- un substrat de verre ; ou
- un substrat de matière plastique.

33. Réseau de biocapteurs selon l'une des revendications 25 à 32, dans lequel le premier signal de commande électrique et le deuxième signal de commande électrique sont des signaux de tension continue électrique de signes différents et dans lequel le premier signal de détection électrique et/ou le deuxième signal de détection électrique sont des courants électriques.

34. Réseau de biocapteurs selon l'une des revendications 25 à 33, dans lequel les valeurs du premier signal de commande électrique et du deuxième signal de commande électrique sont réglées de façon à ne générer un premier signal de détection significatif et/ou un deuxième signal de détection, à la suite d'un événement de capteur qui s'est produit au niveau d'une zone de biocapteurs, que lorsque la première borne de la zone de biocapteurs est couplée à la première unité de commande et que la deuxième borne de la zone de biocapteurs est couplée à la deuxième unité de commande.

35. Réseau de biocapteurs selon l'une des revendications 26 à 34, dans lequel il est intégré dans le substrat
- un circuit convertisseur analogique/numérique qui est conçu de façon à pouvoir convertir un signal électrique analogique en un signal numérique et à pouvoir délivrer ledit signal numérique à l'unité d'exploitation ; et/ou
- une unité d'alimentation électrique qui est conçue de façon à pouvoir délivrer à la première unité de commande et/ou à la deuxième unité de commande et/ou à l'unité de sélection des signaux de tension électrique et/ou des signaux de courant électrique ; et/ou
- un circuit convertisseur numérique/analogique qui est conçu de façon à pouvoir convertir un signal numérique de l'unité d'alimentation en un signal analogique et à pouvoir délivrer ledit signal analogique à l'unité de commande et/ou à l'unité d'exploitation ; et/ou
- une interface entrée/sortie ; et/ou
- une unité d'amplification conçue pour amplifier le premier signal de détection électrique et/ou le deuxième signal de détection électrique.

36. Réseau de biocapteurs selon l'une des revendications 25 à 35, dans lequel l'au moins une première ligne de signal et l'au moins une deuxième ligne de signal sont conformées au moins partiellement dans deux plans de lignes différents dans et/ou sur et/ou sous le substrat.

37. Réseau de biocapteurs selon la revendication 36, dans lequel les zones de biocapteurs sont conformées dans un seul des plans de lignes.

38. Réseau de biocapteurs selon la revendication 36 ou 37, dans lequel, dans une première portion de lignes dans laquelle l'au moins une première ligne de signal et l'au moins une deuxième ligne de signal ne se croisent pas, l'au moins une première ligne de signal et l'au moins une deuxième ligne de signal sont conformées de façon à s'étendre dans le même plan, et dans lequel, dans une deuxième portion de lignes dans laquelle l'au moins une première ligne de signal et l'au moins une deuxième ligne de signal se croisent, l'au moins une première ligne de signal et l'au moins une deuxième ligne de signal sont conformées de façon à s'étendre dans des plans différents.

39. Réseau de capteurs selon la revendication 38, dans lequel la première portion de lignes de l'au moins une première ligne de signal et/ou de l'au moins une deuxième ligne de signal est couplée à la deuxième portion de lignes de l'au moins première une ligne de signal et/ou de l'au moins une deuxième ligne de signal au moyen d'au moins un élément de contact électrique disposé de façon à s'étendre sensiblement verticalement au substrat.

40. Réseau de biocapteurs selon l'une des revendications 36 à 39, dans lequel l'au moins une première ligne de signal et/ou l'au moins une deuxième ligne de signal sont conformées de façon à s'étendre sur une face inférieure du substrat ou au-dessous du substrat.

41. Réseau de biocapteurs selon l'une des revendications 25 à 40, dans lequel la première unité de commande comporte une première unité d'alimentation qui est commune à toutes les zones de biocapteurs et/ou la deuxième unité de commande comporte une deuxième unité d'alimentation qui est commune à toutes les zones de biocapteurs, la première unité d'alimentation étant conçue de façon à pouvoir appliquer le premier signal de commande électrique à l'au moins une zone de biocapteurs sélectionnée et/ou la deuxième unité d'alimentation étant conçue de façon à pouvoir appliquer le deuxième signal de commande électrique à l'au moins une zone de biocapteurs sélectionnée.

42. Réseau de biocapteurs selon la revendication 41, dans lequel la première unité de commande et la deuxième unité de commande sont conçues de façon à pouvoir appliquer un signal de référence électrique à au moins une partie des zones de biocapteurs non sélectionnées, la valeur du signal de référence électrique étant sensiblement la valeur moyenne du premier signal de commande et du deuxième signal de commande.

43. Réseau de biocapteurs selon l'une des revendications 25 à 42, dans lequel la première unité de commande comporte pour chaque premier groupe de zones de biocapteurs une première unité d'alimentation associée au groupe respectif, laquelle première unité d'alimentation est conçue de façon à pouvoir appliquer le premier signal de commande électrique aux zones de biocapteurs du premier groupe associé, et/ou dans lequel la deuxième unité de commande comporte pour chaque deuxième groupe de zones de biocapteurs une deuxième unité d'alimentation associée au groupe respectif, laquelle deuxième unité d'alimentation est conçue de façon à pouvoir appliquer le deuxième signal de commande aux zones de biocapteurs du deuxième groupe associé.

44. Réseau de biocapteurs selon l'une des revendications 25 à 43, dans lequel la première unité de détection comporte une première unité de mesure commune à toutes les zones de biocapteurs, laquelle première unité de mesure est conçue de façon à pouvoir détecter le premier signal de détection électrique au niveau d'une seule zone de biocapteurs sélectionnée et/ou dans lequel la deuxième unité de détection comporte une deuxième unité de mesure commune à toutes les zones de biocapteurs, laquelle deuxième unité de mesure est conçue de façon à pouvoir détecter le deuxième signal de détection électrique au niveau d'une seule zone de biocapteurs sélectionnée.

45. Réseau de biocapteurs selon l'une des revendications 25 à 44, dans lequel la première unité de détection comporte pour chaque troisième groupe de zones de biocapteurs une première unité de mesure associée au troisième groupe respectif, chacune des premières unités de mesure étant conçue de façon à pouvoir détecter le premier signal de détection électrique au niveau d'une seule zone de biocapteurs sélectionnée du troisième groupe associé et/ou dans lequel la deuxième unité de détection comporte pour chaque quatrième groupe de zones de biocapteurs une deuxième unité associée au quatrième au groupe respectif, chacune des deuxièmes unités de mesure étant conçue de façon à pouvoir détecter le deuxième signal de détection électrique au niveau d'une seule zone de capteurs sélectionnée du quatrième groupe associé.

46. Réseau de biocapteurs selon l'une des revendications 25 à 45, comportant un dispositif potentiostatique qui est conçu de façon à appliquer un potentiel électrique constant à un électrolyte introduit dans au moins une partie des zones de biocapteurs.

47. Réseau de biocapteurs selon la revendication 46, dans lequel le dispositif potentiostatique comporte une électrode de référence, une contre-électrode et un amplificateur opérationnel, une première entrée de l'amplificateur opérationnel étant reliée à l'électrode de référence, une deuxième entrée de l'amplificateur opérationnel étant reliée à un potentiel de référence et une sortie de l'amplificateur opérationnel étant couplée à la contre-électrode.

48. Procédé pour faire fonctionner un réseau de biocapteurs
• au moyen d'un biocapteur comportant
- un substrat ;
- une pluralité de zones de biocapteurs qui sont disposées sur le substrat et qui comportent chacune une première borne et une deuxième borne ;
- au moins une première ligne de signal et au moins une deuxième ligne de signal,
* l'au moins une première ligne de signal étant électriquement isolée de l'au moins une deuxième ligne de signal ;
* la première borne de chaque zone de biocapteurs étant couplée à une seule de l'au moins une première ligne de signal et la deuxième borne de chaque zone de biocapteurs étant couplée à une seule de l'au moins une deuxième ligne de signal ;
* au moins une de l'au moins une première ligne de signal et au moins une de l'au moins une deuxième ligne de signal étant couplées à au moins deux des zones de biocapteurs ;
- une première unité de commande destinée à délivrer un premier signal de commande électrique et une deuxième unité de commande destinée à délivrer un deuxième signal de commande électrique ;
- une première unité de détection couplée à la première unité de commande et/ou une deuxième unité de détection couplée à la deuxième unité de commande, les unités de détection étant destinées à détecter le premier et/ou deuxième signal de détection électrique, résultant du premier et du deuxième signal de commande électrique, d'une zone de biocapteurs sélectionnée ; et
- une unité de sélection qui est conçue de façon à coupler la première unité de commande à la première ligne de signal d'une zone de biocapteurs à sélectionner et à coupler la deuxième unité de détection à une deuxième ligne de signal de la zone de biocapteurs à sélectionner, ce qui permet de sélectionner la zone de biocapteurs ;
• selon le procédé,
- la première unité de commande étant couplée à la première ligne de signal d'une zone de biocapteurs à sélectionner et la deuxième unité de commande étant couplée à la deuxième ligne de signal d'une zone de biocapteurs à sélectionner, ce qui permet de sélectionner la zone de biocapteurs ;
- un premier signal de commande électrique étant délivré à la première ligne de commande de la zone de biocapteurs sélectionnée et un deuxième signal de commande électrique étant délivré à la deuxième ligne de commande de la zone de biocapteurs sélectionnée et ;
- un premier signal de détection électrique, résultant du premier signal de commande électrique et du deuxième signal de commande électrique, étant détecté sur la première ligne de signal de la zone de biocapteurs sélectionnée, et/ou un deuxième signal de détection électrique, résultant du premier signal de commande électrique et du deuxième signal de commande électrique, étant détecté sur la deuxième ligne de détection de la zone de biocapteurs sélectionnée.

49. Procédé selon la revendication 48, dans lequel on détermine pour l'au moins une zone de biocapteurs sélectionnée, en se fondant sur le premier signal de détection et/ou sur le deuxième signal de détection, si des événements de capteurs se sont produits au niveau de l'au moins une zone de biocapteurs sélectionnée et/ou dans quelle quantité les événements de signal se sont produits au niveau de l'au moins une zone de biocapteurs sélectionnée.
